**Europäisches Patentamt**

**European Patent Office**

**Office européen des brevets**

(19)

(11) **EP 1 416 347 A1**

(12) **EUROPEAN PATENT APPLICATION**
published in accordance with Art. 158(3) EPC

(43) Date of publication:
06.05.2004 Bulletin 2004/19

(51) Int Cl.⁷: **G05B 19/418**, G06F 17/60

(21) Application number: 02745927.0

(86) International application number:
**PCT/JP2002/007013**

(22) Date of filing: 10.07.2002

(87) International publication number:
**WO 2003/007098 (23.01.2003 Gazette 2003/04)**

(84) Designated Contracting States:
**AT BE CH CY DE DK ES FI FR GB GR IE IT LI LU MC NL PT SE TR**

(72) Inventor: **YOKOYAMA, Hiroshi**
**Shibuya-ku, Tokyo 151-0053 (JP)**

(30) Priority: **11.07.2001 JP 2001211287**
**02.07.2002 JP 2002193879**

(74) Representative:
**Murgatroyd, Susan Elizabeth et al**
**Baron & Warren,**
**19 South End**
**Kensington, London W8 5BU (GB)**

(71) Applicant: **Class Technology Co., Ltd.**
**Shibuya-ku, Tokyo 151-0053 (JP)**

(54) **PRODUCTION MANAGEMENT SYSTEM PRODUCTION MANAGEMENT METHOD**

(57) Here is disclosed a system and a method for production management. In response to a job order created by a job order creating system, which indicates option to be applied to parts and processes associated with a standard specification product, a structure information creating processor creates, with reference to a structure modification master recording option applicable to the parts, a second structure master by applying the parts of an option specification product to a first structure master while a process information creating processor creates, with reference to a process modification master recording the option applicable to the process, a second process evolution master by applying processes for the option specification product to a first process evolution master. Then a capacity production seat reservation processor applies the parts of the option specification product and processes for the option specification product to a production planning for the standard specification product in order to create a production planning for the option specification product and stores the production planning for the option specification product created in this manner.

FIG. 1

**Description**

FIELD OF THE INVENTION

The present invention relates to production management systems and production management methods adapted to create production plannings of option specification products derived from option applied standard specification products.

RELATED ART

Conventional production systems are generally classified into a so-called make-to-stock production system based on mass production and a so-called make-to-order production system based on job order production. The make-to-stock production system is initiated by producers and the make-to-order production system is initiated by consumers.

The make-to-stock production system is advantageous in that the products can be manufactured continuously and in large scale by standardizing various factors such as part structure and manufacturing process. The make-to-stock production system is advantageous also from the viewpoint of production efficiency and suitable for production of the product having one and same standard specification. In the consumption-intensive era, it has been able to speculate a demand on a long-term basis and correspondingly to stock the standard specification items so that the product can be promptly delivered in response to the order. In such consumption-intensive era, it has been possible to digest the stock by appropriate production adjustment even in the case of excessive inventory.

However, the consumption-intensive era initiated by producer has ended as demand of consumers becomes more multifaceted and transferred to an era initiated by consumers and characterized by quick fluctuation of demand. In-stock items mismatching consumers' demand, for example, consumers' taste inevitably lose commercial values and become non-performing assets for producers.

The make-to-order production system, on the other hand, is more advantageous than the make-to-stock production system so far as the order acceptance efficiency is concerned since production is made in response to the order from consumers. On the other side of the coin, the parts structure as well as the production process must be created in accordance with the particular order before actual production is started and the production efficiency is necessarily restricted. In practice, the object to be manufactured by this system is limited to a small quantity of option specification products. Consequently, it has been difficult for the make-to-order production system to improve the sales stability and the profit enhancement.

To overcome the drawbacks encountered by the make-to-stock production system and the make-to-order production system, a compromise production system of the make-to-stock and make-to-order production systems has been attempted. This compromise system intends to increase the number of choices for production specification so as to meet demand diversity of consumers and at the same time to standardize product parts so as to improve the production efficiency. The base of this compromise system is the make-to-order production system and the make-to-stock production system is combined with the make-to-order production system so that these two systems may have respective parts standardized. Such compromise system is suitable for production of the option specification applied standard specification product.

However, it has been essential for the compromise production system of prior art to prepare a large quantity of intermediate products and parts constituting the products and to stock them in order to achieve due dates for respective products as early as possible. As a result, it has been apprehended that the stock of intermediate products and parts might become excessive as a demand trend fluctuates.

Taking account of characteristics of the products such as the standard specification product, the special specification product (the items different from the standard specification product in the production specification inclusive of the parts structure as well as the production processes) and the option specification product (items similar to the standard specification product in the production specification such as the parts structure as well as the production processes), the conventional production system may be classified more in detail into the planned production system, the post-supplementary production system, the job order production system for the special specification and the above-mentioned compromise production system for the option specification product.

The planned production system creates a production schedule based on a speculated demand for a given term and executes the production in accordance with this preparatory schedule (PUSH type production). The planned production is characterized by mass production of a small quantity of items on one and same production line. Therefore, it is possible for this type production to increase an output per unit production lot and to minimize the number of schedule changes so that the production efficiency may be improved. However, this is the production system based on speculated demand for a given term and suitable only for production of the standard specification product having a predetermined demand cycle.

The post-supplementary production is the production system adapted to product a shortfall when the stock has dipped from a predetermined level and includes so-called "KANBAN" system (PULL type production). The post-supplementary production is adapted to refill the shortfall at the moment of occurrence thereof and suitable for production of the standard specification product having irregular demand cycle. However, the post-supplementary production is normally destined to manufacture products each being of a small large quantity and different kinds and this nature of the post-supplementary production may cause the number of schedule changes to increase and cause the production efficiency to be deteriorated.

In the planned production as well as in the post-supplementary production, the specification of parts structure and production processes has been standardized and any production adjustment has not been supposed to meet demand fluctuation in real time mode.

The make-to-order production system is the system adapted to product an ordered quantity after the order has been accepted (PULL type production). The make-to-order production is adapted to manufacture a small quantity of products each being of many kinds on one and same production line. The make-to-order production must create a particular specification of parts structure and production processes for each ordered specification and manufacture only the requirements specified. With a consequence, the order acceptance efficiency is relatively high but any significant improvement of production efficiency can not be expected.

The make-to-order/make-to-stock compromise production is adapted to manufacture the intermediate product and the parts in the make-to-stock mode and to prepare a similar patterned parts structure specification. The parts constituting such structure are used to manufacture the product in the make-to-order production system. With this compromise production system, the product is manufactured in accordance with the ordered specification and quantity and the order acceptance efficiency higher than that achieved by the make-to-stock production can be achieved. Furthermore, the make-to-stock/make-to-order compromise production previously manufactures the parts, so the product can be manufactured with a higher production efficiency, a lower price and an earlier due date in comparison to the make-to-order production.

One of purposes to be achieved by the make-to-stock/make-to-order compromise production is to achieve improvement of the production efficiency and improvement of the order acceptance efficiency which are advantages of the make-to-stock production (inclusive of the planned production and the post-supplementary production) and the make-to-order production, respectively. However, it has been necessary for the compromise production of prior art to backlog the number of parts several times more than the number required to manufacture the ordered product in order to meet the due date as early as possible. In consequence, there is an anxiety that a large quantity of parts might become excessive stock as the demand trends changes and the product specification correspondingly changes.

In view of such problem, various methods to improve both the production efficiency and the order acceptance efficiency simultaneously have been sought. For example, it is supposed here that the product for which the demand trend can be forecasted is defined as the standard specification product, the product for which the demand trend can not be easily forecasted and which is similar to the standard specification product in its parts structure as well as its production processes is defined as the option specification product and the standard specification product and the option specification product are manufactured on one and same production line with the manufacturing resources such as the production line and man power. In this case, there occurs no excessive stock so far as the order to the standard specification product in the course of mass production continues to be favorable. However, if the demand of the option specification product surpasses the forecast as the demands trend changes, the demand for the standard specification product will correspondingly decrease and an excessive stock will occur for the standard specification product.

In the make-to-order/make-to-stock compromise production system of prior art, if it is desired to introduce the production planning for the option specification product into the production line based on the production planning for the standard specification product which has been created, there is no measure other than use of unoccupied portion left in the production planning for the standard specification product to create the production planning for the option specification product. This is for the reason that modification of the production planning for the standard specification product which has been once created would seriously affect the material planning and the resources planning which have already been determined and make it impossible to assure practicability of this production planning. As a result, the production planning for the not ordered standard specification product would be given priority and the production planning for the order option specification product would be delayed till later. Inevitably, the due date for the option specification product would be delayed and opportunity for order acceptance would be lost.

Now it is assumed that the production planning for the option specification product and the production planning for the standard specification product are introduced into separate production lines so that the option specification product can be adequately supplied. In this case, the delay of the due date for the option specification product can be avoided but the manufacturing resources such as production lines and man power would be required for these separate production lines and it would be difficult to manufacture the products at acceptably low cost. The make-to-stock production is primarily characterized in that the production efficiency is improved by continuous mass production and thereby low cost of the product is maintained. In other words, immediate modification of the production planning is difficult. The demand for the standard specification product decreases as the fluctuation of the demand trend increases the demand for the option specification product. In a consequence, there is a high possibility that an excessive stock for the standard specification product might occur.

One example of the production management system adapted to create a production planning by use computer resources is MRP (Material Requirement Planning) system.

MRP aims to create the procurement planning for the production materials such as parts, raw materials and stock materials, to create the material procurement planning with reference to a list of parts recording kinds and quantities of parts necessary to manufacture the product and to create the production planning. MRP calculates requirements of the parts necessary to manufacture the product on the basis of the list of parts. Now operation of MRP will be described more in detail. In the first place, requirement of the parts necessary for the final process is calculated for each kind of the parts. Then, kinds and requirement of minimum unit child parts necessary to manufacture this part are determined. Taking account of days taken for procurement of these materials are calculated (on the basis of the empirical rule) to determine the due date for material procurement and thereby to create the material procurement planning. A person in charge of procurement checks quantity of materials on the current date and quantity of the materials on order and, if any shortfall for this procurement plan is discovered, the person in charge of procurement orders additional quantity to refill this shortfall.

Compared to the procurement system adapted to procure the quantity of material which has actually been consumed on the basis of a given quantity of stock, MRP adapted to order requirement taking account of effective quantity of material can more effectively cutback the material stock.

It should be noted here that MRP focuses on creation of the material procurement planning and schedules the production planning on the basis of the material procurement. It will be appreciated that, in MRP, a person working as a controller empirically calculates a time required for the process and determines the scheduling for the production line in reference to the parts structure. This means that the scheduling depends on the material procurement planning. MPR is the planning not taking a limit of manufacturing capacity into account and it is not always possible to assure a practicability of the production planning even if the material procurement planning has been precisely created.

Japanese Patent No. 2599536 discloses a computer-aided production management system. The system disclosed in this Patent manages a product structure required to manufacture products having different structures on the basis of a list of parts according to MRP and modifies a basic parts structure to a special parts structure so that the finally finished product may have its structure correspondingly modified. While this system is the system adapted to modify the list of parts and thereby to modify the structure of the product, it is impossible for this system to create the production plan taking account of a load capacity of the manufacturing resources since this system does not take a limit of manufacturing capacity into account.

Another example of the production management system using a computer resources is MRPII (Manufacturing Resources Planning). MRPII system corresponds to MRP added with CRP (Capacity Requirements Resources Planning). MRPII system has a function to create a manufacturing planning taking account of capacity of manufacturing resources and to insert management resources such as plant and equipment and man power planning and purchase planning into the manufacturing planning.

CRP is the system adapted to create a manufacturing resources planning containing resources such as plant and equipment and man power. CRP loads a quantity of resources (time required for each of manufacturing lines) per unit time such as month, week or day. Then, with reference to a list of processes recording matters relating to the manufacturing process for the product, CRP calculates operation load for each process and allocates the resources for the manufacturing line to the manufacturing planning. As a result of allocation, it is sometimes found that the load exceeds the capacity of the manufacturing line and the process is not completed within the allocated time. In this case, the load is allocated to the other resources (load balancing) or allocated with time staggered (load leveling).

In MRPII, in the first place, MRP is executed and then creation of material procurement planning is tried. Upon creation of the practicable material procurement planning, CRP is executed and the manufacturing resources are allocated to this material procurement planning. Successful creation of the practicable resources planning means completion of the manufacturing planning. If any practicable resources procurement planning can not be created, the manufacturing capacity will be adjusted by load balancing or load leveling and MRP and CRP will be executed again. In this manner, MRP and CRP are repeated until the practicable material planning and resources planning can be created.

Conventional MRP and MRPII have aimed to manufacture a standard specification product having a same structure in a large scale. When it is desired to manufacture an option specification product by modifying specification of a standard specification product, these conventional MRP and MRPII have newly procured the manufacturing resources by utilizing the unoccupied portion of the manufacturing resources provided that both the parts structure and the manufacturing processes have been standardized. In this way, these MRP and MRPII have created new manufacturing planning like the case in which a manufacturing planning of the standard specification product is newly created. The conventional MRPII has certainly taken account of the capacity of the resources at any rate using CRP. However, in order to determine a manufacturing planning, a person working as a controller must adjust a resources planning and it has been impossible for the conventional MRPII to calculate the manufacturing planning automatically taking account of constraints such as competition of respective processes in the plant.

SCM (Supply Chain Management) system is a system having, in addition to the function to create the conventional MPS (Master Production Scheduling) a function to optimize various objects such as management of supply chain including distribution and delivery. Important functions of SCM system include production, distribution, delivery, scheduling (APS), demand forecast and due date reply (ATP/CTP).

APS (Advanced Planning and Scheduling) in SCM evolves terminal production plans for respective products given to a plant to plans for parts and materials to determine a capacity, a manufacturing time and necessary term of each process and to load them to the process. If the load exceeds constrains of the process, APS levels the load to create a practicable schedule.

To improve both the production efficiency which is the important advantage of the make-to-stock production system and the order acceptance efficiency which is the important advantage of the male-to-order production system simultaneously, it is contemplated to make use of the resource and material planning for a standard specification product working in hand. Such method will be able to achieve a further earlier due date compared to the method adapted to seek any unoccupied portion of the production resources to create a new planning without anxieties that the opportunity to accept an order might be lost and/or excessive stock of the standard specification product free from any order acceptance might occur. The conventional SCM system has usually relied upon allocation of the parts common to the standard specification product and the option specification product to the effective stock (stock or manufacturing/procurement planning) to create a production planning for the product having the parts structure partially common to these two specifications.

However, SCM has standardized only the parts structure of the manufacturing specification (consisting of the parts structure and the manufacturing processes) of two different specification products and then standardized only the material procurement planning of the (consisting of the material planning and the resource planning) of two different specification products. With a consequence, when the production planning of the product is created using the effective stock of the parts common to two different specifications, these common parts have often been excessively stocked in order to achieve a due date as early as possible. Excessive stock inevitably not only increases a product cost but also makes it difficult to modify the production planning in response to the customers' demand and may sometimes lose the opportunity of order acceptance. In addition, the excessive stock may lead to a large amount of dead stock and immobilization of a circulating fund of the producer.

To increase opportunities of order acceptance and to improve the order acceptance efficiency, it is preferred to present a practicable earliest due date to the customer on the basis of the specification, the due date and the quantity desired by the customer. However, it has been difficult for the conventional production management system to create the production planning based on the specification, the due date and the quantity specified by the customer while excessive materials and stock is suppressed, a practicability of the production planning is assured and desired production efficiency is maintained.

In order to increase opportunities of order acceptance from the customer, it is preferred to calculate and to present a practicable due date to the customer immediately upon an order is accepted from the customer. However, the conventional production management system has required the person working as the controller to adjust the production schedule by manual input to create the production planning. As a result, it has been difficult to calculate the due date immediately upon acceptance of the order and to positively promise the due date.

With the conventional production management system, it has been essential to an excessive manufacturing capacity in order to assure a practicability of the production planning created on the basis of the specification, the due date and the quantity specified by the customer. In other words, it has been essential to stock the manufacture products, the parts and the row materials and to assure the resources such as the manufacturing machines and the man power. The cost to achieve this has inevitably reflected on the product price and often decreased the opportunities of order acceptance. If such excessive stock of the materials as well as the resources has been eliminated in order to reduce the cost, it has become impossible to assure the practicability. Consequently, it has been impossible to positively promise the due date once presented to the customer and eventually the opportunities of order acceptance have decreased.

For the conventional make-to-stock/make-to-order compromise production management system, the substantial measure is limited to the commonage of the material planning between the products having different specifications. As for the resource planning, a new production planning has been allocated to the unoccupied portion of the production planning that has merely happened to be found. Consequently, it has been impossible to continue the production planning for one and same product and modification of the process scheduling has necessarily become so frequent to deteriorate the production efficiency.

With the conventional make-to-stock/make-to-order compromise production management system, the unoccupied portion of the manufacturing resources for the standard specification product has been sought to be allocated to a new production planning regardless of whether an order acceptance is present or not. Due to such procedure, non-ordered post-supplementary production and the planned production both occupying the manufacturing resources have often prevailed over a job order production and delayed the due date thereof, leading to decrease the opportunities of order acceptance.

In view of the problems as have been described above, it is a principal object of the present invention to a production management system and a production management method improved so that the optimum production planning can be quickly created on the basis of the specification, the due date and the quantity specified by the customer and present the due date as early as possible to the customer. It is another object of the present invention to provide a production management system and a production management method improved so that a production efficiency can maintained while a practicability of the production planning is assured and any excessive materials and resources are suppressed so as to increase opportunity of order acceptance.

SUMMARY OF THE INVENTION

The object set forth above is achieved, according to a first aspect of the present invention, by a first improvement in the production management system adapted to apply option to a plurality of parts and/or a plurality of processes used to manufacture a standard specification product and thereby to create a production planning for manufacturing of an option specification product from the standard specification product.

The first improvement according to the present invention is characterized in that the production management system comprises:

planning information storage means adapted to store the production planning for a plurality of standard specification products;

database storing means adapted to store a first structure master recording the parts, a structure modification master recording the option applicable to the parts, a first process evolution master recording the processes and a process modification master recording the option applicable to the processes;

a job order creating means adapted to create the job order displaying the option applicable to the parts as well as the process of the standard specification product;

a structure information creating means adapted to select, in reference with the structure modification master and in accordance with the job order, parts of the option specification product to be manufactured and to apply said parts to the first structure master in order to create a second structure master;

a process information creating means adapted to select, in reference with the process modification master and in accordance with the job order, process for the option specification product and to apply said process to the first process evolution master in order to create a second process evolution master; and

a capacity production seat reservation means adapted to apply, in reference with the second structure master and the second process evolution master, the parts selected by the structure information creating means and/or the process selected by the process structure creating means to the production planning for the standard specification product to create the production planning for the option specification product and to store the production planning for said option specification product created in this manner in the production management system.

According to one preferred embodiment of the present invention, the job order creating means contain a standard specification master recording specification of the standard specification product and an option specification master recording a specification relating to the option and further contain an option information creating means adapted to create option information in reference with the option specification master.

According to another preferred embodiment of the present invention, the production management system further includes a due date estimation asking means adapted to create due date estimation asking information displaying a proper due date and the capacity production seat reservation means include at least one of desired due date retrieving means adapted to determine whether the desired due date can be achieved or not and earliest due date retrieving means adapted to retrieve the earliest due date.

According to still another preferred embodiment of the present invention, the production management system further includes a post-supplementary production job order creating means, a planned production job order creating means and a standard specification product capacity production seat reservation means adapted to create the production planning for standard specification product in reference with the first structure master and the first process evolution master and in accordance with the post-supplementary production job order or the planned production job order and to store the production planning for standard specification product in the production management system.

The object set forth above is achieved, according to a second aspect of the present invention, by a second improvement in the storage medium storing therein a production management program functioning to create production planning for option specification product from a standard specification product by applying option to a plurality of parts and/or a plurality of processes used to manufacture the standard specification product by means of a computer.

The second improvement according to this second aspect of the present invention is in that the storage medium comprises:

a planning information storing function to store therein a plurality of production plannings for the standard specification product;

a database storing function to store therein a first structure master recording the parts, a structure modification master recording the option applicable to the parts, a first process evolution master recording the processes and a process modification master recording the option applicable to the processes;

a job order creating function to create the job order displaying the option applicable to the parts and the processes for the standard specification product;

a structure information creating function to select, with reference to the structure modification master and in accordance with the job order, the parts of the option specification product to be manufactured, on one hand, and to apply the parts to the first structure master and thereby to create a second structure master, on the other hand;

a process information creating function to select, with reference to the structure modification master and in accordance with the job order, the processes for the option specification product to be manufactured, on one hand, and to apply the processes to the first structure master and thereby to create a second process evolution master, on the other hand; and

a capacity production seat reservation function to apply, with reference to the second structure master and the second process evolution master, the parts selected by the structure information creating means and/or the processes selected by the process structure information creating means to the production planning for the standard specification product to create the production planning for the option specification product and to store the production planning for the option specification product created in this manner.

The object set forth above is achieved, according to a third aspect of the present invention, by a third improvement in the production management program causing a computer to create production planning for option specification product from a standard specification product by applying option to a plurality of parts and/or a plurality of processes used to manufacture said standard specification product by means of a computer.

The third improvement according to the present invention is in that the production management program comprises:

a plan information storing function to store therein a plurality of production plans for the standard specification product;

a database storing function to store therein a first structure master recording said parts, a structure modification master recording the option applicable to the parts, a first process evolution master recording the processes and a process modification master recording the option applicable to the processes;

a job order creating function to create the job order displaying the option applicable to the parts and the processes for the standard specification product;

a structure information creating function to select, with reference to the structure modification master and in accordance with the job order, the parts of the option specification product to be manufactured, on one hand, and to apply the parts to the first structure master and thereby to create a second structure master, on the other hand;

a process information creating function to select, with reference to the structure modification master and in accordance with the job order, the processes for the option specification product to be manufactured, on one hand, and to apply said processes to the first structure master and thereby to create a second process evolution master, on the other hand; and

a capacity production seat reservation function to apply, with reference to the second structure master and the second process evolution master, the parts selected by the structure information creating means and/or the processes selected by the process structure information creating means to the production planning for the standard specification product to create the production planning for the option specification product and to store the production planning for the option specification product created in this manner.

The object set forth above is achieved, according to a fourth aspect of the present invention, by a fourth improvement in the production management method to apply option to a plurality of parts and/or a plurality of processes used to manufacture a standard specification product and thereby to create a production planning for manufacturing of an option specification product from the standard specification product.

The fourth improvement according to the fourth aspect of the present invention is in that the production management method comprises:

a step of storing the production planning for a plurality of standard specification products;

a step of storing a first structure master recording the parts, a structure modification master recording the option applicable to the parts, a first process evolution master recording the processes and a process modification master recording the option applicable to the processes;

a step of creating the job order displaying the option applicable to the parts as well as the process of the standard specification product;

a step of selecting, in reference with the structure modification master and in accordance with the job order, parts of the option specification product to be manufactured and applying the parts to the first structure master in order to create a second structure master;

a step of selecting, in reference with the process modification master and in accordance with the job order, process for the option specification product and applying the process to the first process evolution master in order to create a second process evolution master; and

a step of capacity production seat reserving by applying, in reference with the second structure master and the second process evolution master, the parts selected by the structure information creating means and/or the process selected by the process structure creating means to the production planning for the standard specification product to create the production planning for the option specification product and by storing the production planning for the option specification product created in this manner.

BRIEF DESCRIPTION OF THE DRAWINGS

Fig. 1 is a conceptual diagram illustrating an example of production management system;
Fig. 2 is a diagram illustrating a structure of standard specification product;
Fig. 3 is a diagram illustrating a structure of option specification product;
Fig. 4 is a diagram illustrating scheduling of the standard specification product illustrated by Fig. 2;
Fig. 5 is a diagram illustrating scheduling of the option specification product illustrated by Fig. 3;
Fig. 6 is a diagram showing data coordination in the production management system;
Fig. 7 is a system resources diagram illustrating a brief summary of the production management system;
Fig. 8 is a system resources diagram illustrating details of job order creating system;
Fig. 9 is a system resources diagram illustrating details of BOM creating system;
Fig. 10 is a system resources diagram illustrating integrated capacity production seat reservation system as a reservation being made;
Fig. 11 is a system resources diagram illustrating integrated capacity production seat reservation system as its content being modified or cancelled;
Fig. 12 is a flow chart illustrating process of due date estimation asking;
Fig. 13 is a diagram illustrating content of standard specification master;
Fig. 14 is a diagram illustrating content of specification master;
Fig. 15 is a diagram illustrating content of standard specification master;
Fig. 16 is a diagram illustrating content of option specification master;
Fig. 17 is a diagram illustrating content of option information and price estimation information;
Fig. 18 is a diagram illustrating content of due date estimation asking information serving also as due date estimation reply information;
Fig. 19 is a diagram illustrating content of item master;
Fig. 20 is a diagram illustrating content of structure master;
Fig. 21 is a diagram illustrating content of structure modification master;
Fig. 22 is a flow chart illustrating process of BOM creation;
Fig. 23 is a diagram illustrating content of data relating to creation of structure information;
Fig. 24 is a diagram comparatively illustrating part structure of standard specification product before structure modification and part structure of option specification product after structure modification;
Fig. 25 is a diagram illustrating content of process master;
Fig. 26 is a diagram illustrating content of process evolution;
Fig. 27 is a diagram illustrating content of process modification master;
Fig. 28 is a diagram illustrating creation of process information;
Fig. 29 is a diagram illustrating creation of version;
Fig. 30 is a diagram comparatively illustrating process for standard specification product before process modification and process for option specification product after process modification;
Fig. 31 is a flow chart illustrating process of order reservation;
Fig. 32 is a diagram illustrating order reservation as a reservation being made;
Fig. 33 is a diagram illustrating order reservation as its content being cancelled;

Fig. 34 is a flow chart illustrating process of shipping reservation;
Fig. 35 is a diagram illustrating shipping reservation;
Fig. 36 is a flow chart illustrating process of production planning creation for standard specification product;
Fig. 37 is a diagram illustrating creation of production planning for standard specification product;
Fig. 38 is a flow chart illustrating planning creation for availability allocation mode production;
Fig. 39 is a diagram illustrating creation of planning for availability allocation mode production;
Fig. 40 is a flow chart illustrating process of resources reservation;
Fig. 41 is a diagram illustrating resources reservation;
Fig. 42 is a flow chart illustrating process of availability allocation;
Fig. 43 is a diagram illustrating process of availability allocation;
Fig. 44 is a flow chart illustrating process of parts reservation;
Fig. 45 is a diagram illustrating process of parts reservation;
Fig. 46 is a flow chart illustrating process of resources supply cutback;
Fig. 47 is a diagram illustrating process of resources supply cutback;
Fig. 48 is a flow chart illustrating process of resources reservation cutback;
Fig. 49 is a diagram illustrating process of resources reservation cutback;
Fig. 50 is a flow chart illustrating process of parts reservation cutback;
Fig. 51 is a diagram illustrating process of parts reservation cutback;
Fig. 52 is a flow chart illustrating process of shipping reservation cutback;
Fig. 53 is a diagram illustrating process of shipping reservation cutback;
Fig. 54 is a flow chart illustrating process of post-supplementary production release; and
Fig. 55 is a flow chart illustrating process of planned production cutback.

PREFERRED EMBODIMENTS OF THE INVENTION

The production management system according to the present invention will be more fully understood from the description given hereunder with reference to the accompanying drawings. In each of the figures, the resources illustrated with hatching should be understood to be the resources including data changed or updated in this figure. Same symbol or appellation designates substantially the same data aggregate. In each of the figures, items contained in material supply planning information are substantially the same as items contained in stock information.

This novel production management system is suitable to coordinate SCM (Supply Chain Management) and DCM (Demand Chain Management) with each other particularly in the production management for the product obtained from a plurality of parts through a plurality of processes. This novel system functions also to create a production planning according not only to a speculative production system but also to a make-to-order production system. In order to compensate a low production efficiency which is one of drawbacks peculiar to the make-to-order production system, this novel production management system automatically creates the components as well as the production process for the option specification product adopting option data (make-to-order specification).

In addition to the function to create the production planning according to both the speculative production system and the make-to-order production system, this novel production management system further functions to utilize the production planning created in accordance with the speculative production system to create a production planning for the option specification product which is responsive to an order and to calculate a delivery date for such product. In response to an order, the novel production management system utilizes an availability of manufacturing resources to create a new production planning and, in addition, utilizes the production planning for standard specification product not reserved for any job order to create a job order production planning for an option specification product and thereby makes the delivery sooner. Finally, the novel production management system partially utilizes the components and the production process for a standard specification product of high productivity (availability allocation) to create a production planning of option specification product so that any excess in material as well as in resources may be alleviated while the production planning is ensured to be executable and thereby an order efficiency may be improved.

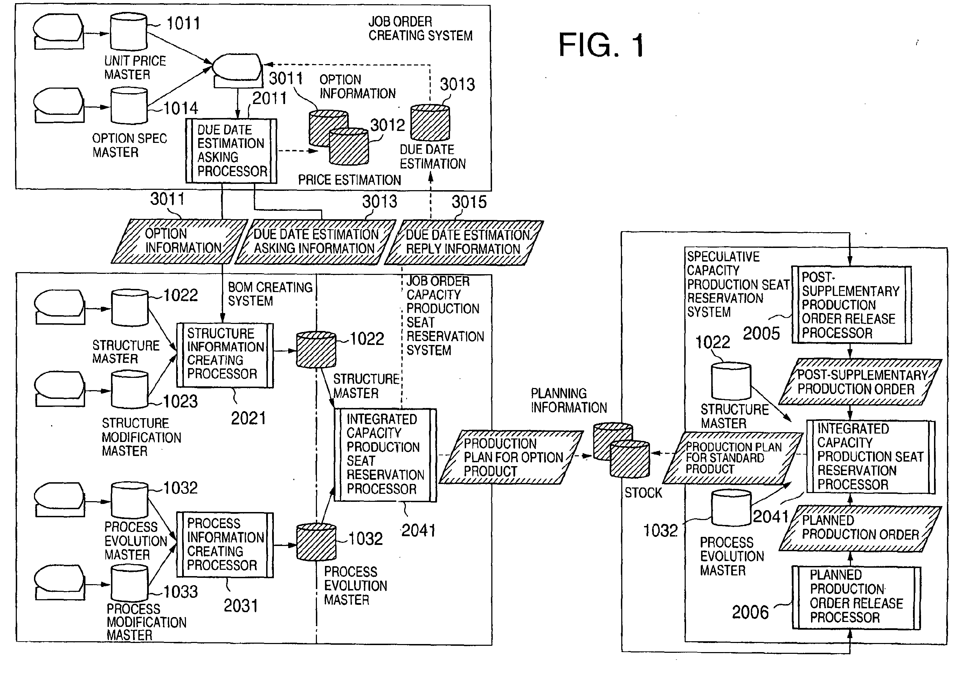

Fig. 1 is a conceptual diagram illustrating an embodiment of the novel production management system. This production management system comprises a capacity production seat reservation system adapted to create a production planning for speculative production such as post-supplementary production and planned production, a job order creating system adapted to ask a due date estimation, a BOM creating system adapted to create a structure consisting of parts of the product and a process for manufacturing this product, and a capacity production seat reservation system adapted to create, in response to an order, a production planning for option specification product. The production management system records the created production planning and thereby updates the planning information. It should be understood that BOM is abbreviation of Bill Of Materials.

The capacity production seat reservation system functions to create a planning for the post-supplementary production or the planned production. A post-supplementary production release processor 2005 creates a post-supplementary production order with reference to planning information and stock information (post-supplementary production order creating means). A planned production release processor 2006 functions to create a planned production order with reference to past and present planning information (planned production job order creating means). A integrated capacity production seat reservation processor 2041 for the speculative capacity production seat reservation system functions to create a production planning for a plurality of standard specification products with reference to a structure master 1022 and a process evolution master 1032 and to store this production planning (planning information storage means). The integrated capacity production seat reservation processor 2041 for the make-to-order capacity production seat reservation system functions to create a production planning for option specification product with reference to the structure master 1022 and the process evolution master 1032 (planning information storage means).

A desired item and option data applicable to this item may be selected with reference to an item unit price master 1011 and an option specification master 1014 and input to the system to enable a due date estimation asking processor 2011 for the make-to-order production job order creating system to make reference to an option information 3011 indicating a content of order data and to a price estimation 3012. The due date estimation asking processor 2011 creates the order displaying the option data applicable to parts of a standard specification product and process for manufacturing this product (order creating means). The due date estimation asking processor 2011 creates the option information 3011 (option information creating means) and a due date estimation asking information 3013 (due date estimation asking means), then the processor 2011 sends the information 3011, 3013 created in this manner to the BOM creating system. After BOM creation has been completed, the due date estimation asking processor 2011 supplies the due date estimation asking information 3013 to the make-to-order capacity production seat reservation system.

The BOM creating system includes a structure information creating processor 2021 and a process information creating processor 2031. With reference to a plurality of databases each storing therein items relating to parts and process necessary for production (database memory means), the BOM creating system creates the information relating to manufacturing of option specification product, for example, information relating to the item specified by the order, the structure of parts and the process, which will be then supplied to the make-to-order capacity production seat reservation system.

The structure information creating processor 2021 in the BOM creating system makes reference to the structure master 1022 (first structure master) and a structure modification master 1023 to select parts of the option specification product to be manufactured in accordance with the option information 3011 (order) and newly creates the structure master 1022 (second structure master) corresponding to the structure master 1022 (first structure master) to which the parts of the option specification product have been applied (structure information creating means). A process information creating processor 2031 in the structure information creating processor 2031 in the BOM creating system makes reference to the process evolution master 1032 (first process evolution master) and a process modification master 1033 to select production process for the option specification product to be manufactured in accordance with the option information 3011 (order) and to create a new process evolution master 1032 (second process evolution master) corresponding to the process evolution master 1032 (first process master) to which the process for the option specification product have been applied (process information creating means). The structure master 1022 (second structure master) and the process evolution master 1032 (second process evolution master) created by the respective processors are stored by these processors.

With reference to the structure master 1022 (second structure master) and the process evolution master 1032 (second process evolution master) created in the manner as has been described above, the integrated capacity production seat reservation processor 2041 of the make-to-order capacity production seat reservation system applies the parts of option specification product and the production process for this option specification product both selected in accordance with the option information 3011 and the due date estimation asking information 3013 to the production planning for standard specification product and thereby creates a production planning for the option product. The integrated capacity production seat reservation processor 2041 stores the production planning for the option product created in this manner or updates the production planning for the standard specification product (capacity production reservation means).

The make-to-order capacity production seat reservation system retrieves unoccupied seat (s) of the production line from the planning information to create a new production planning for option specification product and, in addition, retrieves a production planning of standard specification product from the planning information to modify the production planning for standard specification product to the production planning for option specification product. More specifically, the parts of the standard specification product and the process for manufacturing this product are partially selected out from the production planning of the standard specification product (availability allocation) and these selected data are applied to the parts of the option specification product and the process for manufacturing this product to create the production planning for the option specification product.

This novel production management system is characterized in that this system is a combination of make-to-order production management system/speculative production management system adapted to integrate the make-to-order capacity production seat reservation system and the speculative capacity production seat reservation system.

The production management system is realized by installing the program storing this in a computer.

Each unit database is extracted from an integrated database and organized by using the database management system. The integrated database stores the production management information such as purchase, design, manufacturing and distribution so as to be related one to another and integrally manages the information. It is also possible to create the respective unit databases individually without integrating the databases. Being accessed via respective applications such as a purchase management system, a design management system, a production management system and a distribution management system (all not shown), the integrated database causes the information unnecessary for a service in question to be not displayed but the necessary information to be selectively displayed and thereby enables the database necessary for the service in question to be obtained.

The integrated database may utilize the technique of "integrated database" disclosed in Japanese Patent Application Publication No. 1999-296586A titles "Production Management System". The integrated database contains two or more display information in order to ensure that the information necessary for the service in question is selectively displayed. For example, the display information "1" means that any information is displayed while the display information "0" means that no information is displayed.

The plurality of display information are recorded in the integrated database in relationship with the display items of the other information. Application such as DBMS (Database Management System) accesses the integrated database in order to extract a unit database in question and retrieves the display information corresponding to the item constituting the unit database in question. The item of the display information "1" is displayed and the item of the display information "0" is not displayed, so the desired unit database is displayed.

In this manner, the integrated database containing the respective unit databases is organized and the database management system is utilized to make reference to the respective unit databases. Such arrangement is preferable in view of the fact that the product, the parts and the process can be easily updated. However, it is also possible to obtain the desired system by individually organizing some or all of the unit databases.

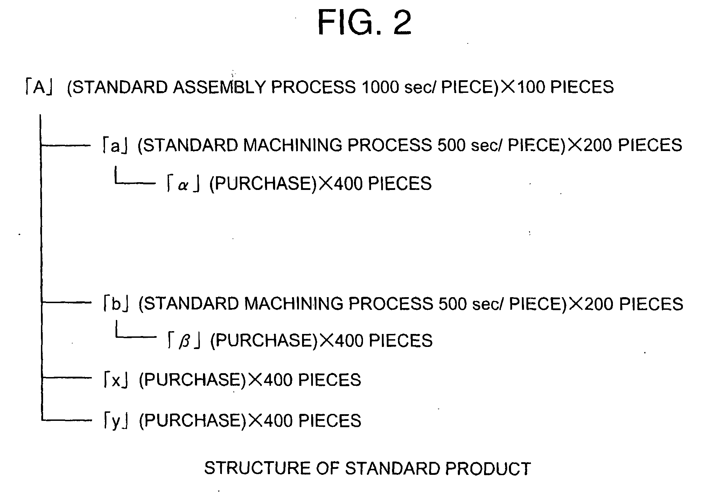

Now a scheme of "availability allocation" in the novel production management system will be described. Fig. 2 is a diagram illustrating a structure of standard specification product. It is assumed that 100 standard specification products are manufactured. Final process is a standard assembly process taking 1000 seconds per unit product. This process requires 200 parts "a", 200 parts "b", 400 parts "x" and 400 parts "y". Each of the parts "a" comprises a pair of child parts "α" and is manufactured in a standard machining process taking 500 seconds per unit child part "α". Each of the parts "b" comprises a pair of child parts "β" and is manufactured in a standard machining process taking 500 seconds per unit child part "β". As will be understood from such requirements, 400 child parts "α", 400 child parts "β", 400 parts "x" and 400 parts "y" may be purchased to manufacture 100 standard products "A".

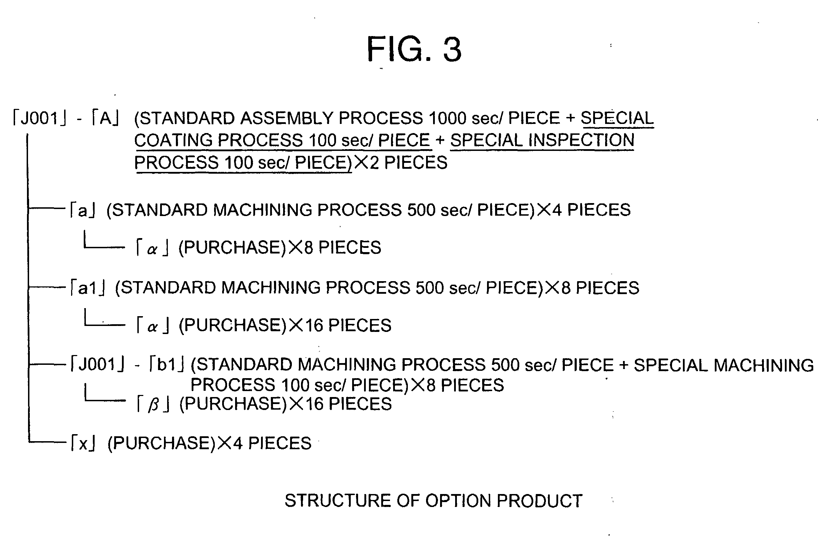

Fig. 3 is a diagram illustrating a structure of option specification product. The option specification product is manufactured in "partially utilization" mode with two products picked up from the production planning for the standard specification product "A". This production planning is designated here by order entry No. J001. Manufacturing of the option product "A" of the order entry No. J001 requires a standard assembly process taking 1000 seconds per unit product, a special coating process taking 100 seconds per unit product and a special inspection process taking 100 seconds per unit product. These processes require 4 parts "a", 8 parts "a1", 8 parts "b1" of the order entry No. "J001" and 4 parts "x". Each of the parts "a" comprises a pair of child parts "α" and is manufactured in the standard machining process taking 500 seconds per unit child part "α". Each of the parts "a1" comprises a pair of child parts "α" and is manufactured in the standard machining process taking 500 seconds per unit child part "α". 4 parts "x" are purchased. 8 parts "b1" of the order entry No. J001 8 comprise 16 child parts "β" and are manufactured in the standard process taking 500 seconds per unit child part "β" and a special machining process taking 100 seconds per unit child part "β". The 8 parts "b1" are manufactured by picking up 8 parts "b" from the production planning for the standard specification product "b" in "availability allocation" mode. Accordingly, 24 child parts "α", 16 child parts "β" and 4 parts "x" are necessary to manufacture 2 option specification products "A" of the order entry No. J001.

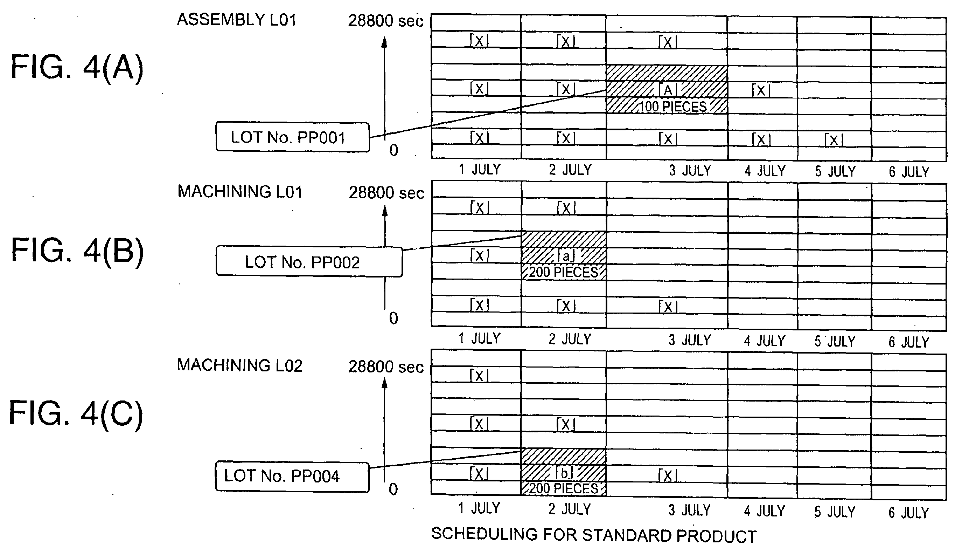

Fig. 4 is a diagram illustrating scheduling of the standard specification product described in reference with Fig. 2. As will be seen in Fig. 4(A), lot No. PP001 is allocated to manufacturing of 100 products "A" in a final assembly L01. As will be seen in Fig. 4(B), lot No. PP002 is allocated to manufacturing of 200 parts "a" in machining L01. As will be seen in Fig. 4(C), lot No. PP004 is allocated to manufacturing of 200 parts "b" in machining L02.

Assembly L01 must be executed after machining L01 and machining L02. In other words, it is essential for this production management system that the process "assembly L01" is planned to be executed after both the process "machining L01" and the process "machining L02" in order to make executable scheduling. It is also essential that the parts and child parts are on hand in usable state at the time point when the respective processes are executed.

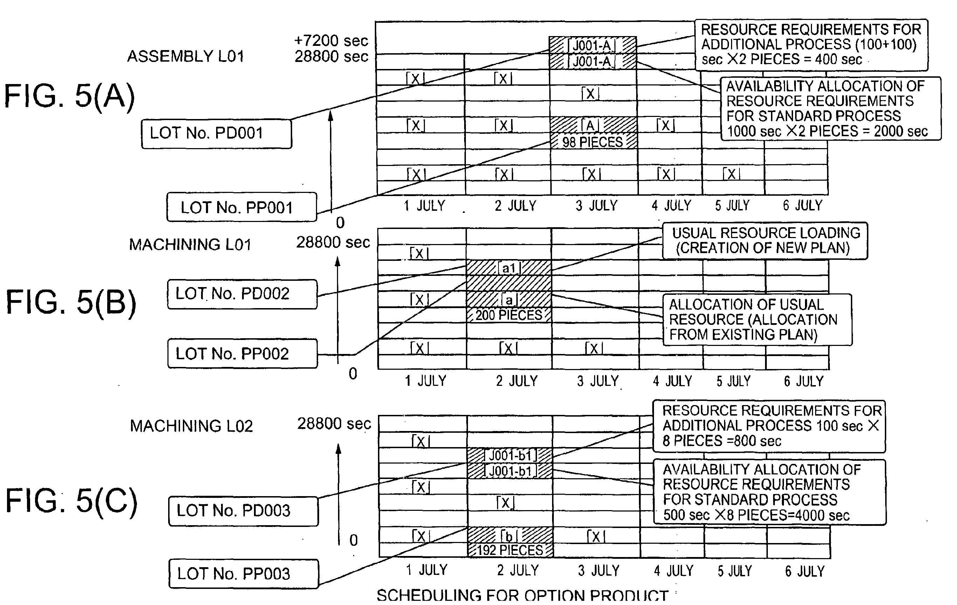

Fig. 5 is a diagram illustrating a scheduling for the option product having been described in reference with Fig. 3. The scheduling illustrated by Fig. 5 is created by partially utilizing the production planning according to the scheduling illustrated by Fig. 4. As will be seen in Fig. 5(A), lot No. PD001 is allocated to manufacturing of 2 products J001-A in the final assembly. The number of the products "A" having lot No. PD001 allotted thereto is cut back to 98 and time required is cut down by 2000 seconds. The time cut down is allotted to 2000 seconds required as the standard process resources for "J001-A" ("availability allocation"). 400 seconds required as an additional process resources for "J001-A" is absorbed by extending operation of the production line. So far as manufacturing of the part "a" in the machining process L01 is concerned, only the planning "lot No. PP002" which has already been created is pegged as will be understood from Fig. 5(B). For manufacturing of the part "a1", a planning (lot No. PD002) is created on the basis of usual requirements survey of resources load. Concerning manufacturing of the parts "b" in the machining process L02, Fig. 5(C) indicates that the number of the parts to be manufactured is cut down to 192 and the time required therefore is cut down by 4000 seconds. The time cut down is allotted to 4000 seconds required as the standard process resources required for "J001-b1" (availability allocation). 800 seconds required as an additional process resources for "J001-b1" is newly allocated and a planning "lot No. PD003" is created.

While 2000 seconds required as the standard process resources is availability allocated on the line of the assembly process L1 as seen in Fig. 5(A), 400 seconds required as the additional process resources is absorbed by extending operation of the line since 400 seconds required can not be availability allocated.

However, it is also possible to record the process resources requirements which can not be absorbed within a (predetermined) normal operation time as a bottle neck process in accordance with TOC (Theory of Constraints) and to adjust the entire production planning without extension of operation time on the production line associated with this bottle neck process.

In the capacity production seat reservation system of conventional type, a production planning has been newly created using the available manufacturing resources even for option specification product. However, the parts and/or the child parts constituting the option specification product other than the option specification parts and/or child parts can be manufactured by the process and the parts similar to those constituting the standard specification product. In the case of the capacity production seat reservation system illustrated by Fig. 1, any planning lot of the standard specification product may be partially utilized to make a desired scheduling. More specifically, the production planning of the standard specification product is partially cancelled from the existing planning information and substituted by the production information for this option specification product and thereby the planning information is modified from the planning information related to the production planning for the standard specification product to the planning information relates to the production planning for the option specification product. In other word, the production information for the standard specification product created by the speculative capacity production seat reservation system is availability allocated to the production planning for the option specification product.

The novel production management system makes availability allocation from the existing production planning instead of newly creating production planning and thereby allows it to create a scheduling adapted to make the due date presentation sooner. In this manner, this novel production management system utilizes the existing planning so that the material resources such as parts as well as the process resources such as production line may be utilized. This novel production management system can make the due date sooner by the availability allocation as has been described above.

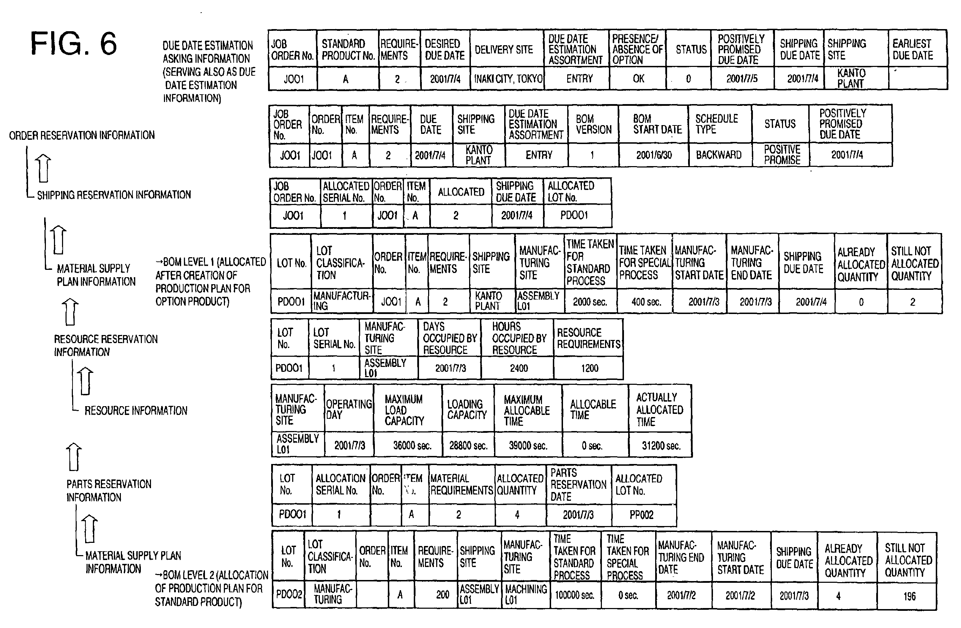

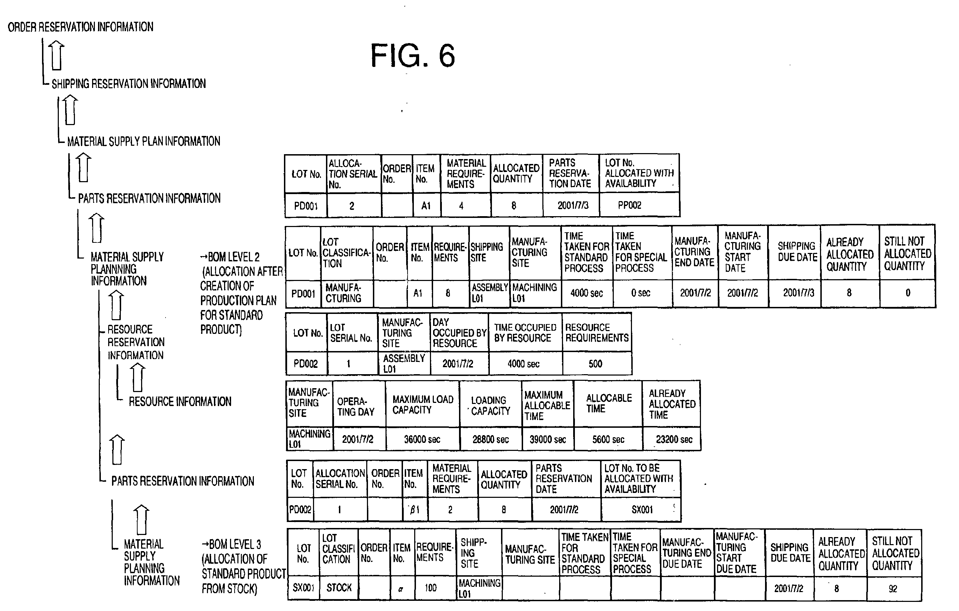

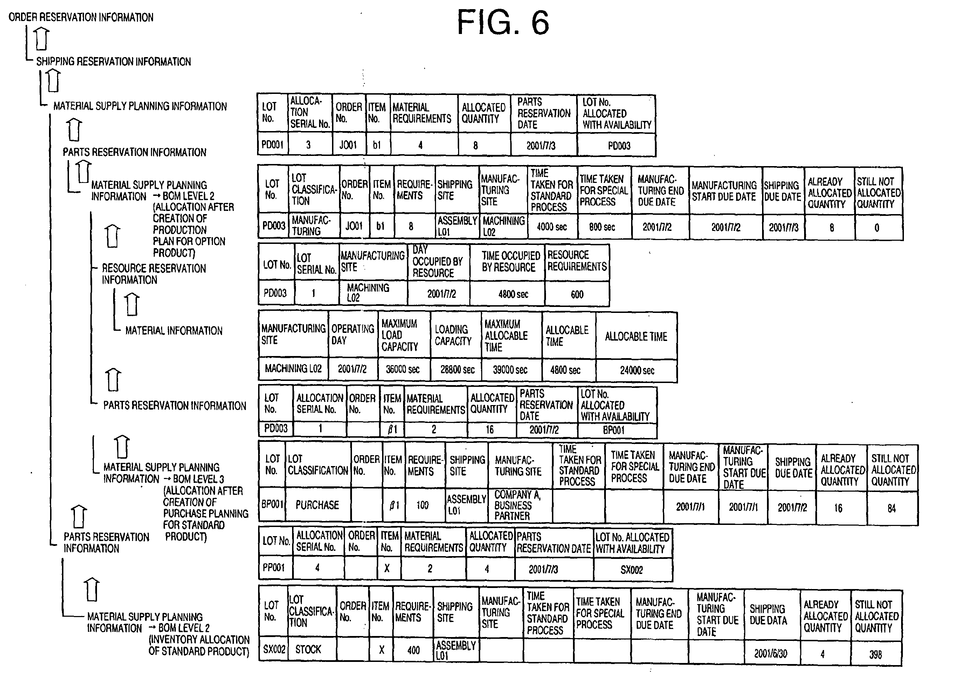

Fig. 6 is a diagram illustrating coordination of data created by the production management system. Order reservation information is created in reference with shipping reservation information. The shipping reservation information is, in turn, created in reference with material supply planning information. The material supply planning information is, in turn, created in reference with resources reservation information and parts reservation information. The parts reservation information is, in turn, created in reference with the resources reservation information and parts reservation information both related to the relevant parts. While content of information is exemplarily illustrated, details thereof will be described later.

System resources of this novel production management system will be described more in details. Of lines connecting respective items one to another in the diagrams, relatively thick solid lines represent 'control', relatively fine solid lines represent 'reference' and broken lines represent 'output'.

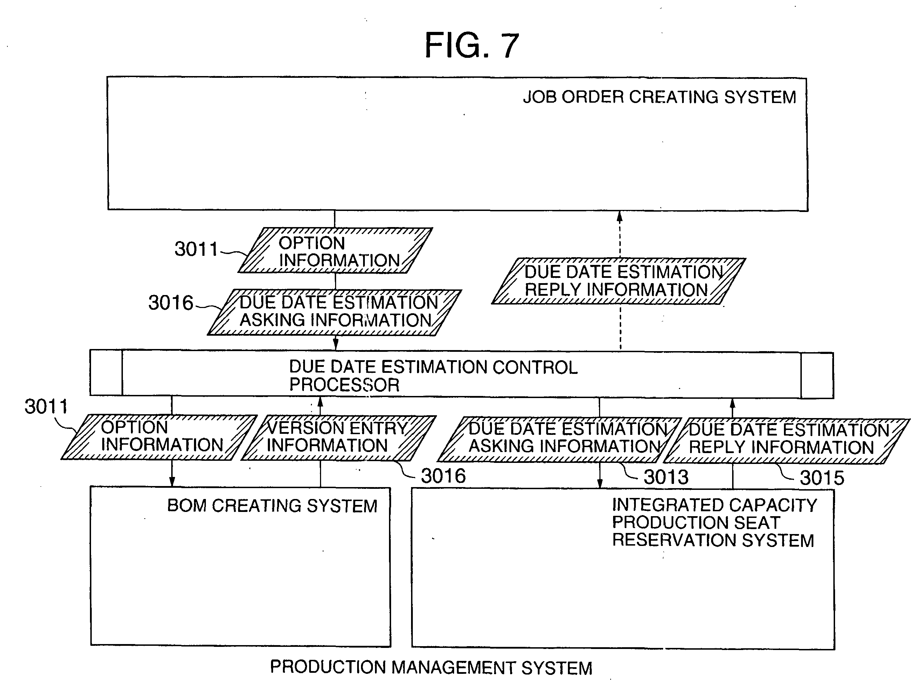

Fig. 7 is a system resources diagram schematically illustrating the production management system. The production management system comprises a make-to-order production job order creating system, a BOM creating system, an integrated capacity production seat reservation system and a due date estimation control processor.

The due date estimation control processor is the processor adapted for handling over the data of the make-to-order production job order creating system, the BOM creating system and the integrated capacity production seat reservation system. The production management system has functions to accept and "make entry" of a new job order on option specification product, to "modify" the production planning for the job order of which the entry has been made and to "cancel" a certain production planning. The production management system not only identifies types of data input thereto but also the sender from which the data has been input to the production management system as well as the receiver to which the data should be output from the production management system. When functions to "make entry", for example, the production management system supplies the BOM creating system with the option information and thereby causes BOM creating system to create a new BOM. When functions to "modify" , it is unnecessary for the production management system to supply the option information so far as no modification occurring in the option information (except modification of due date and/or requirements) and, in this case, no new BOM is created.

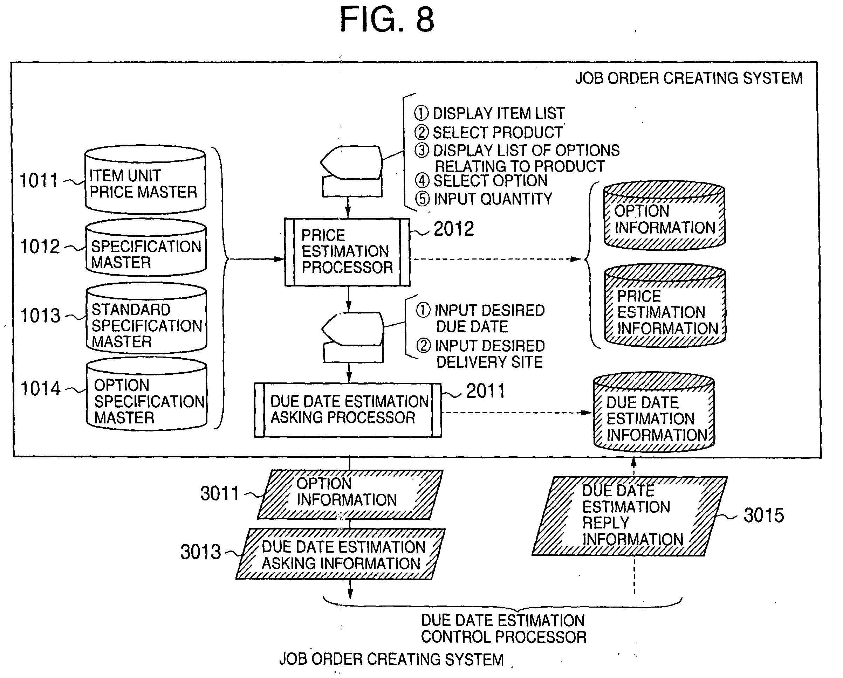

Fig. 8 is a system resources diagram illustrating details of the job order system for make-to-order production. The job order system for make-to-order production is adapted to output the option information 3011 indicating content of an option specification product and the due date estimation asking information 3013, on one hand, and to receive due date estimation reply information 3015, on the other hand. The job order system for make-to-order production includes the price estimation processor 2012 and a due date estimation asking processor 2011.

The price estimation processor 2012 makes reference to the item unit price master 1011, the specification master 1012, the standard specification master 1013 and an option specification master 1014. The price estimation processor 2012 in the job order creating system for make-to-order production causes lineup to be displayed and, upon selection of the product, causes the option lineup applicable to the product to be displayed. The price estimation processor 2012 further selects an option and input requirements and thereby creates the option information 3011 as well as the price estimation information. The processor 2012 then stores the option information 3011 as well as the price estimation information created in this manner. The due date estimation asking processor 2011 in the job order system for make-to-order production inputs an expected due date and an expected delivery site to create the due date estimation asking information 3013 and to store the due date estimation asking information 3013 created in this manner.

The option information 3011 and the due date estimation asking information 3013 are transmitted to the BOM creating system via the due date estimation control processor. As will be described later, the due date estimation reply information output from the integrated capacity production seat reservation system is sent back to the job order creating system for make-to-order production via the due date estimation control processor and then displayed.

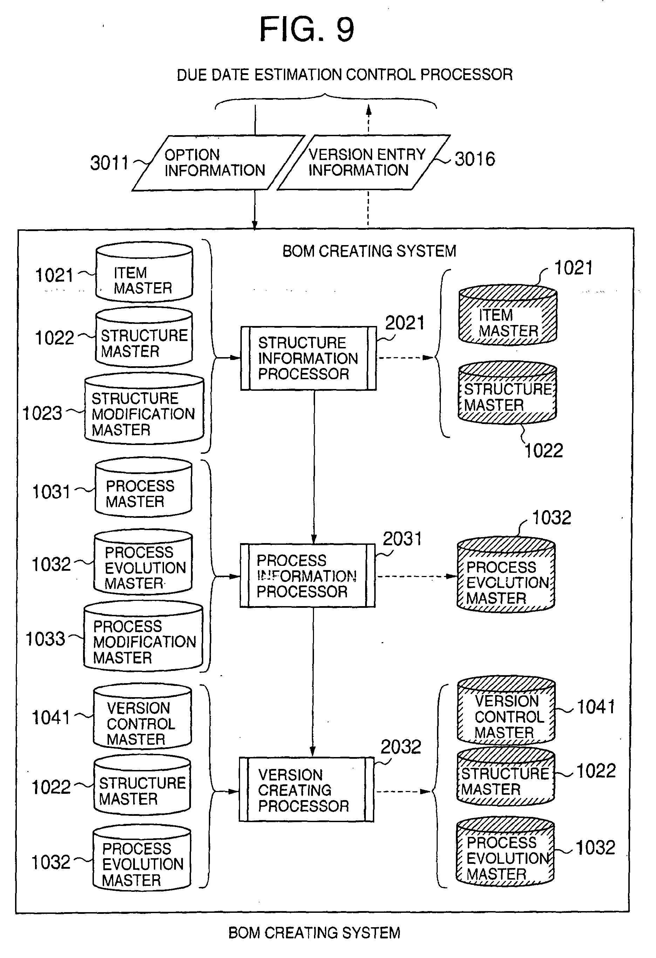

Fig. 9 is a system resources diagram illustrating details of the BOM creating system. Based on the option information, the BOM creating system applies the option to the part structure and the process and outputs version entry information. The BOM creating system comprises the structure information processor 2021, the process information creating processor 2031 and a version creating processor 2032.

In reference with an item master 1021, the structure master 1022 and the option information 3011, the structure information creating processor 2021 applies the option to an item master 1021 and the structure master 1022 on the basis of the option information 3011 and thereby updates these masters 1021, 1022.

With reference to a process master 1031, the process evolution master 1032 and the process modification master 1033, the process information creating processor 2031 applies the option to the process evolution master 1032 on the basis of the option information 3011 and a result output from the structure information creating processor 2021 and thereby updates the master 1032.

With reference to a version control master 1041, the structure master 1022 and the process evolution master 1032, the version creating processor 2032 updates respective versions of the version control master 1041, the structure master 1022 and the process evolution master 1032 on the basis of a result output from the process information creating processor 2031. The structure master 1022 and the process evolution master 1032 having been created has the versions depending on the particular specification of the product. The version creating processor 2032 generates a new version No. as a new specification is created in the structure master 1022 and the process evolution master 1032.

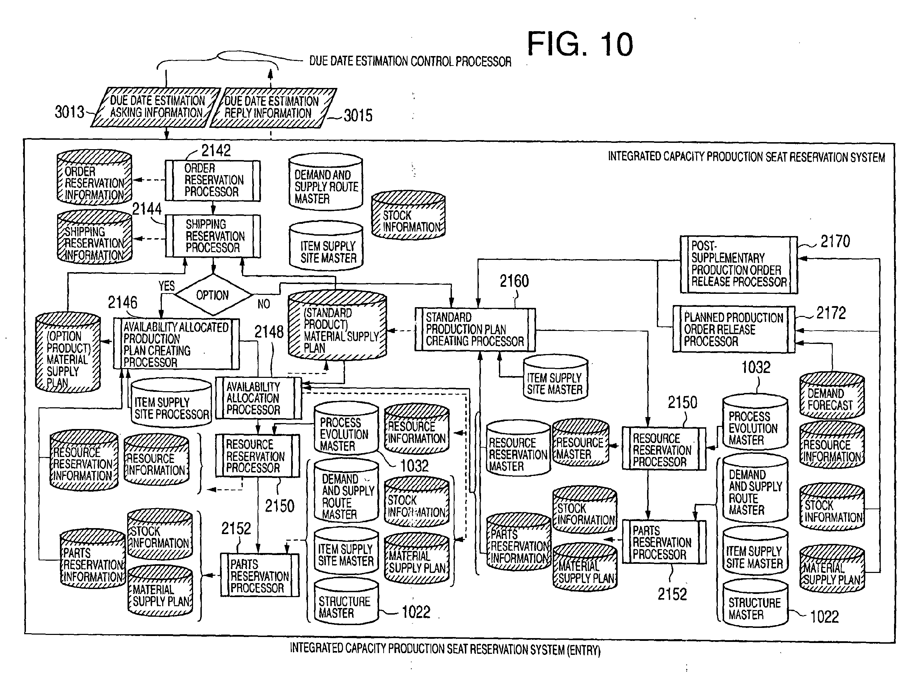

Fig. 10 is a system resources diagram illustrating the integrated capacity production seat reservation system as the entry is being made. The integrated capacity production seat reservation system makes reference to the respective databases to create the due date estimation reply information 3015 on the basis of the due date estimation asking information 3013. The integrated capacity production seat reservation system generally comprises a processor for creation of the make-to-order production planning and a process for creation of the speculative production planning. The processor for creation of the make-to-order production planning comprises, in turn, an order reservation processor 2142, a shipping reservation processor 2144, the availability allocation processor 2148, the resources reservation processor 2150 and the parts reservation processor 2152. The planned production schedule creating processor comprises, in turn, a standard specification product manufacturing planning creating processor 2160, a resources reservation processor 2160, a parts reservation processor 2152, a post-supplementary production job order release processor 2170 and a planned production job order release processor 2172.

In the integrated capacity production seat reservation system, the respective processors make reference to the due date estimation asking information 3013 and the previous processing result. The job order reservation processor 2142 makes a job order reservation on the basis of the due date estimation asking information 3013. The shipping reservation processor 2144 makes reference to the expected due date and, if immediate shipping is required, makes reference also to the stock. If the immediate shipping is not required, the shipping reservation processor 2144 makes reference to an order route master and an item supply site master to effectuate a shipping reservation.

For the ordered product which is an "option specification product", an availability allocation mode production planning creating processor 2146 makes reference to the item supply side master, the resources reservation information and the parts reservation information in order to create or update a resources supply planning for this option specification product. The availability allocation processor 2148 makes reference to the material supply planning for the standard specification product and thereby updates the allocation information concerning the material this material supply planning has reserved and this material supply planning itself (or stock) as well as the reservation information such as resources reservation information and parts reservation information. The resources reservation processor 2150 makes reference to the process program master and the resources in order to create the resources reservation information and thereby to update the resources allocation information. The parts reservation processor 2152 makes reference to the stock information, the resources supply planning, the demand and supply route master, the item supply site master and the structure master to create parts reservation information and to update allocation information of the material supply planning (or stock).

For the ordered product which is an "option specification product" or a speculative product, the standard production planning creating processor 2160 makes reference to the item supply site master, the resources reservation information and the parts reservation information and thereby creates or updates the material supply planning for standard specification product.

The speculative product order includes the post-supplementary production order and the planned production order. The post-supplementary production release processor 2170 makes reference to the stock and the material supply planning in order to create a production order and then inputs this production order to the standard production planning creating processor 2160. The planned production order release processor 2172 inputs the production order to the standard production planning creating processor 2160 with reference to the demand forecast, the stock information and the material supply planning.

The resources reservation processor 2160 creates with reference to the resources information and the process evolution master and updates the resources allocation information. The parts reservation processor 2152 makes reference to the stock information, the material supply planning, the demand and supply route master, the item supply site master and the structure master 1022 in order to create the parts reservation information and to update the allocation information for the material supply planning (or the stock information).

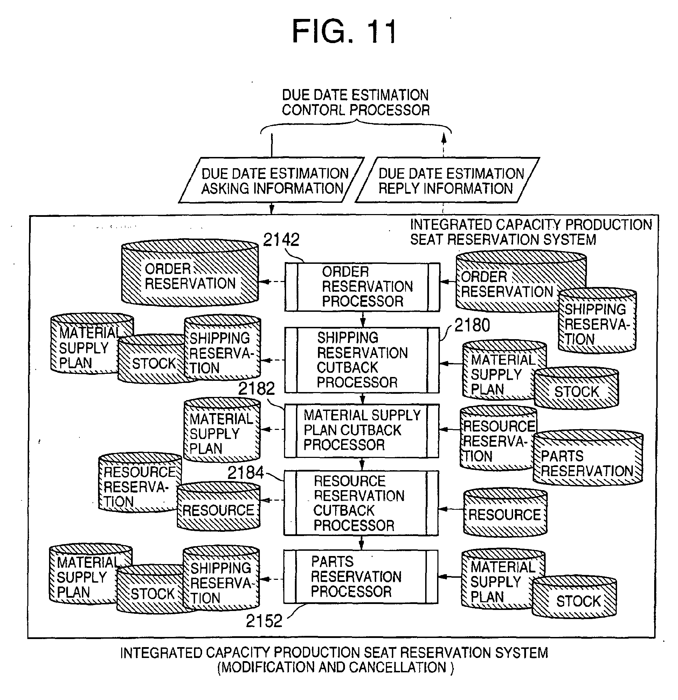

Fig. 11 is a system resources diagram of the integrated capacity production seat reservation system, illustrating the manner in which modification or cancellation is carried out. The integrated capacity production seat reservation system is able to modify or to cancel the production planning for make-to-order product and speculative product. The integrated capacity production seat reservation system modifies or cancels these production plans via the order reservation processor 2142, a shipping reservation cutback processor 2180, a material supply planning cutback processor 2182, a resources reservation cutback processor 2184 and the parts reservation processor 2152. It should be noted here that cancellation may be defined also as restoration of a previously recorded production planning and modification may be defined also as a new entry made after cancellation of a previous entry. Such definition will lead to a conclusion that both cancellation and modification should respectively involve processing executed in a direction opposed to the direction involved by entry.

Making reference to the order reservation information and the shipping reservation information, the order reservation processor 2142 modifies or cancels an order reservation. The shipping reservation cutback processor 2180 modifies the shipping reservation, the material supply planning and the stock or initiates them to the respective states before the reservation with reference to the material supply planning and the stock. The material supply planning cutback processor 2182 modifies the material and/or the material reservation or initiates them to the respective states before the reservation with reference to the resources. The parts reservation processor 2152 makes reference to the resources supply planning and the stock in order to modify the parts reservation, the stock and the material supply planning or to initiate them to the respective states before the reservation.

Operation of the production management system will be described more in details in reference with the respective flow charts and the diagrams.

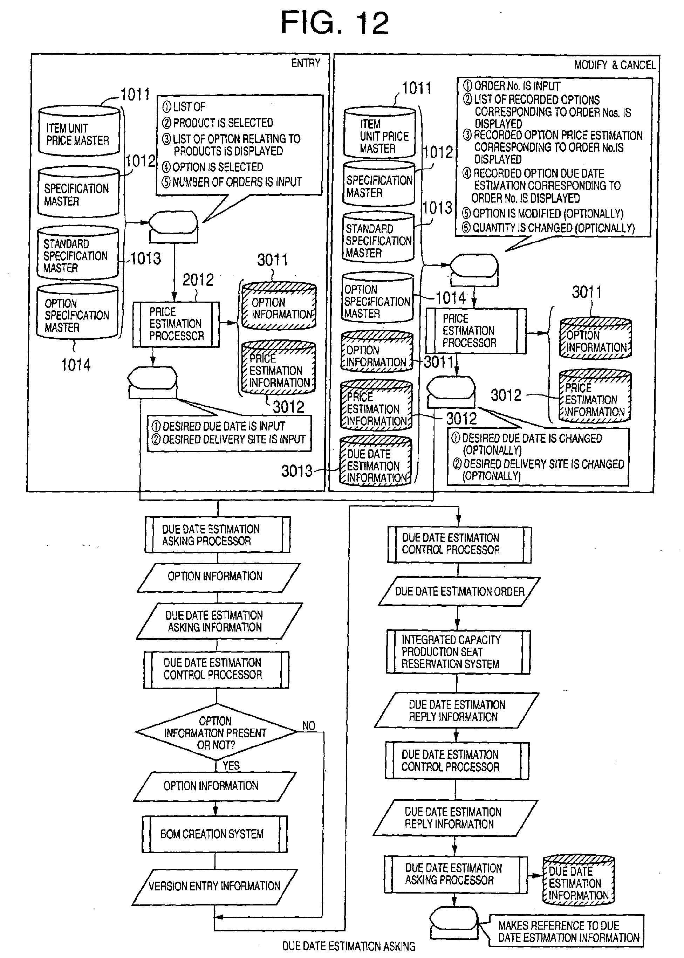

Fig. 12 is a flow chart illustrating a process in which a job order is created by the job order creating system, then a due date estimation is asked and finally a due date estimation is obtained.

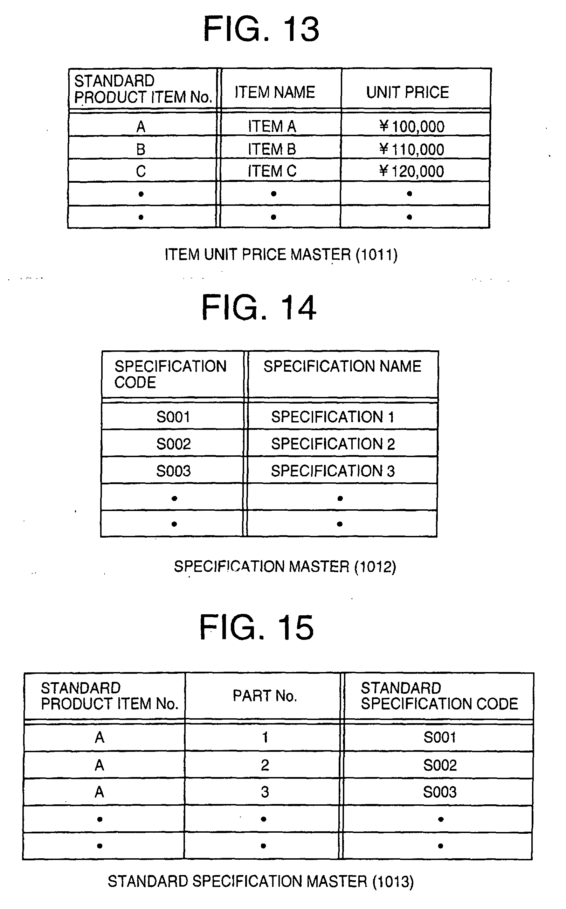

Fig. 13 is a diagram illustrating content of the item unit price master 1011. The item unit price master 1011 is a database recording products and unit prices thereof. The item unit price master 1011 contains, as will be seen in Fig. 13, fields for part No. of the standard product, product name and unit price and information is recorded in these fields for every item of products. For example, it is clearly understood that the standard specification product of part No. "A" has a product name "article 1" and a unit price of "¥100,000".

Fig. 14 is a diagram illustrating content of the specification master 1012. The specification master 1012 is a database recording a code and a name for every specification. As will be apparent from Fig. 14, the specification master 1012 contains specification code and specification name wherein the specification name is recorded for every specification code. For example, it is clearly understood from this database that a specification code "S001" corresponds to a specification name "specification 1".

Fig. 15 is a diagram illustrating content of the standard specification master 1013. The standard specification master 1013 is a database recording a structure of standard specification product. As will be seen in Fig.15, the standard specification master 1013 contains fields for product No. of the standard specification product, part No. and standard specification code wherein information is recorded in these fields for every standard specification code. For example, it is clearly understood from this database that a standard specification code "S001" relates to a part No. "1" of a standard specification product No. "A".

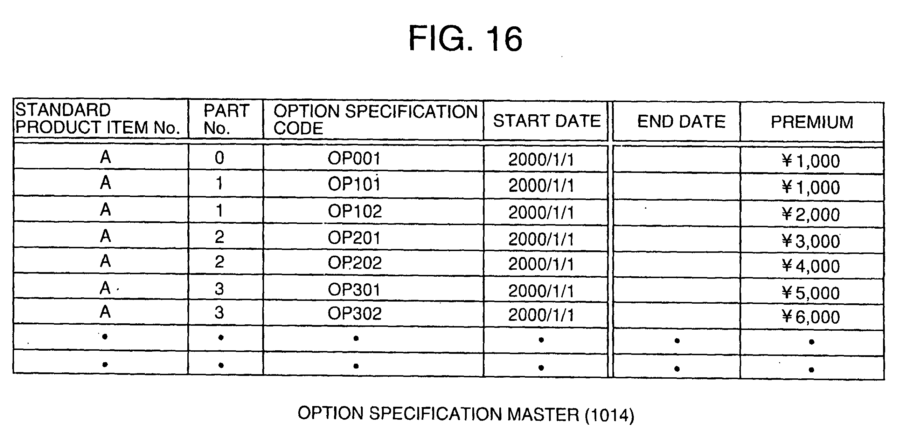

Fig. 16 is a diagram illustrating content of the option specification master 1014. The option specification master 1014 is a database used to select a desired option specification applicable to a standard specification product. As will be seen in Fig. 16, the option specification master 1014 contains fields for production No. of the standard specification product, part No., part No., option specification code, start date, end date and premium wherein information is recorded in these fields for every option specification code. For example, it is clearly understood from this database that an option specification code "OP001" is the option specification which is applicable to a part designated by part No. "0" of the product designated by standard product No. "A" and valid from January 1, 2000 up to now (because the field "end date" is blank). It is also understood from this database that application of this option specification will result in premium for the product of "¥ 1,000" per unit piece (e.g., 1 piece).

The item unit price master 1011, the specification master 1012, the standard specification master 1013 and the option specification master 1014 are the unit databases extracted from the integrated database. Respective data created in reference with these unit databases are also stored as parts of the integrated databases. In addition, the respective unit databases are associated one with another via key items so that these unit databases may be easily handled in form of joint databases.

In response to order received, the job order creating system supplies the make-to-order production reservation system with the job order for production of option specification product, on one hand, and receives the due date estimation reply information created by the make-to-order production system, on the other hand. The job order contains the option information 3011 and the due date estimation asking information 3013. The job order includes "entry" of a new order received, "modification" of a previous "entry" and "cancellation" of a previous "entry". "Modification" is executed with respect to various factors such as requirements, due date, delivery site and specification.

With reference to Fig. 12, particularly with the evolution on and after "entry" illustrated therein, a process of newly recording a production planning for an option specification product in response to an order received will be explained in details. In this case, the option specification product is the product to which the specification (parts and/ or process) of the standard specification product has been applied. BOM (structure of parts and process) of the option specification product is still not created.

The job order creating system is able to make reference, via in- and output device, to the respective databases of the item unit price master 1011, the specification master 1012, the standard specification master 1013 and the option specification master 1014. The in- and output device enables also various data to be in- and output to and from the due date estimation asking processor 2011 and the price estimation processor 2012 and, in addition, enables these processors 2011, 2012 to be controlled.

Operator causes the in- and output device to display products (usually a list of standard specification products) and selects an item from a group of items each having a specification closely related to the desired specification. The desired option specification may be applied to this standard specification product in a manner as will be described later to determine the specification of option product as the finished product. The item unit price master 1011 may be referred to select the item taking account of the unit price of the product.

Now the operator selects the option specification to be applied to the selected item. Application of the option specification means that the parts and/or the process for the standard specification product are partially modified. Modification of the parts includes addition of part(s) to those of the standard specification product, replacement of certain part(s) of the standard specification product by the other part(s) and cancellation of certain part(s) of the standard specification product. Modification of the process includes addition of process to those of the standard specification product, replacement of certain process of the standard specification product by the other process and cancellation of certain process of the standard specification product.

A particular case will be exemplarily discussed in which the standard specification product "A" is selected, options "OP001", "OP101", "OP201" and "OP301" are applied to this product "A" and a job order is created to manufacture an option specification product corresponding to the option applied standard specification product "A".

In response to selection of a product in reference with the item unit price master 1011 and selection of options from the option specification master 1014, the price estimation processor 2012 functions to add the information concerning the selected product with information concerning the selected options and designates this option specification product with an identifier, for example, an order entry No. "J001". Then the selected option is associated with the order entry No. "J001" to create the option information 3011.

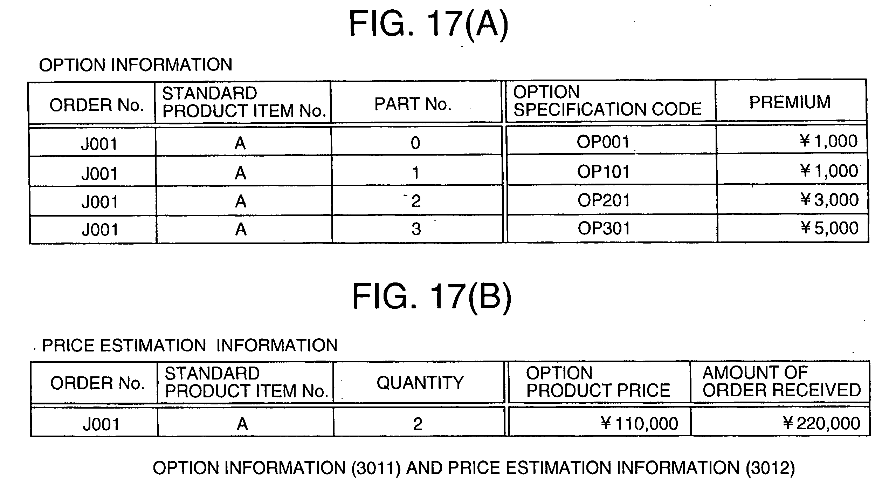

Content of the option information 3011 is illustrated in Fig. 17(A). The option information 3011 contains fields allocated to order No., standard specification product No., part No., option specification code and premium, respectively, so that the data related to the respective fields are recorded for every option specification.

Content of the price estimation information 3012 is illustrated in Fig. 17(B). The price estimation processor 2012 creates not only the option information 3011 but also the price estimation information 3012. The price estimation information 3012 contains fields allocated to order No., standard specification product No., requirements, option product price and order value. The data are recorded in these fields in association one with another. For example, it is clearly understood from this price estimation information 3012 that the order entry No. "J001" corresponds to the option applied standard specification product "A", requirements are "2", unit price of this option applied product is "¥ 110,000" and order value is "¥ 220,000".

While the specification master 1012 and the standard specification master 1013 are usually referred in order to display product or specification with a name as plain as possible, for example, with a trade mark, it is also possible to construct the system so that product or specification may be identified by a code without relying on the specification master 1012 and the standard specification master 1013.

In response to desired due date and delivery site of a customer which is input by the operator via the in- and output device, the due date estimation asking processor outputs option information and due date estimation asking information. If any option' information is present, in other words, if an order received is for option specification product, the due date estimation processor transmits this option information to the BOM creating system. If no option information is present, in other words, if an order received is for standard specification product, no processing will occur in the BOM creating system and the routine proceeds to processing on and after the due date estimation asking system.

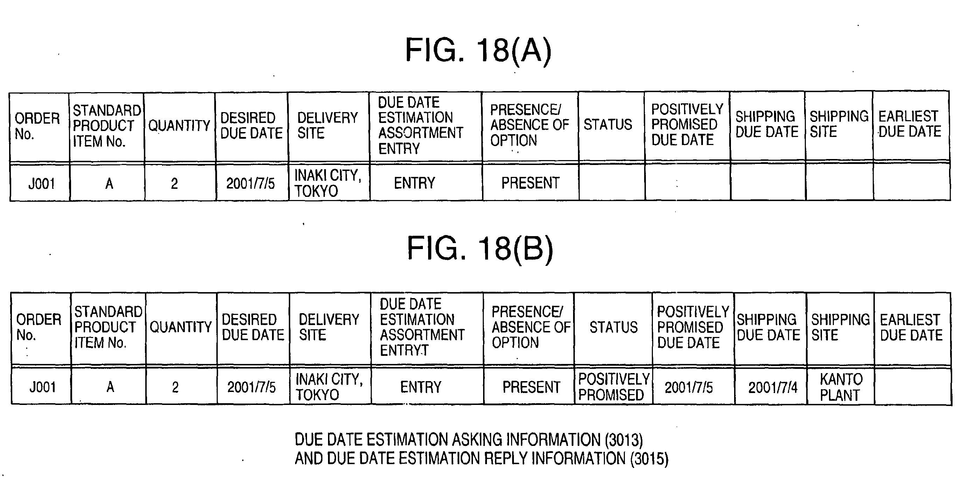

Fig. 18 is a diagram illustrating content of the due date estimation asking information 3013 combined with the due date estimation reply information 3015. The due date estimation asking information 3013 combined with the due date estimation reply information 3015 contains fields allocated to order entry No., standard specification product No., requirements, desired due date, delivery site, due date estimation assortment, presence or absence of option, status, firm due date, expected shipping date, shipping site and earliest due date. The data are recorded in these fields in association one with another.

Fig. 18(A) illustrates the due date estimation asking information 3013 combined with the due date estimation reply information 3015 output from the job order creating system. The data are utilized here as the due date estimation information 3013 and therefore the fields allocated to status, firm due date, expected shipping date, shipping site and earliest due date are left blank. It is understood from this due date estimation information 3013 that the order entry designated by the order entry No. "J001" relates to 2 option specification product each corresponding to the option applied standard product No. "A" destined to be delivered to Inaki City, Tokyo on July 5, 2001.

Fig. 18(B) illustrates the due date estimation asking information 3013 combined with the due date estimation reply information 3015 output from the integrated capacity production seat reservation system to the job order creating system. The data are utilized here as the due date estimation reply information and therefore all the fields except the field allocated to the earliest due date are filled. In contrast with the above-mentioned due date estimation asking information, the due date estimation reply information 3015 indicates that "positive promise" is recorded in the field allocated for status, July 5, 2001 is positively promised as the due date, July 4, 2001 is scheduled as the shipping date and Kanto plant is intended as shipping site.

The option information 3011, the price estimation information 3012 and the due date estimation asking information 3013 can be referred from the in- and output device and can be stored in the integrated database. The option information 3011 and the due date estimation asking information 3013 are input to the due date estimation control processor as the job order. If the option is "present", the due date estimation processor transmits the option information to the BOM creating system.

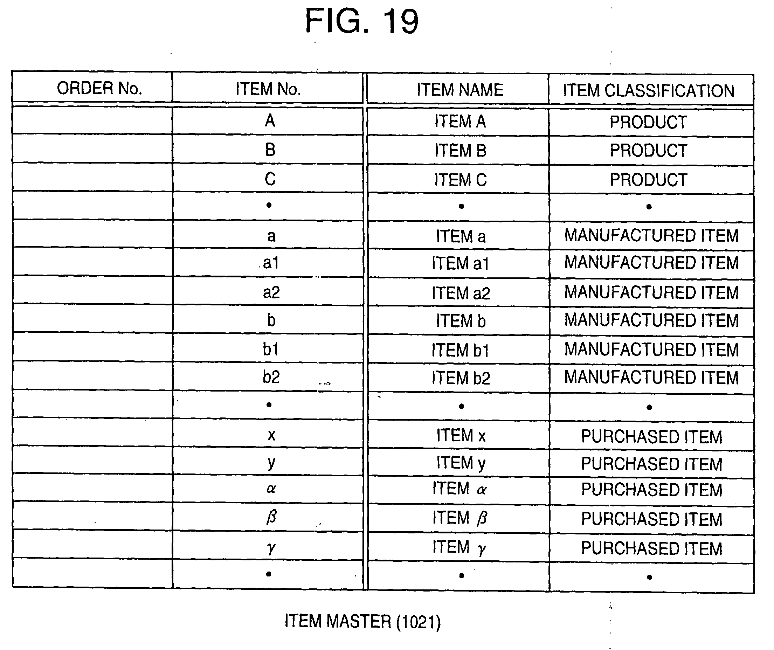

Now the BOM creating process will be discussed in details. Fig. 19 is a diagram illustrating content of the item master 1021 of Fig. 9. The item master 1021 is the database recording the parts or child parts necessary to manufacture a product or parts thereof for every item. As will be seen in Fig. 19, the item master 1021 contains fields allocated to order entry No., product No., product name and item classification wherein these data are recorded in association one with another for every product or every item of parts. The item classification is to classify the item as the finished product to be shipped out from the plant ("product"), as the item obtained by manufacturing it in the plant ("manufactured item") of the item obtained by externally purchasing it ("purchased item"). For the standard product or parts, the field allocated to the order entry No. is left blank and this field is filled only when the products or parts are of option specification. Fig. 19 illustrates content of standard specification products and therefore the field allocated to the order entry No. is left blank.

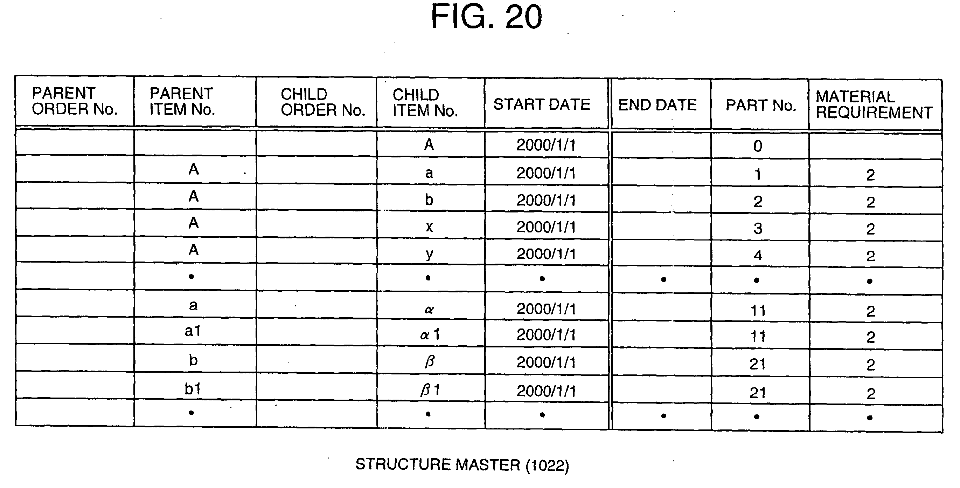

Fig. 20 is a diagram illustrating content of the structure master 1022. The structure master 1022 is the database recording a structure of parts necessary to manufacture a standard specification product and data concerning the structure of these parts. As will be seen in Fig. 20, the structure master 1022 contains fields allocated to parent order entry No., parent item No., child item No. , start date, end date, part No. and requirements wherein the data is recorded in association one with another in these fields for every set of parent and child Nos. For example, it is understood from these fields that the parent item No. "A" comprises child item Nos. "a", "b", "x" and "y" and "2" is requirements for each child item necessary to manufacture the product "A".

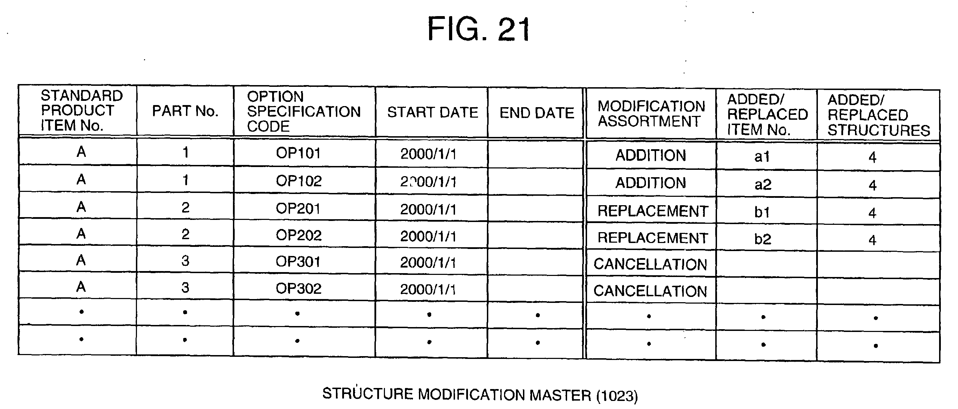

Fig. 21 is a diagram illustrating content of the structure modification master 1023. The structure modification master 1023 is adapted to modify the structure master for the standard specification product (first structure master) to the structure master for the option specification product (second structure master). The structure modification master 1023 records matters which may occur when it is desired to modify the part(s) of a standard specification product are modified to the part(s) of an option specification product. The structure modification master 1023 contains fields for standard specification product No., part No., option specification code, start date, end date, modification assortment, added/replaced part No. and added/replaced structures' number. For example, it is understood from the structure modification master 1023 that the option specification code "OP101" is an option which is applicable on and after January 1, 2000 and according to which the part designated by part No. "1" of the product designated by standard specification product No. "A" should be "added" with the part designated by part No. "a1" and requirements thereof should be "4".

The structure information processor 2021 is a computer-aided program module adapted to modify the structure master 1022 for the standard specification product by application of an option data recorded in the structure modification master 1023 in a manner as will be described more in detail.

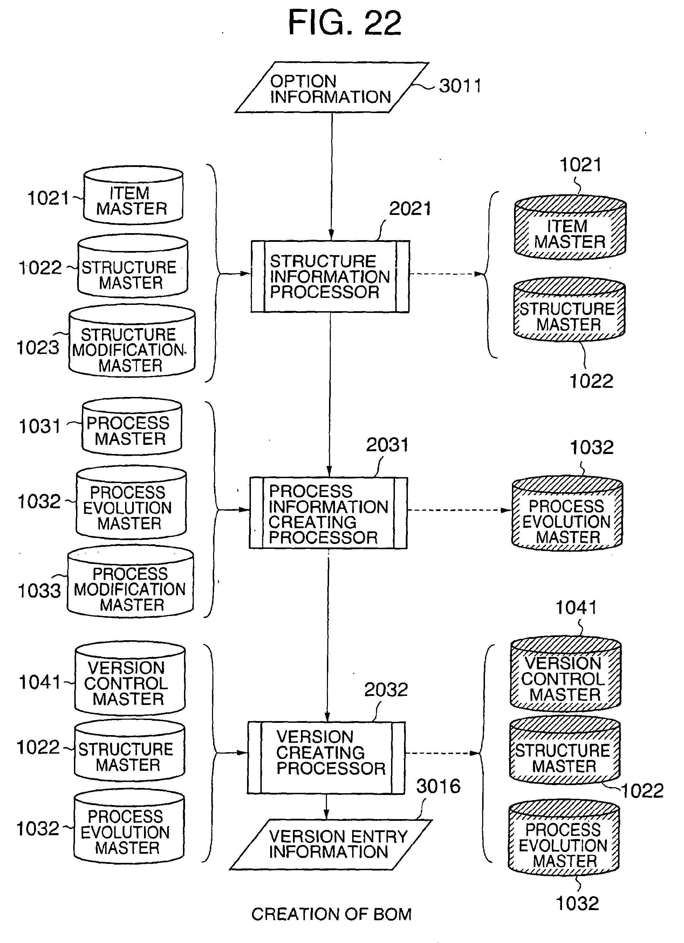

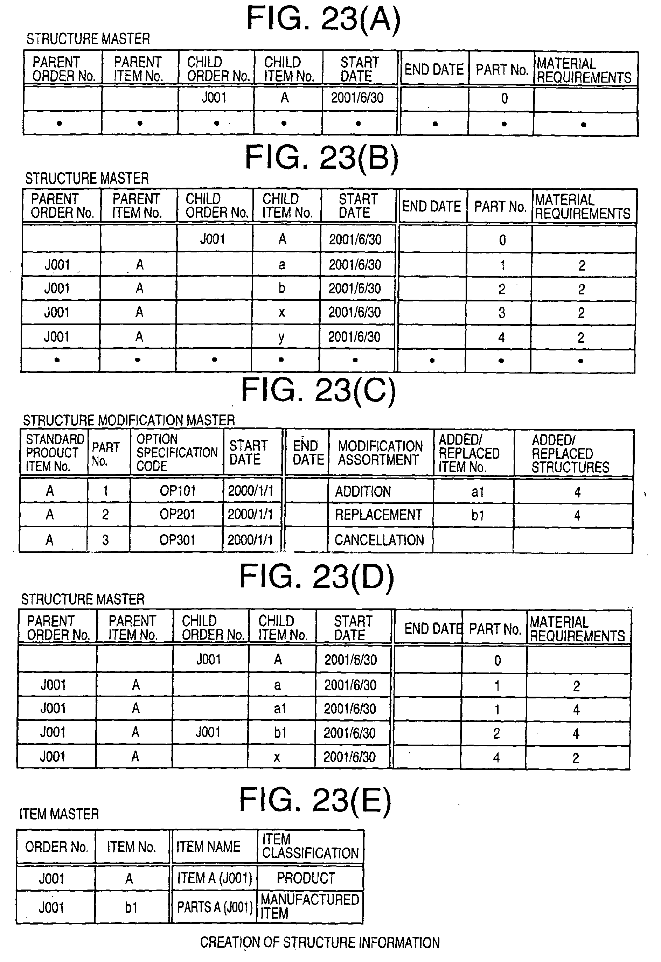

Fig. 22 is a flow chart illustrating a manner in which the BOM processor creates parts and process structure (BOM) of an option specification product. Fig. 23 is a diagram illustrating content of the data relating to creation of the structure information.

In response to input of an option information, the structure information creating processor 2021 makes reference to the item master 1021, the structure master 1022 and the structure modification master 2023 in order to apply the option to the item master 1021 and the structure modification master 1023.

More specifically, a set of data is extracted from the structure master 1022, in which parent order No. is blank, parent product No. also is blank, child product No. is "A" and request date is on/after start date but before end date. Then, "J001" is set up as child order No. and request date is set up as start date. These data are added to the structure master 1022. The structure of the standard specification product "A" is copied in this manner. Fig. 23(A) illustrates content of the structure master 1022 after the structure of the standard specification product "A" has been copied.

After the standard structure information has been copied, the structure master 1022 now containing additional date is modified to the option structure on the basis of options "OP101", "OP201" and "OP301" (option information). In the first place, a record containing standard specification product No., part No. and option specification code which coincide with those of the desired structure is retrieved and extracted from the structure modification master 1023 on the basis of the option information. Specifically, the record is extracted from the structure modification master 1023, in which the standard specification product No. is "A", the part No. is "1", "2", "3",..., the option specifications are "OP101", "OP201" and "OP301", and the request date is on/after the start day but before the end date. Fig. 23(C) illustrates content of the structure modification master 1023 after having been modified to the option structure in this manner.

Now the structure is modified. To this end, the child item No. "a1" is added to the part No. "1" for the option "OP101", the child item No. "b" is replaced by the child item No. "b1" in the part No. "2" for the option "OP201", and the child item No. "y" is deleted from part No. "3" for the option "OP301". Then, "J001" is set up as parent order No., "J001" is set up as child order No. for the child item to be modified and the request date is set up as the start date, these data being added to the structure master 1022. Fig. 23(D) illustrates content of the structure master 1022 after having been modified in the manner.

If the item corresponding to the order No. "J001" is still not recorded in the item master 1021, this item is recorded in the item master 1021. Fig. 23(E) illustrates content of the item master 1021 after this item has been recorded.

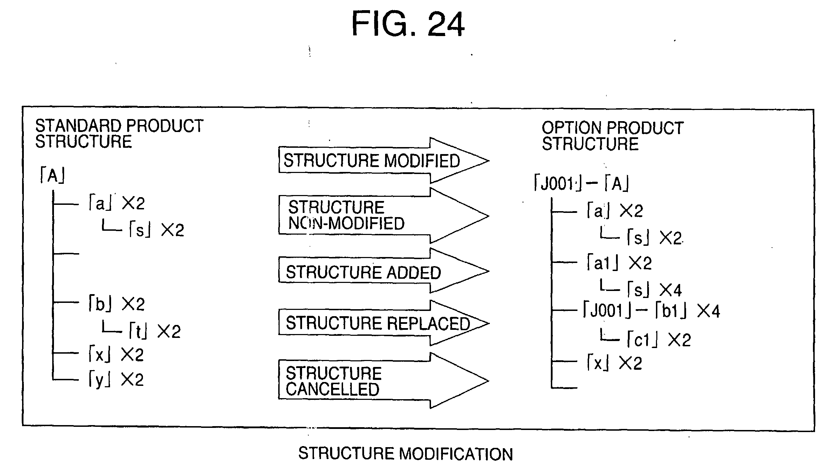

Fig. 24 is a diagram comparatively illustrating the part structure of the standard specification product before the structure is modified and the part structure of the option specification product after the structure has been modified. As will be seen in Fig. 24, the standard specification product "A" requires 2 parts "a", 2 parts "b", 2 parts "x" and 2 parts "y". Each of the parts "a" consists of 2 child parts "s" and each of the parts "b" consists of 2 child parts "t". To modify the standard specification product "A" to the option specification product "J001"-"A", 2 parts "a1" may be added, 2 parts "b" may be replaced by 4 parts 2 "J002"-"b1" and 2 parts "y" may be deleted. Each of the parts "a1" consists of 4 child parts "s" and each of the parts "J001"-"b1" consists of two child parts "c1". Upon modification of part structure, process modification is carried out.

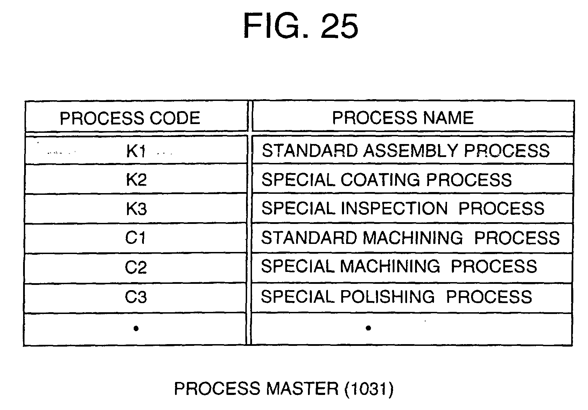

Fig. 25 is a diagram illustrating content of the process master 1031. The process master 1031 is a database recording respective processes for manufacturing of the product. As will be seen in Fig. 25, the process master 1031 contains fields for process code and process name, respectively. The process name is recorded for every process code. For example, it is understood from this process master 1031 that the process designated by the process code "K1" is the "standard assembly process".

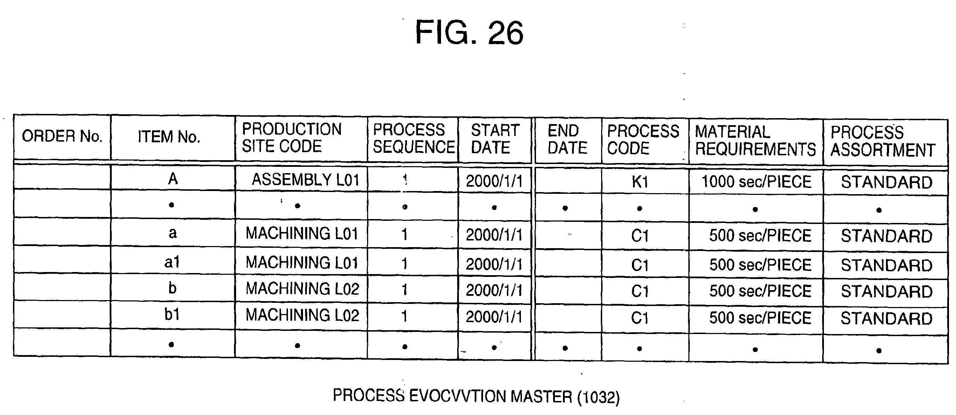

Fig. 26 is a diagram illustrating content of the process evolution master 1032. The process evolution master 1032 is a database in which the processes necessary to manufacture the product as well as the parts thereof and matters relating to these processes. The process evolution master 1032 contains, as will be seen in Fig. 26, fields for order No., item No., production site code, process sequence, start date, end date, process code, resources requirements and process assortment, these data being recorded therein in association one with another. For example, it is understood from this process evolution master 1032 that the parts designated by item Nos. "a" and "a1" are destined to be manufactured on production line "machining L1" and resources requirements, i.e., time required is "500 seconds".

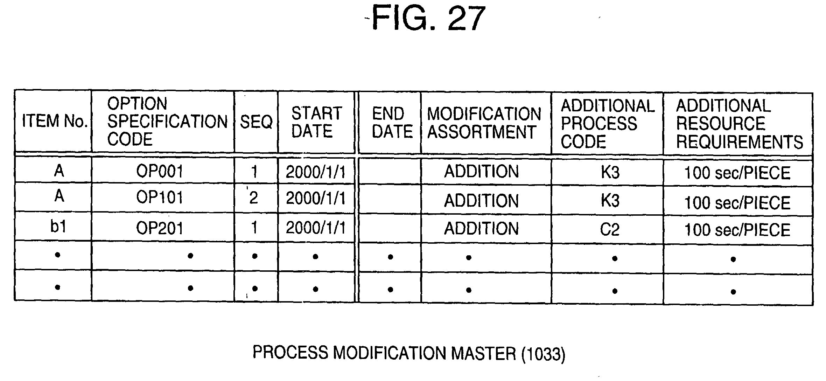

Fig. 27 is a diagram illustrating content of the process modification master 1033. The process modification master 1033 is a database recording the data used to create a process information 3031 for option specification product obtained by applying option process to process for standard specification product. The process modification master 1033 records matters to be modified as the process for the standard specification product is modified to the process for the option specification product. The process for the standard specification product is created from the process master 1031 and the process evolution master 1033.

More specifically, the process modification master 1033 contains fields for product No., option specification code, SEQ, start date, end date, modification assortment, additional process code and additional resources requirements, in which these data are recorded in association with one another for every action specification code. SEQ indicates a sequential No. of process. For example, it is understood from this process modification master 1033 that the option "OP001" is an option which is effectively applicable to the product No. "A" up to now since January 1, 2000, the additional process "K2" is added in accordance with the option and the time required per unit quantity increases by "100 seconds".

The process information creating processor 2031 is a computer-aided program module adapted to modify the process evolution master 1032 by application of the option data obtained from the process modification master in a manner as will be described.

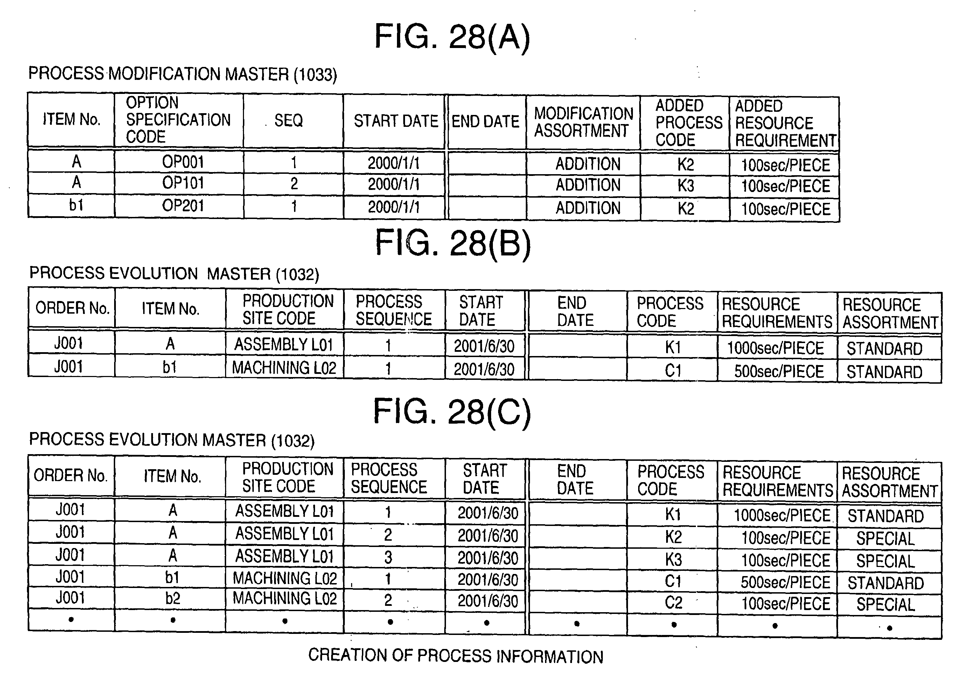

Fig. 28 is a diagram illustrating creation of the process information. In the first place, the process modification information corresponding to the option information 3011 is extracted from the process modification master 1033. Specifically, the desired process modification information is retrieved and extracted from the process modification master 1033, which indicates that the product Nos. are "A", "b1",...., the option specification codes are "OP001", "OP101" and "OP201" and the request date is on and after the start date but before the end date. Fig. 28(A) illustrates the process modification master 1033 after the data have been extracted in this manner.

To create the process information, the process modification information corresponding to the option information 3011 is extracted from the process modification master 1033 provided that order No. is blank, product Nos. are same as those in the process modification master 1033, i.e., "A", "b1",.., and the request date is on and after the start date but before the end date. Then "J001" is set up as the order No., the start date is set up as the request date and these are added to the process evolution master 1032. Fig. 28(B) illustrates the process evolution master 1032 added with the order No. and the start date in this manner.

On the basis of the option information, more accurately, on the basis of the option "OP001", "OP101" and "OP201", the created process information is modified. Specifically, the process code "K" is added to the item No. "A" to set up the process sequence as 2 for the option "OP001", the process code "K3" is added to the item No. "A" to set up the process sequence as 3 for the option "OP101" and the process code "C2" is added to the item No. "b1" to set up the process sequence as 2 for the option "OP201". The supply site code for the standard process is set up as the supply site code. Fig. 28(C) illustrates content of the process evolution master 1032 after the process has been modified.

Upon creation, the structure information and the process information are added with a new version. Addition of the new version can be achieved by adding 1 to the existing final version.

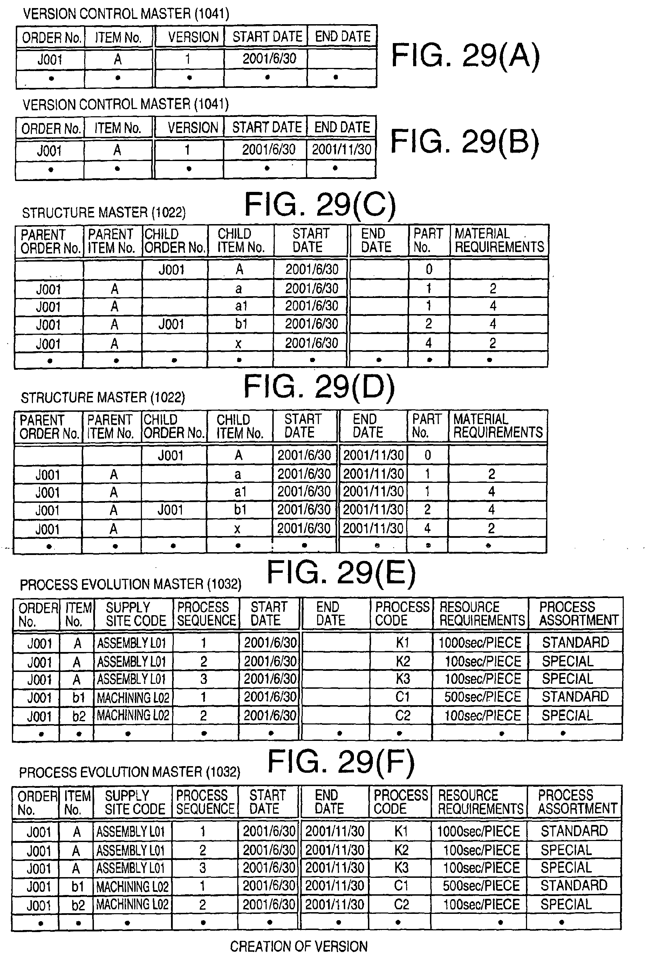

Fig. 29 is a diagram illustration the manner in which the version is created. Content of the version management master 1041 before modification is illustrated by Fig. 29(A) and content of the version management master 1041 after modification is illustrated by Fig. 29(B). In the case of a new version which has been created by specification modification and set to be started on 0 hour, December 1, 2001, the preceding day of the start date of the new version is set up as the period of validity (expiration date) of the existing version.

Fig. 29(C) illustrates content of the structure master 1022 before set up, Fig. 29(D) illustrates content of the structure master 1022 after set up. Fig. 29(F) illustrates content of the process evolution master 1032 before set up. When the version is created, the end date is set up in the structure master 1022 and the process evolution master 1032 also.

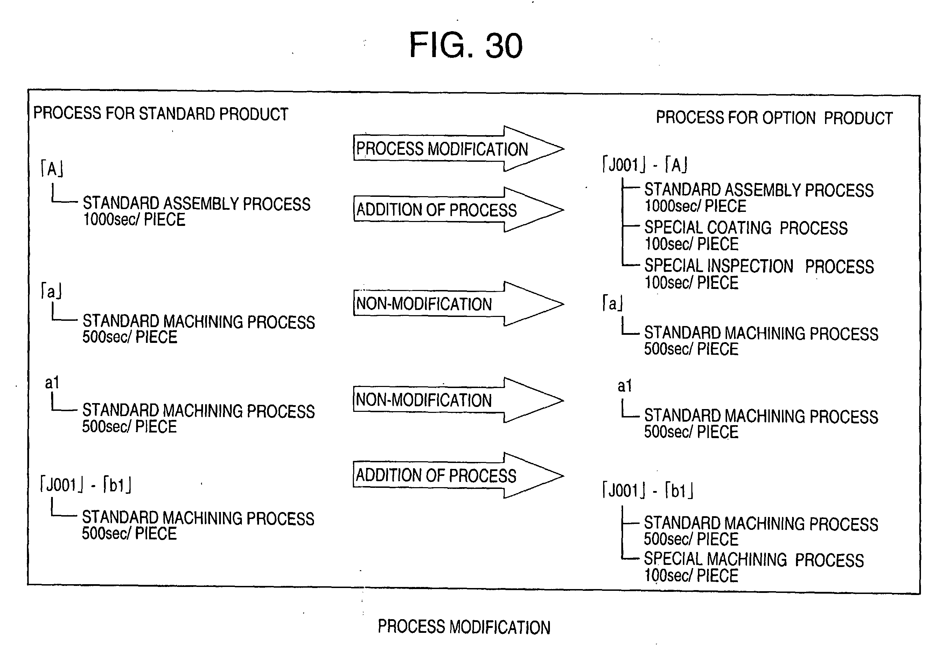

Fig. 30 is a diagram comparatively illustrating the standard specification product before the process modification and the option specification process after the process modification. As will be seen in Fig. 30, of the process for the standard specification product, the standard specification assembly process for "A" requires 500 seconds, the standard specification assembly process for "a1" requires 500 seconds and the standard specification assembly process for "J001"-"b1" requires 500 seconds. To modify the process for the standard specification product to the process for the option specification product, the standard specification assembly process for "A" is added with 100 seconds required for the special coating process and 100 seconds required for the special inspection process, on one hand, and the standard specification assembly process for "J001"-"b1" is added with 100 seconds required for the special machining process. Upon BOM creation, the due date estimation asking information 3013 is input to the integrated capacity production seat reservation system.

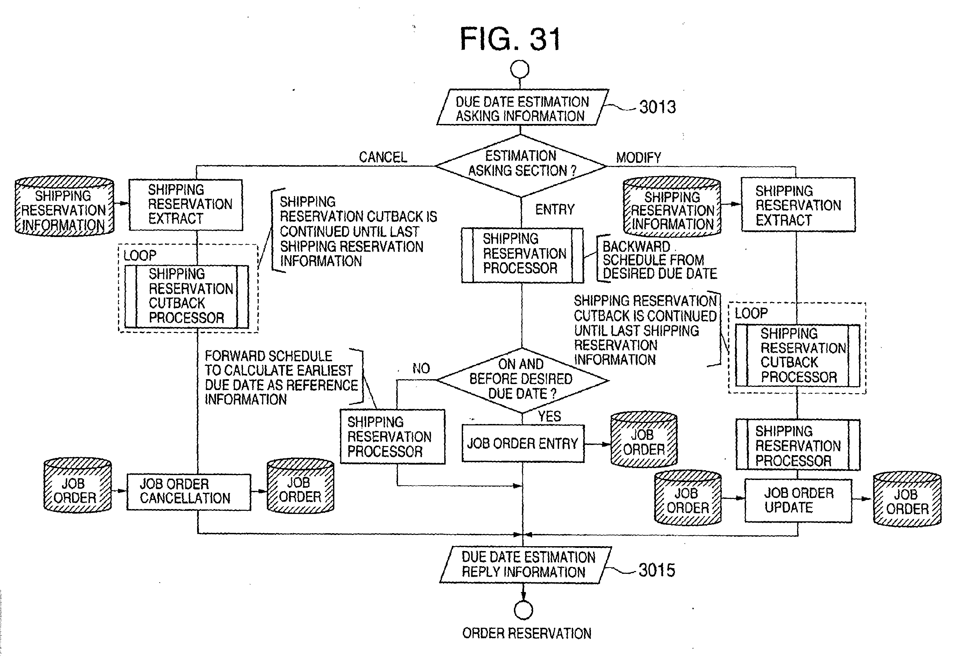

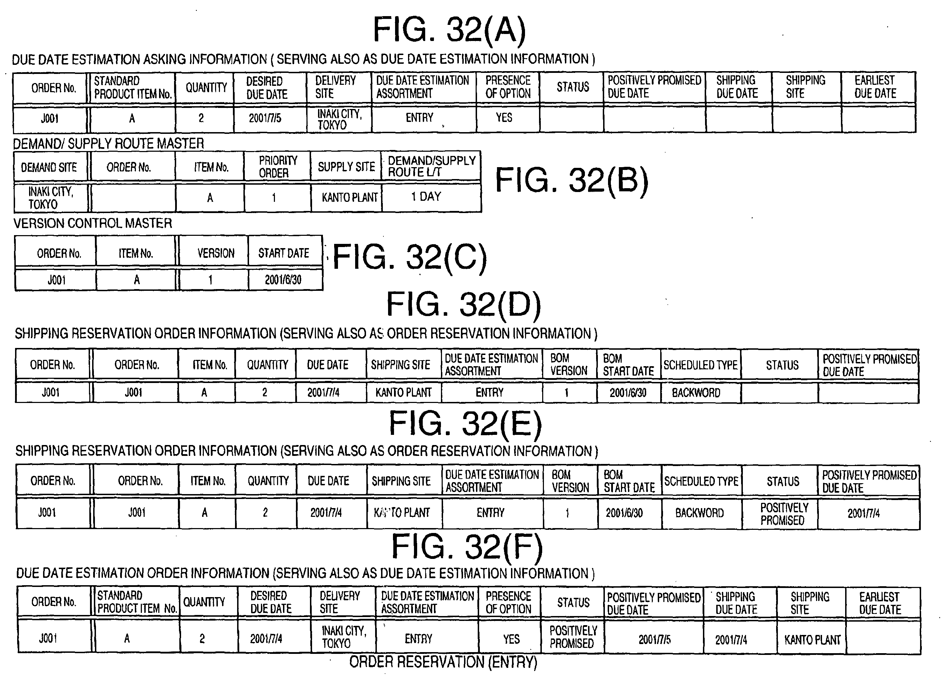

Now the process in the integrated capacity production seat reservation system will be discussed. Fig. 31 is a flow chart illustrating the order reservation process and Fig. 32 is a diagram illustrating the order reservation when an entry takes place. The order reservation process will be first discussed with respect to the case in which an entry takes place.

Supplied with the due date estimation asking information 3013 as illustrated in Fig. 32(A), the shipping reservation processor makes reference to the demand/supply route master illustrated in Fig. 32(B) in order to determine the shipping site for the desired delivery site. In the case of the option specification product, reference is made to the record of the standard specification items. For example, if the demand/supply site (i.e., desired delivery site) is Inaki City, Tokyo, the supply site (i.e., shipping site) will be Kanto plant. The due shipping date is calculated on the basis of the desired due date and the demand/supply route L/T (i.e., lead time; time required) of the demand/supply route master. For example, the demand/supply route L/T: 1 day may be subtracted from July 5, 2001 to calculate July 4, 2001 as the due shipping date.

Then, the shipping reservation order information is created from the due date estimation asking information 3013 and the version entry information. The shipping reservation order information is used also as the order reservation information. When the due date estimation order information contains an option, the order No. will be the job order No. and when no option is contained, the order No. will be blank. Therefore, the presence of the order No. suggests that the product is the option specification product and the absence of the order No. suggests that the product is the standard specification product.

The record, in which the above described order No., the item No. as well as the asking date of the due date estimation information are on and after the start date but before the end date, is extracted from the version control master (See Fig. 32(C)) and the version of the version control master is set up as the BOM version of the shipping reservation order.

Now, the schedule type is determined. If the desired due date is specified in the due date estimation information, the schedule will be of "backward" type and the capacity production seat reservation will be executed so as to meet the desired due date. If the desired due date is not specified in the due date estimation information, the schedule will be of "forward" type and the capacity production seat reservation will be executed to meet the earliest due date. Fig. 32 (D) illustrates content of the shipping reservation order information used also as the order reservation information. The shipping reservation processor executes the shipping reservation on the basis of the shipping reservation order information used also as the order reservation information.

The shipping reservation processor sets up the status as "positively promised" when the shipping reservation of whole quantity has been executed on the basis of the shipping reservation order information used also as the order reservation information but sets up the status as "not positively promised" when no shipping reservation has been executed. When two or more shipping reservations become necessary as a result of the whole quantity reservation, the latest shipping reservation date is set up as the due date. Fig. 32(E) illustrates content of the shipping reservation order information used also as the order reservation information after the shipping reservation has been executed.

Then, the due date estimation information is set up on the basis of the shipping reservation order information used also as the order reservation information. More specifically, if the positively promised due date has not bee achieved on and before the desired due date, the schedule type may be changed over from backward type to forward type and the shipping reservation may be tried to calculate the earliest due date. Fig. 32 (F) illustrates content of the due date estimation order information serving also as the due date estimation information, in which the due date estimation information is set up.

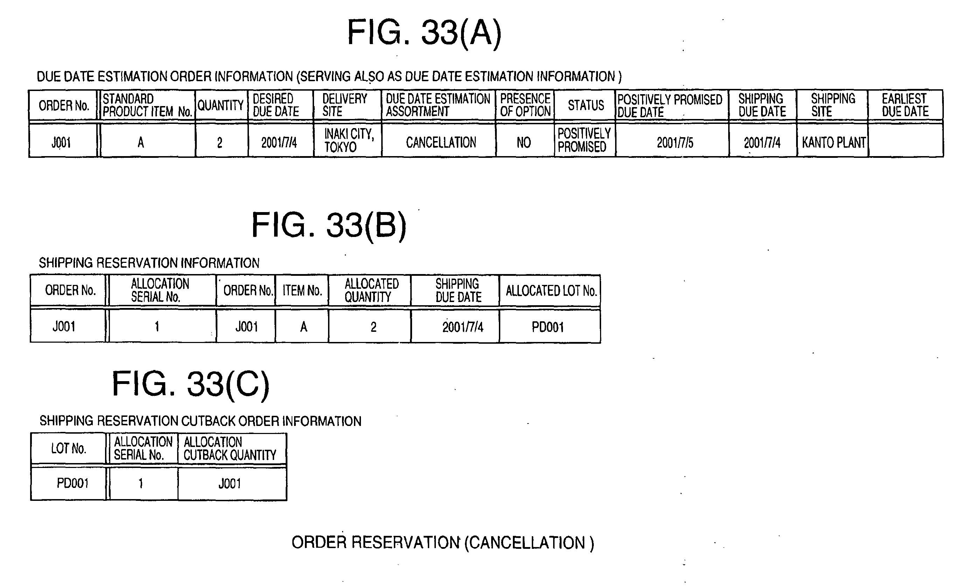

Fig. 33 is a diagram illustrating the order reservation in the case of cancellation. In the integrated capacity production seat reservation system, in addition to entry, modification and cancellation of the order reservation can be executed. The modification process can be realized by executing the entry process after cancellation process has been executed.

Supplied with the due date estimation order information used also as the due date estimation asking information (the due date estimation assortment: "cancellation") illustrated by Fig. 33 (A), the shipping reservation information which has been recorded is retrieved on the basis of the order No. Specifically, the order No. in the shipping reservation information is retrieved on the basis of the order No. in the due date estimation order information. Fig. 33 (B) illustrates content of the shipping reservation information retrieved in this manner.

The shipping reservation information is single and the number of allocation is 2. That is, the number of shipping reservation cut back from this shipping reservation information is 2. Based on the shipping reservation information and the cutback number of the shipping reservation, the shipping reservation cutback order information is created. Fig. 33 (C) illustrates content of the shipping reservation order information created in this manner. Based on this information, the shipping reservation cutback is executed. While the case of cancellation has been described above, entry may be newly executed after cancellation to achieve modification.

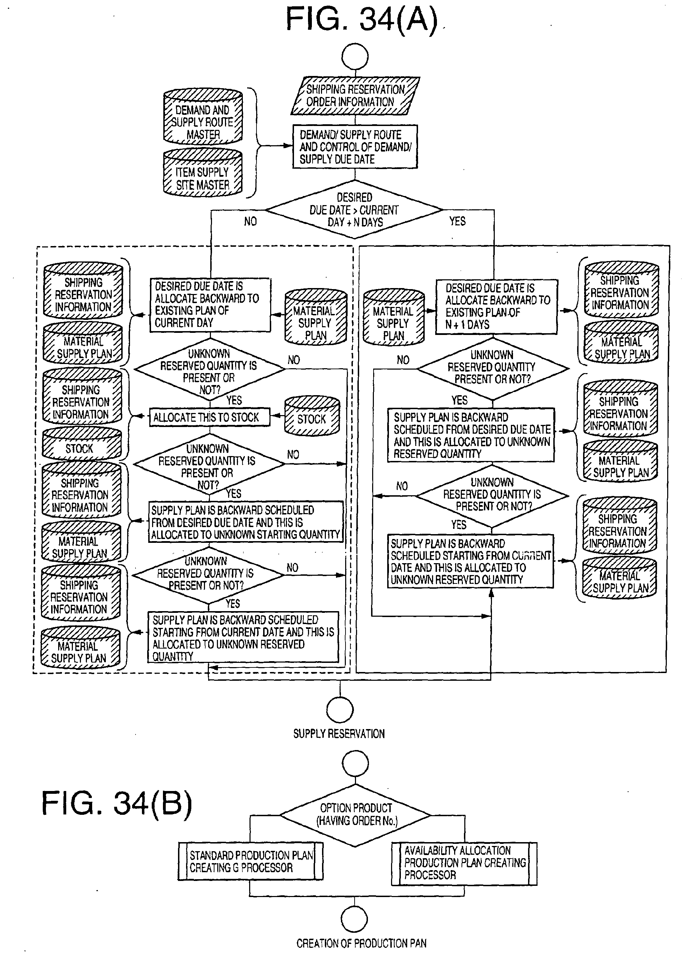

Now the shipping reservation process will be discussed. Fig. 34 is a flow chart illustrating the shipping reservation process. Fig. 34(B) illustrates creation of the production planning more in detail.

The shipping reservation processor makes reference to the demand/supply route master and the item supply route master to adjust the demand/supply route and the demand/supply due date. If the desired due date is N days before the desired due date, namely, before the standard production lead time, the shipping reservation processor makes allocation to the existing material supply planning, which is effective from the desired due date to the current date, in backward mode to create the shipping reservation information and thereby to update the allocation information in the material supply planning. If there is non-reserved quantity, the shipping reservation processor makes allocation to the stock in reference therewith to create the shipping reservation information and thereby to update the allocation information of the stock. If there is non-reserved quantity, the shipping reservation processor will backward schedule starting from the desired due date to create the material supply planning as well as the shipping reservation information and thereby to update the allocation information of the material supply planning.

If the desired due date is N days after the current date, namely, after the standard production lead time, the shipping reservation processor makes allocation to the existing material supply planning, which is effective from the desired due date to (current date + N days), in backward mode to create the shipping reservation information and thereby to update the allocation information of the material supply planning. If there is non-reserved quantity, the shipping reservation processor will backward schedule starting from the desired due date to create the material supply planning as well as the shipping reservation information and thereby to update the allocation information of the material supply planning. Alternatively, the shipping reservation processor will forward schedule starting from the current date to create the material supply planning as well as the shipping reservation information and thereby to update the allocation information of the material supply planning.

The production planning containing no order No., namely, the production planning for the standard specification product is created by the standard production creating processor and the production planning containing the order No., namely, the production planning for the option specification product is created by the availability allocated production planning creating processor (See Fig. 34(B)).

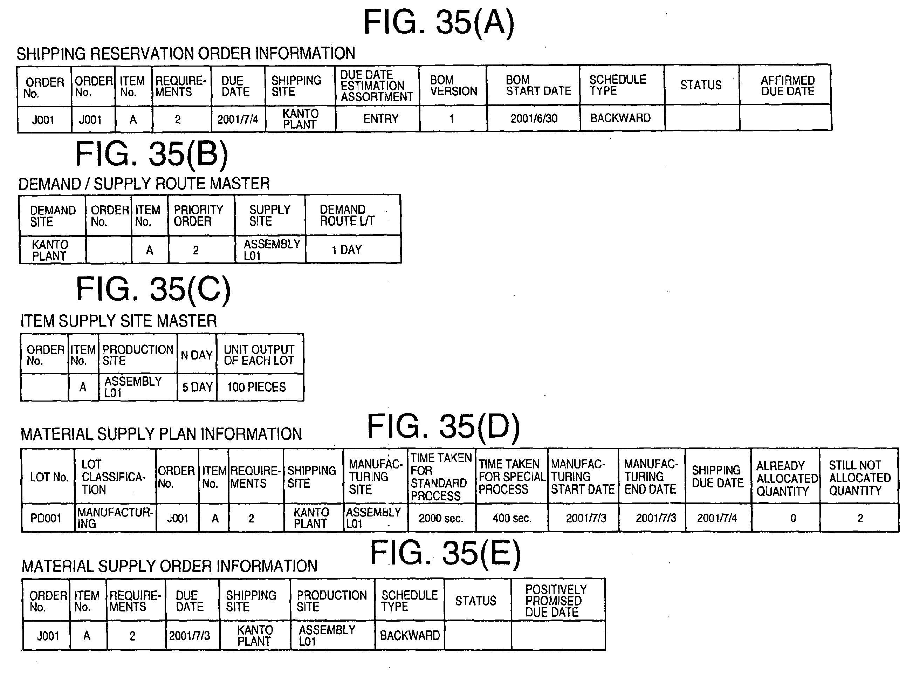

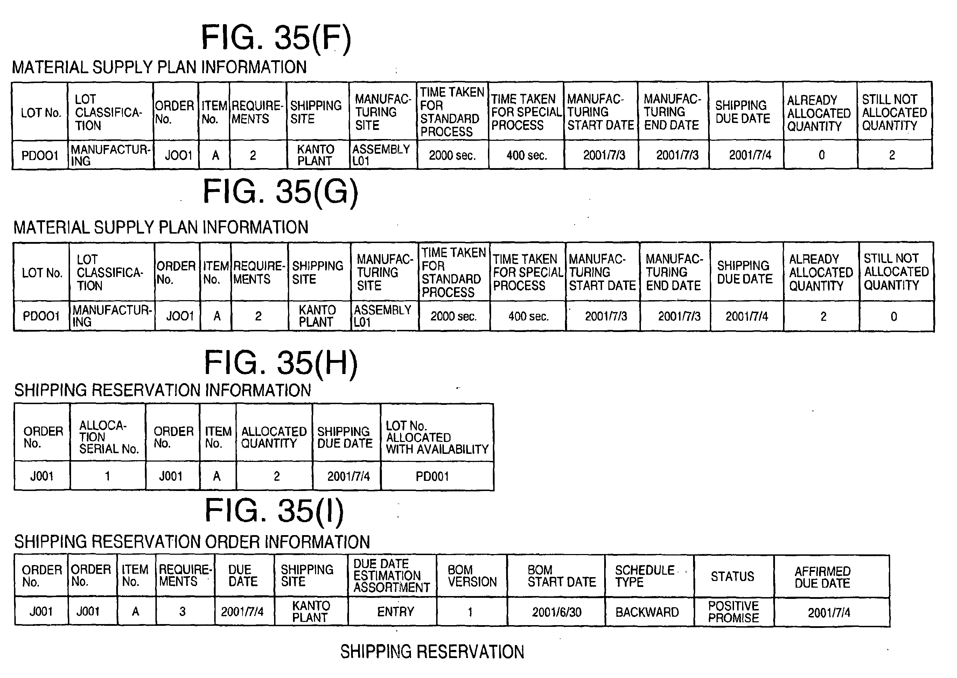

Fig. 35 is a diagram illustrating the shipping reservation, in which the content of the shipping reservation order information is illustrated by Fig. 35 (A) and the content of the demand/supply route master is illustrated by Fig. 35(B). The shipping reservation processor is responsive to the shipping reservation order information to adjust the demand/supply route and the demand/supply due date. The production site associated with the shipping site is determined by the demand/supply route master. In the case of the option specification product, reference is made to the record of the standard specification items. For example, if the demand site is Kanto plant, the assembly L01 will be determined as the supply site for the item No. "A".

The due date for production is calculated on the basis of the due date given by the shipping reservation order information and the demand/supply route L/T (lead time) given by the demand/supply route master. For example, the demand/supply route L/T: 1 day may be subtracted from the due date of July 4, 2001 given by the shipping reservation order information to calculate July 3, 2001 as the due date for production.

To achieve a timely supply reservation, the desired due date and N days, namely, the standard production L/T may be compared to each other. For example, if the desired due date is the current date, the stock will be allocated and, if the desired due date is within N days countered from the current date, the allocation will be made to the planning which is effective within N days countered from the current date. If the due date is later than N days countered from the current date, the allocation will be made to the planning which is effective until the desired due date on and after N days countered from the current date.

Fig. 35(C) illustrates content of the item supply site master. N days depend upon the item as well as the production site, so that these data are recorded in the item supply site master. Assumed that the quantity recorded in the shipping reservation order information exceeds unit output of each lot, for example, 100 pieces and therefore the shipping reservation can not be satisfied by the single lot, the quantity will be appropriately divided to be allocated to a plurality of lots in accordance with the priority order for timely supply. Now shipping allocation is carried out. For the shipping allocation, at least one of the material supply planning information and the stock information is extracted.

To extract the material supply planning information and the stock information properly corresponding to the shipping reservation order information for the standard specification product, following conditions (1) through (4) must be satisfied: (1) the order No. and the item No. recorded in the material supply planning information and the stock information should be in coincidence with those recorded in the shipping reservation order, respectively; (2) the shipping site recorded in the material supply planning information and the stock information should be in coincidence with that recorded in the shipping reservation order; (3) the shipping due date recorded in the material supply planning information and the stock information should be earlier than that recorded in the shipping reservation order; and (4) the number of allocations recorded in the material supply planning information and the stock information should be more than 0. The content of the material supply planning information after extraction has been carried out is illustrated by Fig. 35(D).

The conditions imposed to extraction of the material supply planning information and the stock information properly corresponding to the shipping reservation order information for the option specification product are same as those having been described above with respect to the standard specification product. However, if any lot for allocation is not found, a production planning, namely, a material supply planning information will be newly created. The material supply planning information for the option specification product is created on the basis of the shipping reservation order information (See Fig. 35(E)). This material supply order information may be input to the production planning creating processor to ensure the lot for allocation. If any order No. is not found, the standard production planning creating processor will get involved with creation and, if any order No. is found, the availability allocated production planning creating processor will get involved with creation.

Now the material supply planning information and the stock information are updated so that the shipping reservation order information may properly correspond to the material supply planning information as well as to the stock information. Fig. 35(F) illustrates content of the material supply planning information before updated and Fig. 35 (G) illustrates content of the material supply planning information after updated. The shipping reservation processor creates a new shipping reservation information on the basis of the material supply planning information and the stock information both updated in this manner. More specifically, the lot No. recorded in the material supply planning information and the stock information is modified so as to become coincident with the allocation lot No. recorded in the shipping reservation order information, on one hand, and the due shipping date recorded in the material supply planning information and the stock information is modified so as to become coincident with the due shipping date recorded in the shipping reservation order information, on the other hand. In addition, the quantity (quantity to be allocated) recorded in the shipping reservation order information is modified so as to be an increment to the already allocated quantity recorded in the material supply planning information and the stock information. If there are two or more lots requiring allocation, two or more sets of shipping reservation information will be created in accordance with the allocation serial Nos. (for example, 1, 2, 3, ...). Content of the shipping reservation information created in this manner is illustrated by Fig. 35(H).

Based on the shipper reservation information, the status is set up in the shipping reservation order information. Specifically, when the quantity recorded in the shipping reservation order information is entirely shipping reserved, the status is set up as "positively promised" and when not entirely shipping reserved, the status is set up as "not positively promised". The reserved due shipping date is set up as the positively promised due date. If there are two or more sets of shipping reservation information, the latest due shipping date will be set up as the due shipping date. Content of the shipping reservation order information in which the status and the due date have been set up is illustrated by Fig. 35(I).

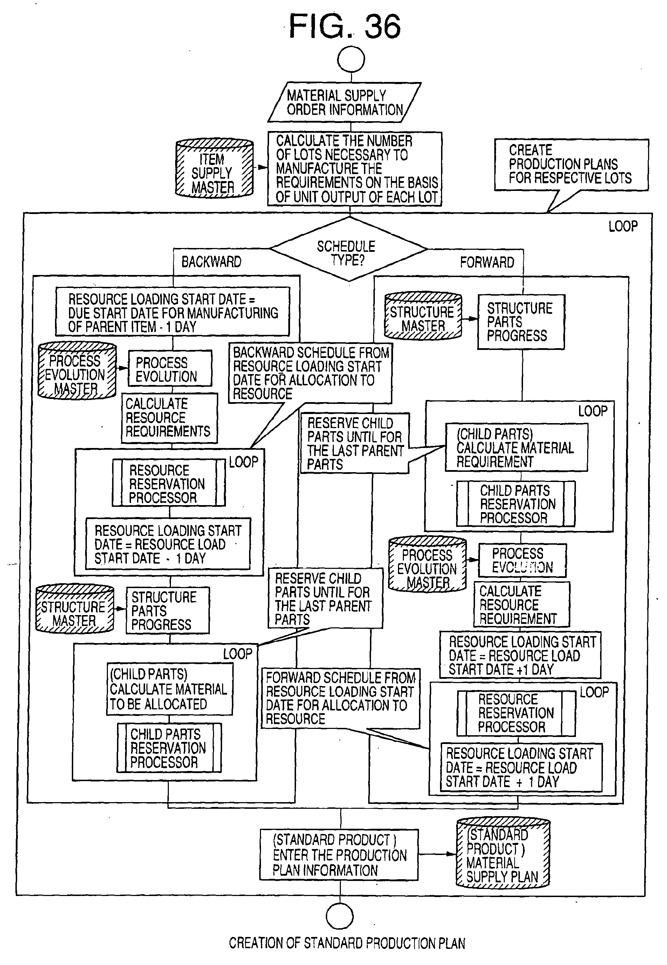

Now the process of the standard production planning will be explained. Fig. 36 is a flow chart illustrating creation of the standard production planning.

Upon receipt of the material supply order information in the process of the standard production planning, the requirements are converted to sum of individual outputs of respective lots and thereby the necessary number of lots is calculated. The production planning is repeatedly created for each of the necessary number of lots.

In the case of the standard production planning created by backward scheduling, the day preceding the due production start date is set up as the resources loading start date and then the process is evolved with reference to the process evolution master 1032 and thereby the requirements are calculated. The requirements are allocated to the resources by the resources reservation processor 2150 in backward scheduling mode starting from the resources loading start date so that the allocation may be repeated on the resources loading start date being decreased day by day.

Then the structure parts evolution is executed with reference to the structure master 1022 and the child parts reservation is continued until the last of the structure part. Specifically, the allocated quantity of the child parts is calculated and the child parts reservation is repeated by the child parts reservation processor 2152.

In the case of the standard production planning created by forward scheduling, the sequence on and after the process evolution as well as the sequence on and after the structure parts evolution is reverse to the case of backward scheduling. In other words, the structure parts evolution is executed with reference to the structure master 1022 and the child parts reservation is continued until the last of the structure parts. More specifically, the allocated quantity of the child parts is calculated and the child parts reservation is repeated by the child parts reservation processor 2152.

Now the process is evolved with reference to the process evolution master 1032 in order to calculate the resources requirements and the day following the latest due date of the child item is set up as the resources loading start date. The requirements are allocated to the resources by the resources reservation processor 2150 in forward scheduling mode starting from the resources loading start date so that the allocation may be repeated on the resources loading start date being increased day by day.

By backward scheduling or forward scheduling in this manner, the production planning entry information of the standard specification is recorded as the material supply planning for the standard specification product.

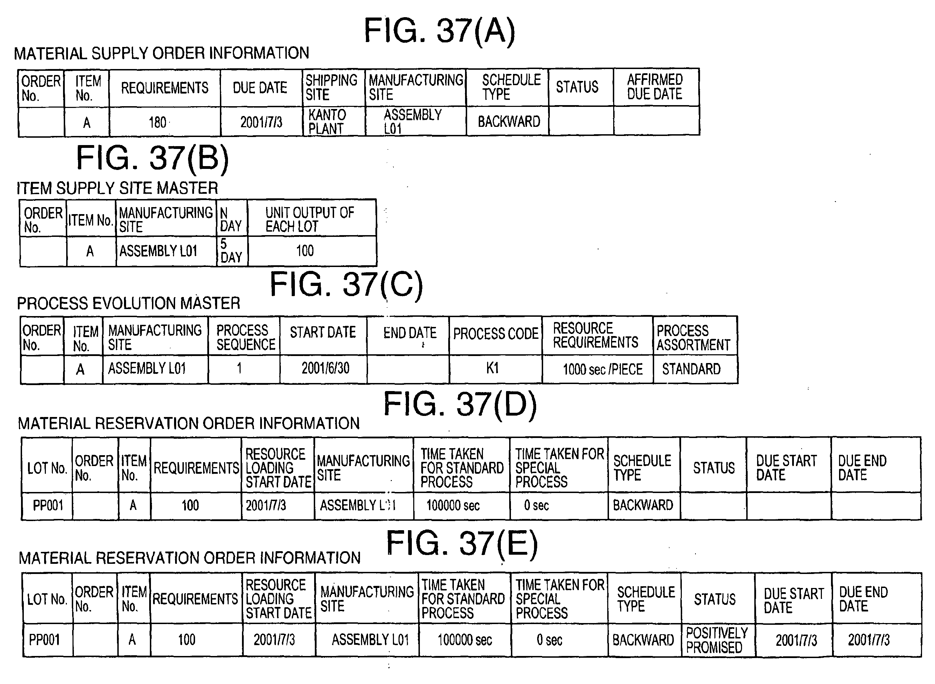

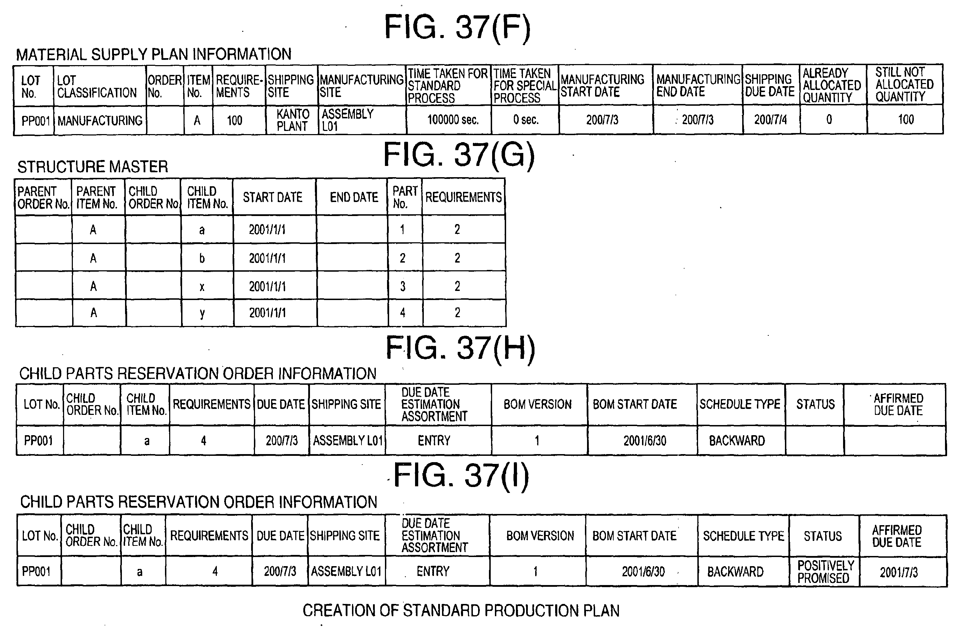

Fig. 37 is a diagram illustrating creation of the standard production planning by backward scheduling. Fig. 37 (A) illustrates content of the material supply order information. Based on this material supply order information, unit output of each production lot is extracted from the item site master (See Fig. 37(B)).

Based on the quantity and the production lots recorded in the material supply order information, the necessary number of lots is calculated. In the illustrated example, the necessary number of lots is 2. These necessary lots are designated by respective lot Nos. As the lot Nos., for example, "PP001" and "PP101" are used.

Under conditions (1) through (3) as set forth below, the process information is extracted from the process evolution master 1032 (See Fig. 37(C)): (1) the order No. and the item No. recorded in the process evolution master should be in coincidence with those recorded in the material supply order, respectively; (2) the production site recorded in the process evolution master should be in coincidence with that recorded in the material supply order; and (3) the asking date should be on and after the start date recorded in the process evolution master but before the end date recorded in the process evolution master. In extraction of the process information, time of 1000 seconds required for standard process and time of 0 second required for special process are calculated from the process evolution master 1032.

After extraction of the process information, the resources reservation order information is created in association with respective lots. Specifically, (1) the number of lots is set up as the quantity to be recorded in the resources reservation order information. (2) the time required to manufacture the quantity in the standard process is set up as time taken for the standard process to be recorded in the resources reservation order information. (3) the time required to manufacture the quantity in the special process as time taken for the special process to be recorded in the resources reservation order information. (4) the due date recorded in the resources supply order information is set up as resources loading start date to be recorded in the resources reservation order information. Content of the resources reservation order information created in this manner is illustrated by Fig. 37(D). After the resources reservation order information has been created, the resources reservation order information is input to the resources reservation processor and the resources reservation is executed. The resources reservation processor sets the data as set forth below as the resources reservation order information. When the quantity recorded in the resources reservation order information has entirely been resources-reserved, the status is set up as "positively promised" and, when not entirely been resources-reserved, the status is set up as "not positively promised". The resources-reserved resources loading date is set up as the production start date and the production end date. For example, in the case of the resources reservation spanning a plurality of days such as the lot requiring continuous two or more days, the earliest resources loading day us set up as the production start date and the latest resources loading day is set up as the production end date. Content of the resources reservation order information after resources has been reserved is illustrated by Fig. 37(E).

Then the resources supply planning information is created on the basis of the resources reservation order information. Specifically, (1) the lot classification in the material supply planning information is set up as "production" and, in the case of the purchase planning, the lot classification is set up as "purchase"; (2) the day following the due production end date recorded in the resources reservation order information is set up as the due shipping date to be recorded in the material supply planning information; (3) the already allocated quantity to be recorded in the material supply planning information is set up as "0"; (4) the unallocated quantity to be recorded in the material supply planning information is set up to be same as the quantity; and (5) the other data are set up to be same as corresponding data recorded in the resources reservation order information. Content of the material supply planning information created in this manner is illustrated by Fig. 37(F).

Creation of the material supply planning information is followed by evolution of the structure parts. Specifically, under conditions (1) and (2) set forth below, the child parts structure information is extracted from the structure master: (1) the parent order No. as well as the parent item No. in the structure master should be the order No. and the item No. recorded in the material supply planning information, respectively; and (2) the asking date should be on and after the start date but before the end date recorded in the structure master. Content of the structure master after the child parts structure information has been extracted is illustrated by Fig. 37(G).

Then, requirements of respective child parts are calculated from quantity recorded in the material supply order information and requirements recorded in the structure information for each child part to create the child parts reservation order information. In creation of the child parts reservation order, (1) the requirements for the child parts are set up as the quantity to be recorded in the child parts reservation order information and (2) the day preceding the due production start date recorded in the material supply planning information is set up as the due date to be recorded in the child parts reservation order information both on the basis of the material supply planning information and the child parts structure information. Content of the child parts reservation order information created in this manner is illustrated by Fig. 37(H). Creation of the child parts reservation order information is followed by the child parts reservation. In the child parts reservation, the child parts reservation order information is input to the child parts reservation processor which, in turn, sets up the data as will be described below as the child parts reservation information. If the whole quantity recorded in the child parts reservation order has been reserved, the child parts reservation processor will set up the status as "positively promised" and, if not, will set up as "not positively promised". The child parts reservation processor sets up the child parts reserved due date as the positively promised due date and, if there are two or more sets of child parts reservation information, the child parts reservation processor sets up the latest child parts reservation date as the positively promised due date. Content of the child parts reservation order information after the child parts have been reserved is illustrated by Fig. 37(I).

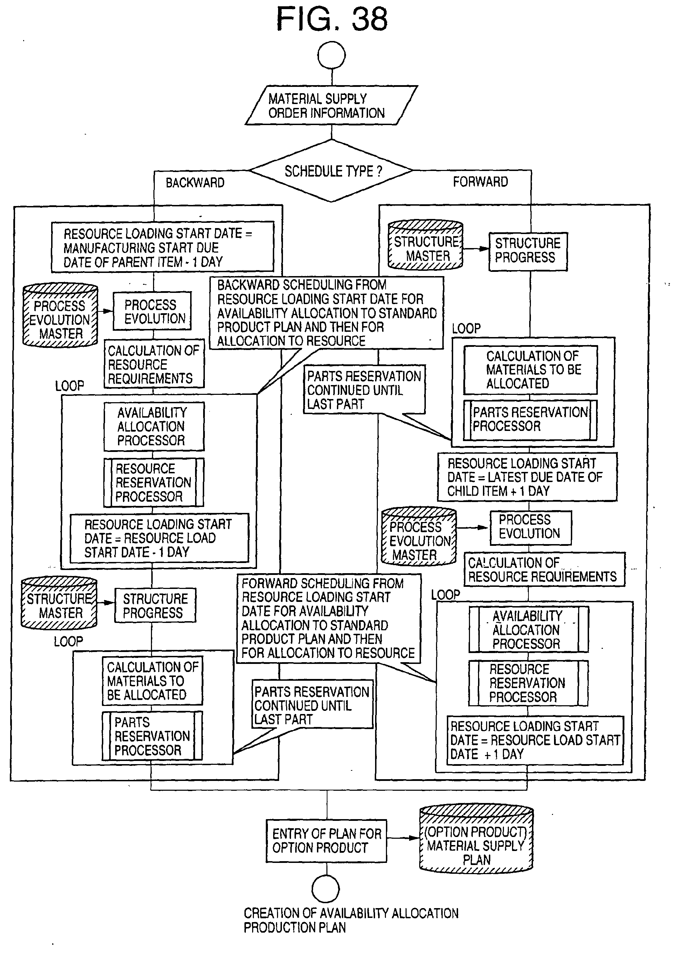

Now the process of the availability allocated production planning will be explained. Fig. 38 is a flow chart illustrating creation of the availability allocated production planning.

Upon receipt of the material supply order information in the process of the availability allocated production planning, the requirements are converted to sum of individual outputs of respective lots and thereby the necessary number of lots is calculated. In the availability allocated production planning process, the production planning is repeatedly created for each of the necessary number of lots.

In the case of the availability allocated production planning created by backward scheduling, the day preceding the due production start date is set up as the resources loading start date and then the process is evolved with reference to the process evolution master 1032 and thereby the requirements are calculated. The requirements are allocated to the resources by the resources reservation processor 2150 in backward scheduling mode starting from the resources loading start date so that the allocation may be repeated on the resources loading start date being decreased day by day.

Then the structure parts evolution is executed with reference to the structure master 1022 and the child parts reservation is continued until the last of the structure part. Specifically, the allocated quantity of the child parts is calculated and the child parts reservation is repeated by the child parts reservation processor 2152.

In the case of the availability allocated production planning created by forward scheduling, the sequence on and after the process evolution as well as the sequence on and after the structure parts evolution is reverse to the case of backward scheduling. In other words, the structure parts evolution is executed with reference to the structure master 1022 and the child parts reservation is continued until the last of the structure parts. More specifically, the allocated quantity of the child parts is calculated and the child parts reservation is repeated by the child parts reservation processor 2152.

In the process of the availability allocated production planning, the process is evolved with reference to the process evolution master 1032 in order to calculate the resources requirements and the day following the latest due date of the child item is set up as the resources loading start date. Then the availability allocation is executed by the availability allocation processor 2148 and the requirements arc allocated to the resources by the resources reservation processor 2150 in forward scheduling mode starting from the resources loading start date so that the allocation may be repeated on the resources loading start date being increased day by day.

By backward scheduling or forward scheduling in this manner, the production planning entry information of the option specification product is recorded as the material supply planning for the option specification product.

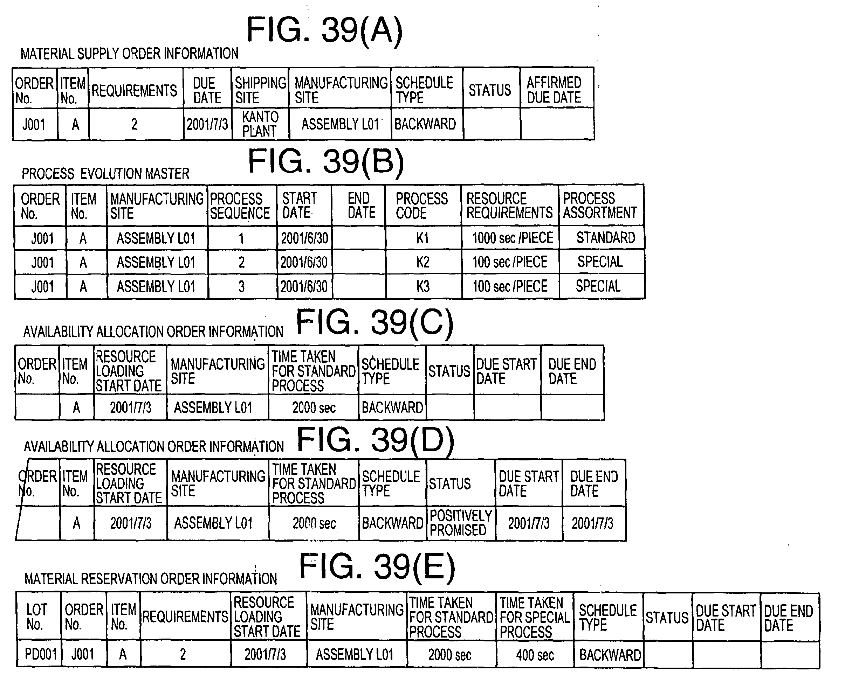

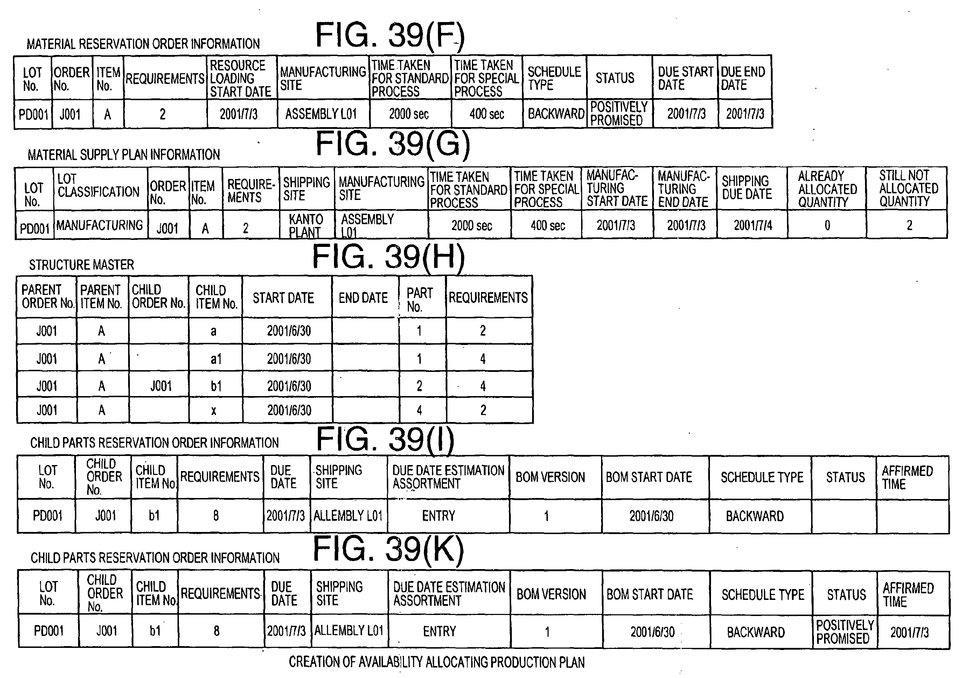

Fig. 39 is a diagram illustrating creation of the availability allocated production planning by backward scheduling. Fig. 39(A) illustrates content of the material supply order information. In creation of the availability allocated production planning, the necessary number of lots (1 in this case) is calculated on the basis of the material supply order information and this is designated by lot No. "PD001".

Under conditions (1) through (3) as set forth below, the process information is extracted from the process evolution master 1032 (See Fig. 39(B)): (1) the order No. and the item No. recorded in the process evolution master 1032 should be in coincidence with those recorded in the material supply order, respectively; (2) the production site recorded in the process evolution master 1032 should be in coincidence with that recorded in the material supply order; and (3) the asking date should be on and after the start date recorded in the process evolution master 1032 but before the end date recorded in the process evolution master1032.

In extraction of the process information, time of 1000 seconds required for standard process and time of 200 seconds required for special process are calculated from the process evolution master 1032.

Now the availability allocation information is created on the basis of the resources supply order information. Specifically, (1) the order No. in the availability information is set up to be blank, namely, to mean the standard specification product; (2) the time required to manufacture the quantity in the standard process recorded in the material supply order information is set up as the time occupied by the standard process to be recorded in the availability allocation order information; and (3) the day preceding the material supply order information is set up as the resources loading starting date to be recorded in the availability allocation order information. The other data are set up to be same as corresponding data recorded in the material supply order information. Content of the availability allocation order information created in this manner is illustrated by Fig. 39(C).

In response to the availability allocation order information, the availability allocation processor sets up the status as "positively promised" when whole quantity recorded in the availability allocation order information has been availability allocated and sets up the status as "not positively promised" when no availability allocation has been executed. In addition, the availability allocation processor sets up the due production start date and the due production end date of the lot which has been availability allocated. The availability allocation order information containing the status and the due date set up in this manner is illustrated by Fig. 39(D).

Now the resources reservation will be described more in detail. For the resources reservation, in the first place, the resources reservation order information is created. To this end, the resources reservation order information is created in association with respective lots. Specifically, (1) the number of lots is set up as the quantity to be recorded in the resources reservation order information. (2) the time required to manufacture the quantity in the standard process is set up as time taken for the standard process to be recorded in the resources reservation order information. (3) the time required to manufacture the quantity in the special process as time taken for the special process to be recorded in the resources reservation order information. (4) the day preceding due date recorded in the resources supply order information is set up as resources loading start date to be recorded in the resources reservation order information. Content of the resources reservation order information created in this manner is illustrated by Fig. 39(E).

After the resources reservation order information has been created, the resources reservation order information is input to the resources reservation processor and the resources reservation is executed. The resources reservation processor sets the data as set forth below as the resources reservation order information. When the quantity recorded in the resources reservation order information has entirely been resources-reserved, the status is set up as "positively promised" and, when not entirely been resources-reserved, the status is set up as "not positively promised". The resources-reserved resources loading date is set up as the production start date and the production end date. For example, in the case of the resources reservation spanning a plurality of days such as the lot requiring continuous two or more days, the earliest resources loading day is set up as the production start date and the latest resources loading day is set up as the production end date. Content of the resources reservation order information after resources has been reserved is illustrated by Fig. 39(F).

Then the resources supply planning information is created on the basis of the resources reservation order information. Specifically, (1) the lot classification in the material supply planning information is set up as "production" and, in the case of the purchase planning, the lot classification is set up as "purchase"; (2) the day following the due production end date recorded in the resources reservation order information is set up as the due shipping date to be recorded in the material supply planning information; (3) the already allocated quantity to be recorded in the material supply planning information is set up as "0"; (4) the unallocated quantity to be recorded in the material supply planning information is set up to be same as the quantity; and (5) the other data are set up to be same as corresponding data recorded in the resources reservation order information. Content of the material supply planning information created in this manner is illustrated by Fig. 39(G).

Creation of the material supply planning information is followed by evolution of the structure parts. Specifically, under conditions (1) and (2) set forth below, the child parts structure information is extracted from the structure master: (1) the parent order No. as well as the parent item No. in the structure master should be in coincidence with the order No. and the item No. recorded in the material supply planning information, respectively; and (2) the asking date should be on and after the start date but before the end date recorded in the structure master. Content of the structure master after the child parts structure information has been extracted is illustrated by Fig. 39(H). In the structure parts evolution, requirements of respective child parts are calculated on the basis of the quantity recorded in the material supply order information and the requirements recorded in the respective child parts structure information.

Now the child parts reservation order information is created and the child parts reservation is executed. In creation of the child parts reservation order, (1) the requirements for the child parts are set up as the quantity to be recorded in the child parts reservation order information and (2) the day preceding the due production start date recorded in the material supply planning information is set up as the due date to be recorded in the child parts reservation order information both on the basis of the material supply planning information and the child parts structure information. Content of the child parts reservation order information created in this manner is illustrated by Fig. 39(I).

In the child parts reservation, the child parts reservation order information is input to the child parts reservation processor which, in turn, sets up the data as will be described below as the child parts reservation information. If the whole quantity recorded in the child parts reservation order has been reserved, the child parts reservation processor will set up the status as "positively promised" and, if not, will set up as "not positively promised". The child parts reservation processor sets up the child parts-reserved due date as the positively promised due date and, if there are two or more sets of child parts reservation information, the child parts reservation processor sets up the latest child parts reservation date as the positively promised due date. Content of the child parts reservation order information after the status and the due date have been set up is illustrated by Fig. 39(J).

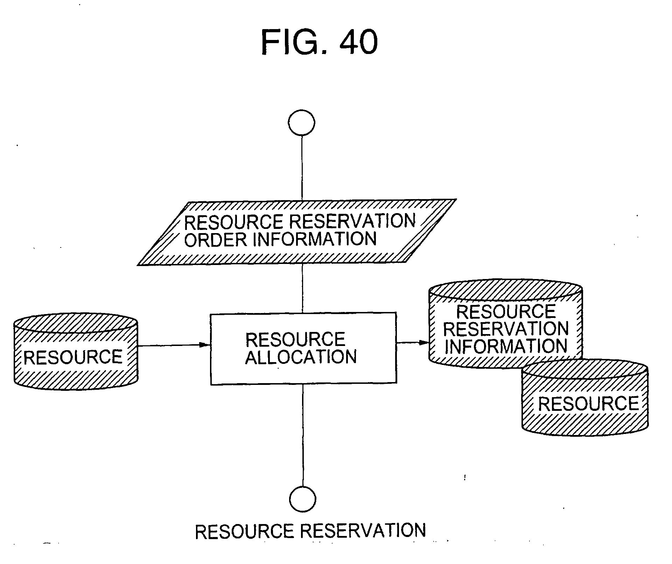

Fig. 40 is a flow chart illustrating resources reservation. In response to the resources reservation order information, the resources reservation processor 2150 makes reference to the resources in order to execute the resources reservation and thereby to update the resources.

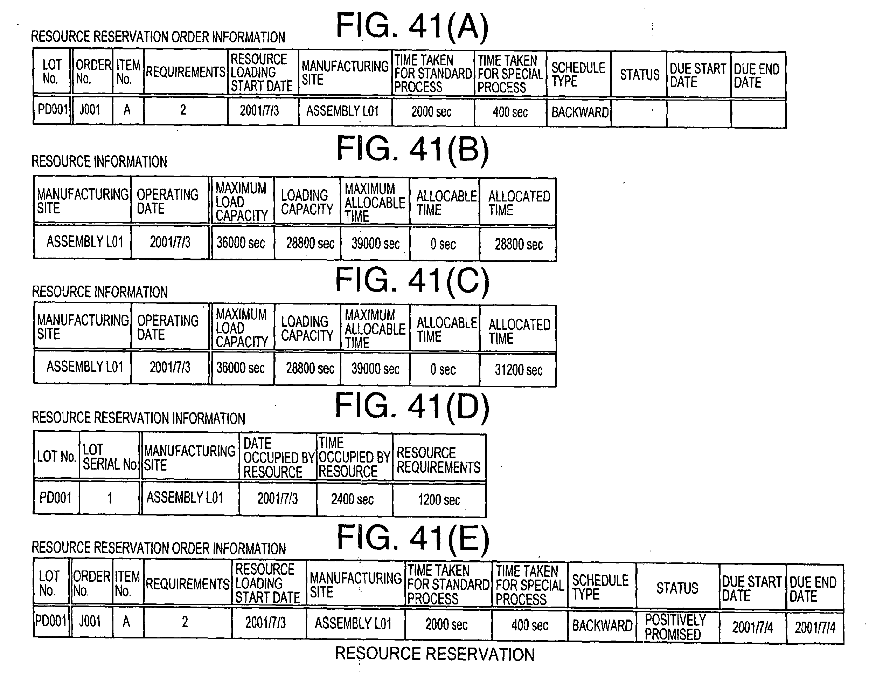

Fig. 41 is a diagram illustrating the resources reservation, in which Fig. 41(A) illustrates content of the resources reservation order information. Upon receipt of the resources reservation order information, the resources reservation processor retrieves the resources to be allocated from the resources information under conditions (1) through (3) as will be described below: (1) the production site recorded in the resources information should be in coincidence with that recorded in the resources reservation order information; (2) the operation date resources recorded in the resources information should be in coincidence with the resources loading start date recorded in the reservation order information and (3) the allocable time recorded in the resources information should be equal to or more than a sum of the time occupied by the standard process and the time occupied by the special process both recorded in the resources reservation order information. If these conditions are not satisfied, the resources information on the day following the operation date may be retrieved and, provided that the already allocated time resources is 0, a resources allocation spanning two or more days may be allowed. In the case of allocation based on an order, it is possible to allocate the time resources within a range of the maximum allocable time. Content of the resources information before allocation is illustrated by Fig. 41(B) and content of the resources information after allocated is illustrated by Fig. 41(C).

Based on the resources reservation order information and the resources to be allocated, the resources reservation information is created. Content of the resources reservation information created in this manner is illustrated by Fig. 41(D).

Based on the resources reservation information, the resources reservation processor sets up the status in the resources reservation order information. Specifically, when the whole quantity recorded in the resources reservation order information serving also as the material supply planning information has been resources-reserved, the resources reservation processor sets up the status as "positively promised" and, if not, as "not positively promised". The reserved resources loading date is set up as the due production start date and the due production end date. For example, if there are two or more sets of the resources reservation information such as a lot spanning two or more days, the earliest resources loading date is set up as the due production start date and the latest resources loading date is set up as the due production end date. Content of the resources reservation order information containing the status and the due date having been set up is illustrated by Fig. 41(E).

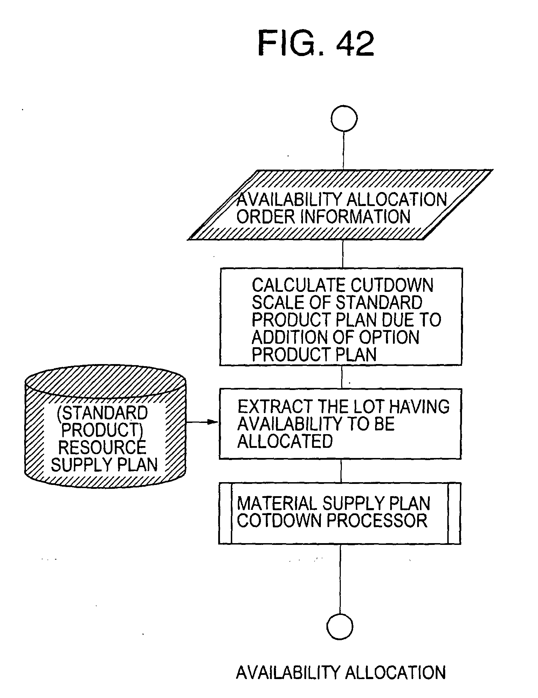

Fig. 42 is a flow chart illustrating the availability allocation process. In response to the availability allocation order information, the availability allocation processor 2148 calculates a quantity for the standard specification product planning by which is to be cutback as the option product planning is added. The availability allocation processor 2148 extracts the lot to be availability allocated and proceeds to the material supply planning cutback process.

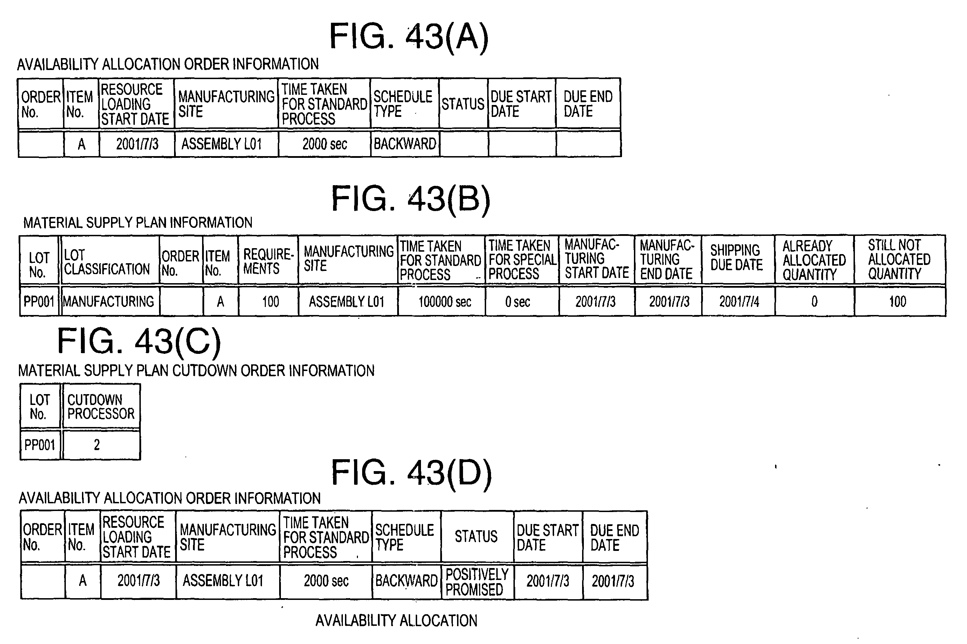

Fig. 43 is a diagram illustrating the process of the availability allocation, in which Fig. 43(A) illustrates content of the availability allocation order information and Fig. 43 (B) illustrates content of the material supply planning information. In response to the availability allocation order information, the availability allocation processor 2148 extracts the lot to be availability allocated from the material supply planning information under conditions (1) through (5) set forth below: (1) the lot classification recorded in the material supply planning information should be "production"; (2) the order No. and the item No. recorded in the material supply planning information and the stock information should be in coincidence with those recorded in the availability allocation order information, respectively; (3) the resources loading start date recorded in the material supply planning information should be in coincidence with that recorded in the availability allocation order information; (4) the already allocated quantity should be equal to or more than the quantity calculated by subtracting the planned cutback quantity from the requirements; and (5) the time occupied by the standard process recorded in the material supply planning information should be equal to or longer than the time occupied by the standard process recorded in the availability allocation order information. It should be understood here that the planned cutback quantity is calculated by the following formula:

$$\frac{\text{time occupied by standard process recorded in availability allocation order information}}{\text{time occupied by standard process recorded in planning information/quantity}}$$

Fig. 43(C) illustrates content of the material supply planning cutback order information. The material supply planning cutback order information and the planning information are input to the material supply planning cutback processor. The material supply planning cutback processor is responsive to them to cutback the planned material supply for the lot to be availability allocated.

The material supply planning cutback processor sets up the status in the availability allocation order information. If the whole quantity recorded in the availability allocation order has been availability allocated, the status is set up as "positively promised" and, if not, up as "not positively promised". In addition, a due production start date and a due production end date of the availability allocated planning lot is set up as the due production start date and the due production end date, respectively. Fig. 43(D) illustrates content of the availability allocation order information containing the status and the due dates having been set up in this manner.

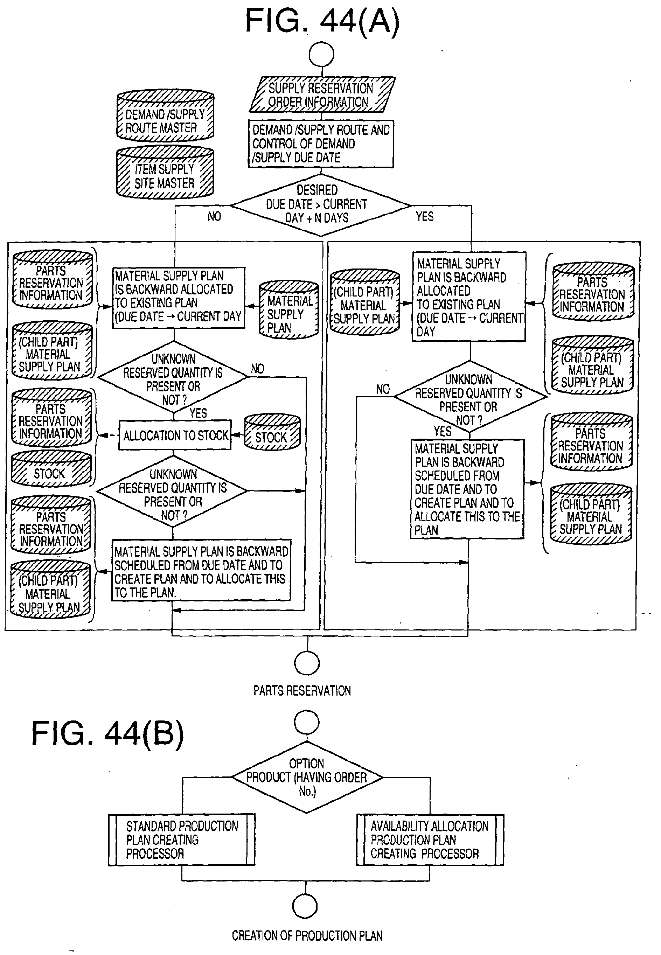

Fig. 44 is a flow chart illustrating the child parts reservation, in which Fig. 44(B) illustrates the production planning more in detail. In response to the child parts reservation order information, the child parts reservation processor 2152 makes reference to the demand/supply route master and the item supply site master in order to adjust the demand/supply route and the demand/supply due date.

If the desired due date is N days before the desired due date, namely, before the standard production lead time, the allocation information recorded in the material supply planning for the child parts is updated in backward scheduling mode on the basis of the material supply planning for the child parts, which is effective for the period from the due date to the current day, to update the allocation information in the material supply planning for the child parts and thereby to create the child parts reservation information. If there is non-reserved quantity, the material supply planning for the child parts is created in backward scheduling mode and the child parts reservation information is created. Thus the allocation information recorded in the material supply planning for the child parts is updated.

For the standard specification product (having no order No.), the standard production planning processor creates the planning. For the option specification product (having an order No.), the availability allocated production planning processor creates the planning.

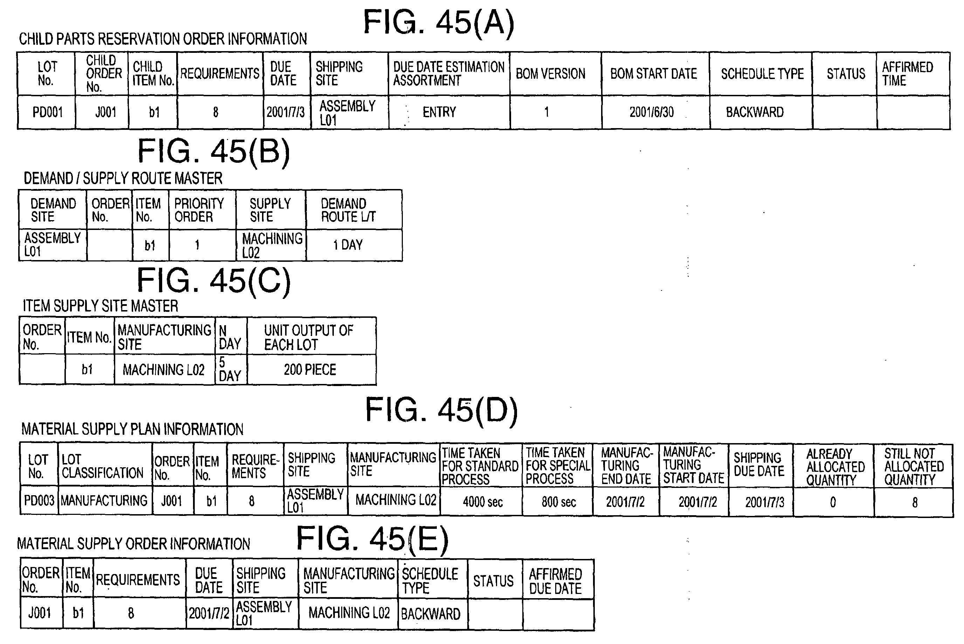

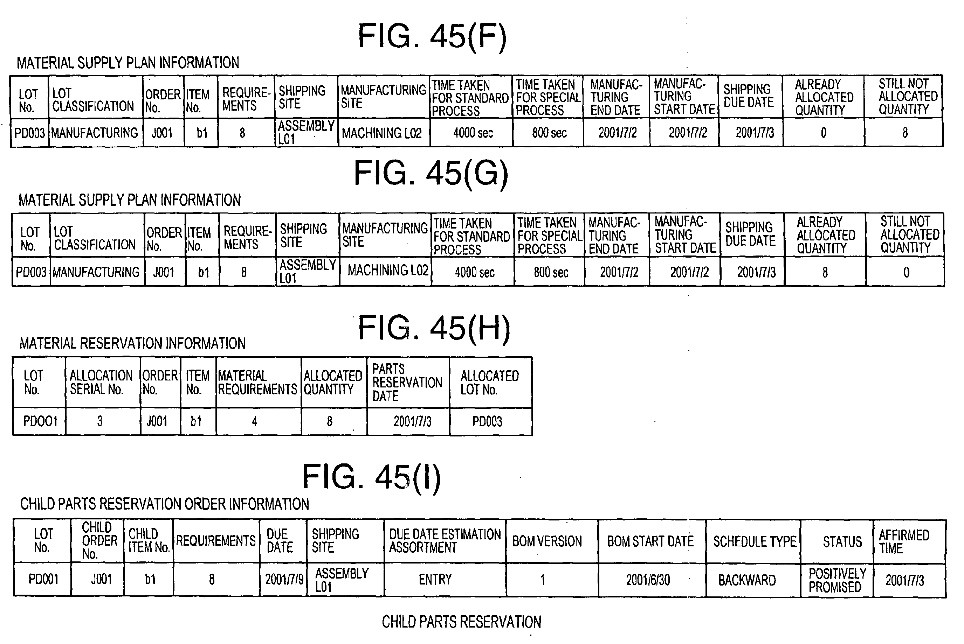

Fig. 45 is a diagram illustrating the process of the child parts reservation, in which Fig. 45(A) illustrates content of the child parts reservation order information. The child parts reservation processor 2152 makes reference to the demand/supply route master illustrated by Fig. 45(B) to determine the production site associated with the shipping site. In the case of the option item, the child parts reservation processor 2152 makes reference to the record of the standard specification product (the order No. is blank). For example, if the demand site is the assembly L01, the supply site for the item No. "b1" will be the assembly L02. The due production date is calculated on the basis of the due date recorded in the child parts reservation order information and the demand/supply route lead time recorded in the demand/supply master. In the illustrated example, July 2, 2001 is calculated as the day preceding July 3, 2001.

The child parts reservation processor 2152 compares the due date (due operation date of upper rank lot) to N days (standard production lead time) to execute the timely supply reservation. For example, if the due date is the current day, the stock will be allocated. If the due date is within "the current day + N days", allocation will be made to the planning within "the current date + N days". If the due date is N days after the current day, allocation will be made to the planning which is effective from "the current date + N days". N days (standard production lead time) depends on the item and the production site and is stored in the item supply site master. In the case of the option item, reference is made to the record of the standard specification product (the order No. is blank). Content of the item supply master is illustrated by Fig. 45(C).

If the quantity recorded in the child parts reservation order information exceeds the output of the lot, for example, 200 pieces and therefore the child parts reservation can not be satisfied by the single lot, the allocation will be divided into a plurality of the planned lots in accordance with the priority order for the timely supply.

In most cases of the allocation from the standard specification product, the parts reservation order information will be allocated to the existing planning or the stock. Specifically, under conditions (1) through (4) set forth below, the lot to be provided with allocation is extracted from the material supply planning information or the stock information. Entry fields contained in the material supply planning information are substantially same as those contained in the stock information. The conditions are: (1) the order No. as well as the item No. contained in the material supply planning information and the stock information should be in coincidence with those contained in the child parts reservation order information, respectively; (2) the shipping site recorded in the material supply planning information and the stock information should be that recorded in the child parts reservation order information; (3) the due shipping date recorded in the material supply planning information and the stock information should be earlier than the due date recorded in the child parts reservation order information; and (4) the unallocated quantity recorded in the material supply planning information and the stock information should exceed 0. Fig. 45(D) illustrates content of the material supply planning information after the lot to be provided with allocation has been extracted.

In most cases of the allocation with the option specification product, the parts reservation order information will be allocated to the production planning after this production planning has been created. If there is not any lot to be provided with allocation, the production planning (material supply planning information) will be created. The material supply order information is created from the child parts reservation order information. Content of the material supply order information created in this manner is illustrated by Fig. 45(E). This material supply order information is input to the production planning creating processor in order to assure the allocation receiving lot. If no order No. is found, the material supply planning order information will be input to the standard production planning creating processor. If any order No. is found, the material supply planning order information will be input to the availability allocated production creating processor.

The child parts reservation processor 2152 updates the allocation receiving lot. Fig. 45(F) illustrates content of the material supply planning information before updated and Fig. 45(G) illustrates content of the material supply planning information after updated.

Based on the allocation receiving lot, the child parts reservation processor 2152 creates the child parts reservation information. Specifically, (1) the lot to be provided with allocation recorded in the child parts reservation information is designated by the allocation receiving Lot No.; (2) the due shipping date for the allocation receiving lot is set up as the child parts reservation date to be recorded in the child parts reservation information; and (3) the quantity allocated to the allocation receiving lot is set up as the allocated quantity to be recorded in the child parts reservation information. If there are two or more allocation receiving lots, two or more sets of child parts reservation information will be created and designated by respective allocation serial Nos. (for example, 1, 2, 3,...) with respect to the same kind of child parts. Fig. 45(H) illustrates content of the child parts reservation information created in this manner.

Based on the child parts reservation order information and the child parts reservation information, the child parts reservation processor 2152 sets up the status in the child parts reservation order. Specifically, if whole quantity recorded in the child parts reservation order information has been shipping-reserved, the status is set up as "positively promised" and, if not, as "not positively promised". In addition, the child parts reservation processor 2152 sets up the due date for the reserved child parts. If two or more sets of child parts reservation information, the latest child parts reservation date is set up as the due date. Fig. 45(I) illustrates the child parts reservation order information containing the status and the due date having been set up in this manner.

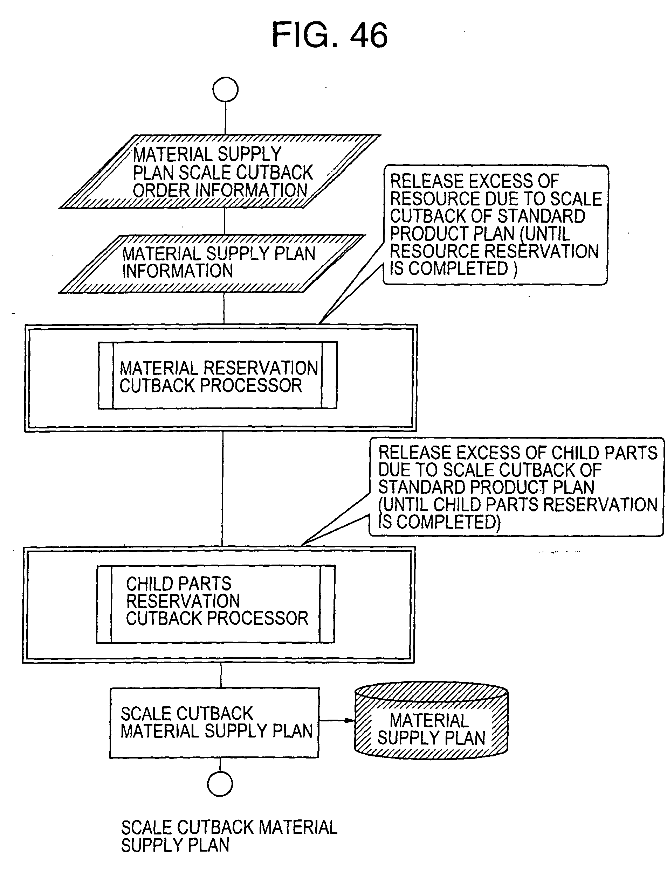

Now the material supply planning cutback process will be explained. Fig. 46 is a flow chart illustrating the material supply planning cutback process. In response to the material supply planning cutback order information and the material supply planning information, the child parts reservation cutback processor 2184 repeats the resources liberation due to the standard specification product planning cutback until the last set of resources reservation information. The child parts reservation cutback processor 2184 also repeats the child parts liberation due to the standard specification product planning cutback until the last set of child parts reservation information. In this way, the resources supply planning is cutback and the result is recorded in the material supply planning.

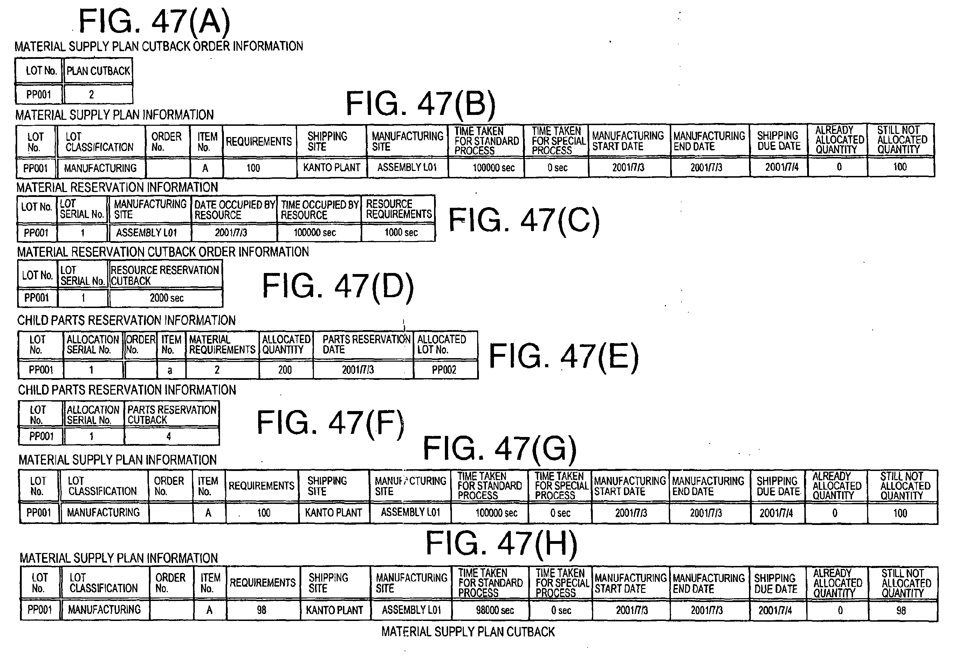

Fig. 47 is a diagram illustrating a process of the resource supply planning cutback, in which Fig. 47 (A) illustrate content of the resource supply planning cutback order information and Fig. 47(B) illustrate content of the resource supply planning information.

The resource reservation cutback processor 2184 retrieves the resource reservation information under conditions (1) through (3) set forth below (See Fig. 47(C)): (1) the lot No. recorded in the resource reservation information should be in coincidence with the lot No. recorded in the material supply planning information; (2) the production site recorded in the resource reservation information should be in coincidence with the production site recorded in the material supply planning information; and (3) the date occupied by the resource recorded in the resource reservation information should be in coincidence with the due production start date recorded in the material supply planning information.

The resource reservation cutback processor 2184 multiplies the planned cutback quantity recorded in the material cutback order information by the resource requirement, i.e., 1000 seconds recorded in the resource reservation information to calculate the resource reservation cutback time. The resource reservation cutback processor 2184 creates the resource reservation cutback order information on the basis of the resource reservation and the resource reservation cutback time. Content of the resource reservation cutback order information created in this manner is illustrated by Fig. 47 (D) . The resource reservation cutback processor 2184 inputs the resource reservation order information to the resource reservation cutback processor to execute the resource reservation cutback.

The child parts reservation cutback processor retrieves the child parts information (See Fig. 47(E)) provided that the lot No. recorded in the child parts reservation information coincides with the lot No. recorded in the material supply planning information.

The child parts reservation cutback processor multiplies the planned cutback quantity recorded in the material cutback order information by the material requirement recorded in the child part reservation information, i.e., 2 to calculate the child parts cutback quantity. The child parts reservation cutback processor creates the child parts reservation cutback order information on the basis of the child parts reservation information and the child parts reservation cutback quantity. Content of the child parts reservation cutback order information created in this manner is illustrated by Fig. 47 (F).

The child parts reservation cutback processor inputs the child parts reservation cutback order information to the child parts reservation cutback processor to execute the child parts reservation cutback. The child parts reservation cutback processor, in turn, updates the material supply planning information on the basis of the material cutback order information. Content of the material supply planning information before updated is illustrated by Fig. 47 (G) and the material supply planning information after updated is illustrated by Fig. 47(H).

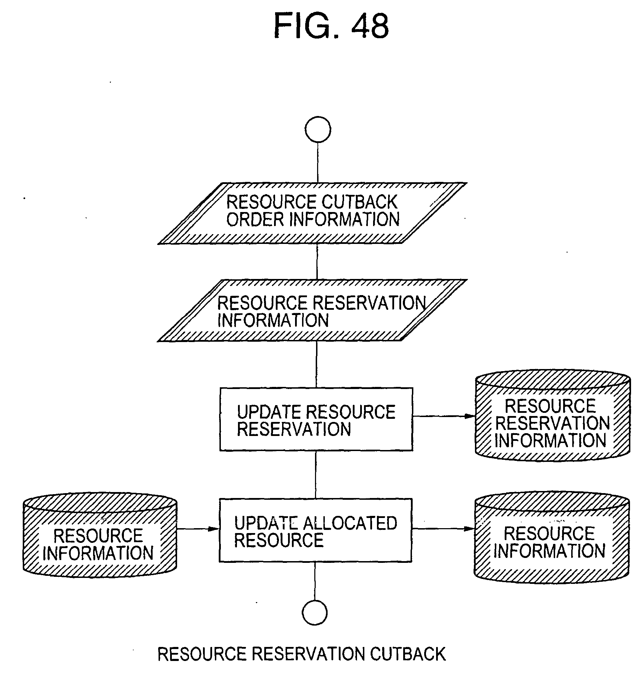

Now a process of the resource reservation cutback will be described. Fig. 48 is a flow chart illustrating the process of the resource reservation cutback. In the material reservation cutback process, the resource reservation information is updated in response to the resource cutback order information and the resource reservation information. In the material reservation cutback process, the resource information is updated with reference to the resource information for the allocation receiving lot.

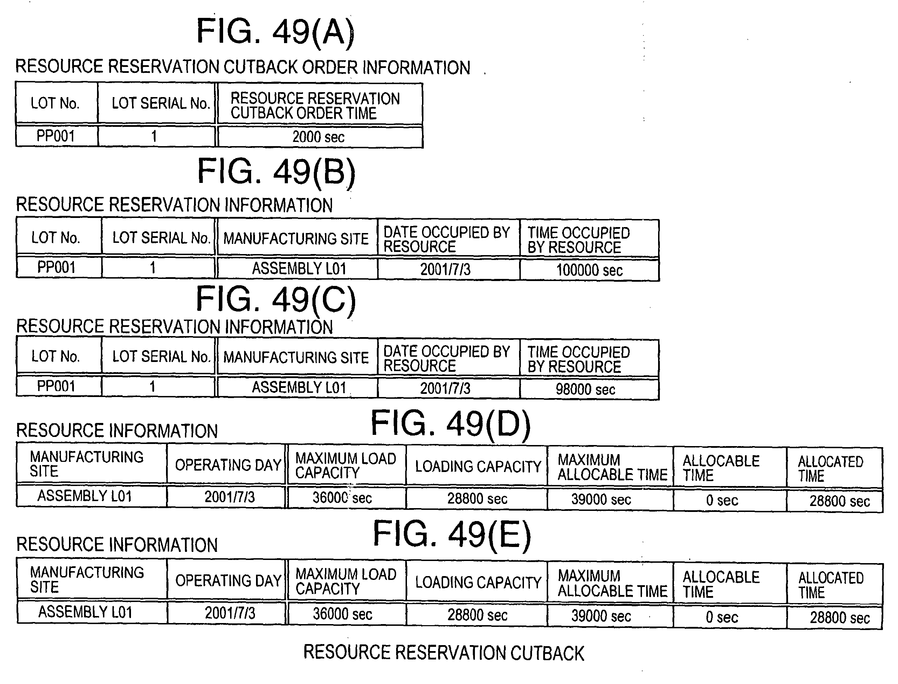

Fig. 49 is a diagram illustrating a process of the resource reservation cutback, in which Fig. 49(A) illustrates content of the resource reservation cutback order information. In the resource reservation cutback process, the resource reservation information is updated on the basis of the resource reservation cutback time recorded in the resource reservation cutback order information. Content of the resource reservation information before updated is illustrated by Fig. 49(B) and content of the resource reservation information after updated is exemplarily illustrated by Fig. 49(C).

The child parts reservation cutback processor retrieves the allocated resource from the resource information under the following conditions (1) and (2): (1) the production site recorded in the resource information should be in coincidence with the production site recorded in the resource reservation information; and (2) the operation date recorded in the resource information should be in coincidence with the resource occupied date recorded in the resource reservation information. Content of the resource information before the allocated resource is updated is illustrated by Fig. 49(D) and content of the resource information after the allocated resource has been updated is illustrated by Fig. 49(E).

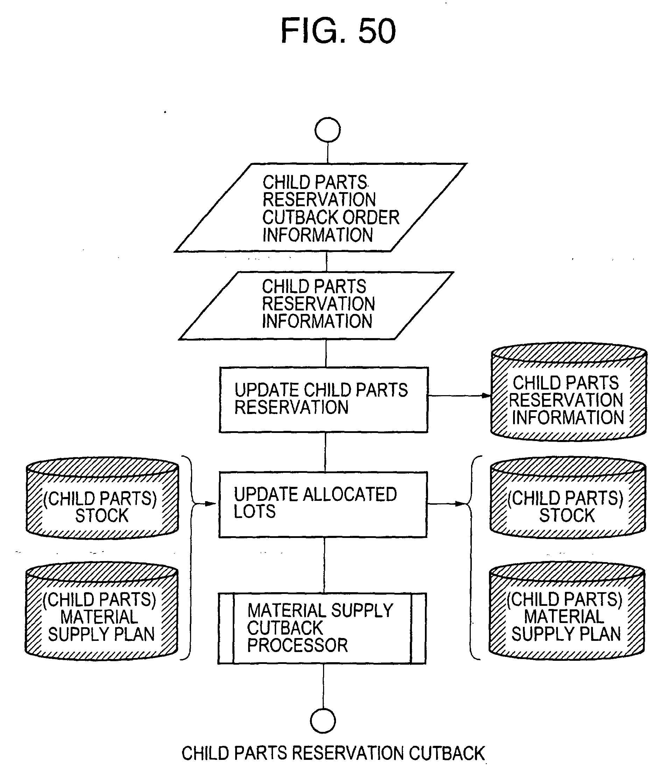

Now a process of the child parts reservation cutback will be explained. Fig. 50 is a flow chart illustrating the child parts reservation cutback. In the child parts reservation cutback process, the child parts reservation information is created in response to the child parts reservation order information and the child parts reservation information and a stock to be allocated or the material supply planning are recorded with reference to a stock of the child parts or the material supply planning for the child parts. Thereupon the process proceeds to the material supply planning cutback process.

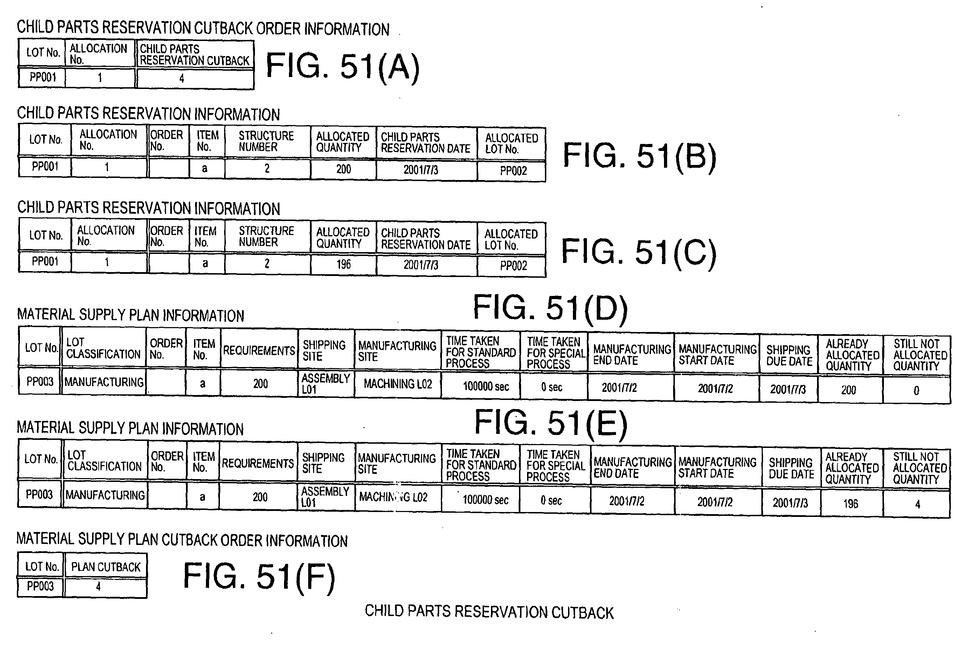

Fig. 51 is a diagram illustrating a process of the child parts reservation cutback, in which Fig 51(A) illustrates content of the child parts reservation cutback order information. In the child parts reservation cutback process, the child parts reservation information is updated on the basis of the child parts reservation cutback quantity recorded in the child parts reservation cutback order information. Content of the child parts reservation information before updated is illustrated by Fig. 51(B) and content of the childe parts reservation information after updated is illustrated by Fig. 51(C).

In the child parts reservation cutback process, the material supply planning information or the stock information for the lot to be allocated is retrieved provided that the lot No. recorded in the material supply planning information or the stock information coincides with the allocation receiving lot No. In the child parts reservation process, the material supply planning information or the stock information for the allocation receiving lot is updated on the basis of the child parts reservation cutback quantity recorded in the child parts reservation cutback order information. Content of the material supply planning information before updated is illustrated by Fig. 51(D) and content of the material supply planning information after updated is illustrated by Fig. 51(E).

In the child parts reservation cutback process, the material supply planning is cutback as the child parts reservation is cutback. Content of the material supply planning cutback order information created in this manner is illustrated by Fig. 51(F). In the child parts reservation cutback process, the material supply planning cutback order information an the material supply planning information are input to the material supply planning processor which, in turn, cuts back the material supply planning for the allocation receiving lot.

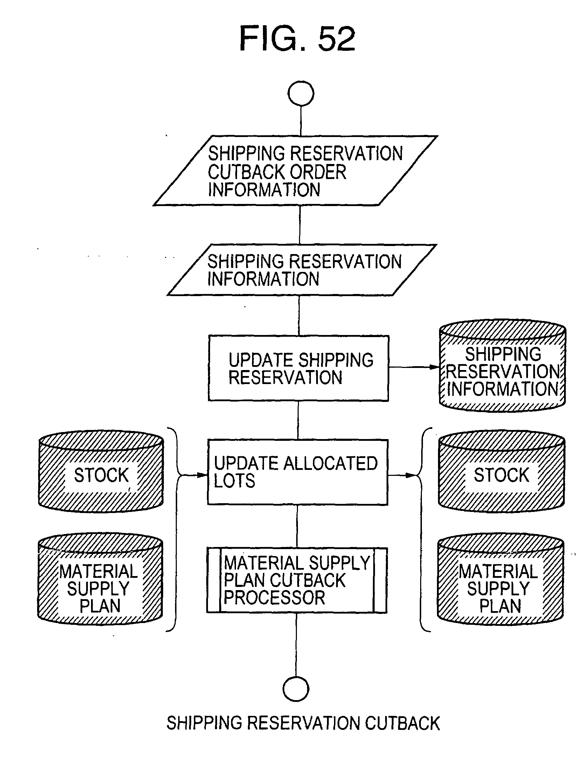

Now a process for the shipping reservation cutback will be discussed. Fig. 52 is a flow chart illustrating the shipping reservation cutback process. In this process, the shipping reservation information is updated in response to the shipping reservation cutback order information and the shipping reservation information. In the shipping reservation cutback process, the stock or the material supply planning for the allocation receiving lot is updated in reference with the stock or material supply planning and then the process proceeds to the material supply planning cutback process.

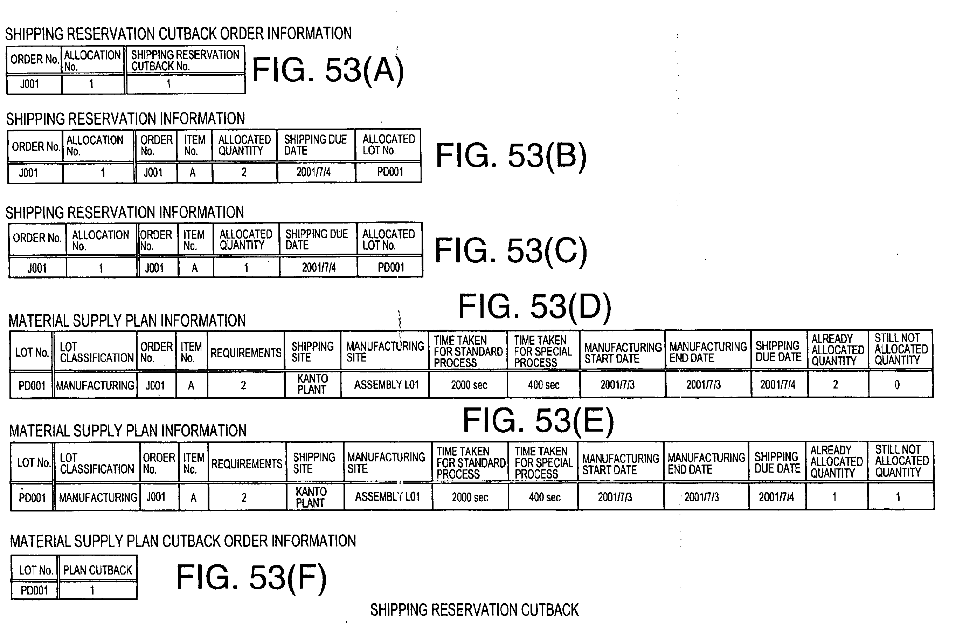

Fig. 53 is a diagram illustrating the shipping reservation cutback process. Content of the shipping reservation cutback order information is illustrated by Fig. 53(A). In this process, the shipping reservation information is updated on the basis of the shipping reservation cutback quantity recorded in the shipping reservation cutback order information. Content of the shipping reservation information before updated is illustrated by Fig. 53(B) and content of the shipping reservation information after updated is illustrated by Fig. 53(C).

In the shipping reservation cutback process, the material supply planning information or the stock information for the allocation receiving lot provided that the lot No. recorded in the material supply planning information or the stock information coincides with the lot No. of the allocation receiving lot recording in the shipping reservation information. In this process, the allocation receiving lot is updated on the basis of the shipping reservation cutback quantity recorded in the shipping reservation cutback order information. Content of the material supply planning information before updated is illustrated by Fig. 53(D) and content of the material supply planning information after updated is illustrated by Fig. 53(E).

In the shipping reservation cutback process, the material supply planning is cutback in accordance with the shipping reservation cutback. Content of the material supply planning cutback order information is illustrated by Fig. 53(F). In this process, the material supply planning cutback order information and the planning information are input to the material supply planning cutback processor which, in turn, cuts back the material supply planning for the allocation receiving lot.

The product manufactured on the basis of the planning information of the integrated capacity production seat reservation system is generally classified into the option specification product and the standard specification product. As has previously been described, the production planning for the option specification product is created via the make-to-order type capacity production seat reservation system and, as will be described later, the production planning or the post-supplementary production planning for the standard specification product is created via the make-to-stock type capacity production seat reservation system.

The make-to-stock type capacity production seat reservation system functions also to create the production planning or the post-supplementary production planning based on the demand forecast or the like factor, regardless of whether an actual order is accepted or not.

In the case of the post-supplementary production, the number of the products to be stocked is previously determined and the production is carried out so that this predetermined stock may be maintained. For example, upper and lower limits of the stock are previously set and, when the effective stock dips from the lower limit, the yield is increased up to the upper limit and thereby the predetermined stock level is maintained. The effective stock includes, in addition to the actual stock, the stock which has been scheduled but still not ordered (i.e., future stock).

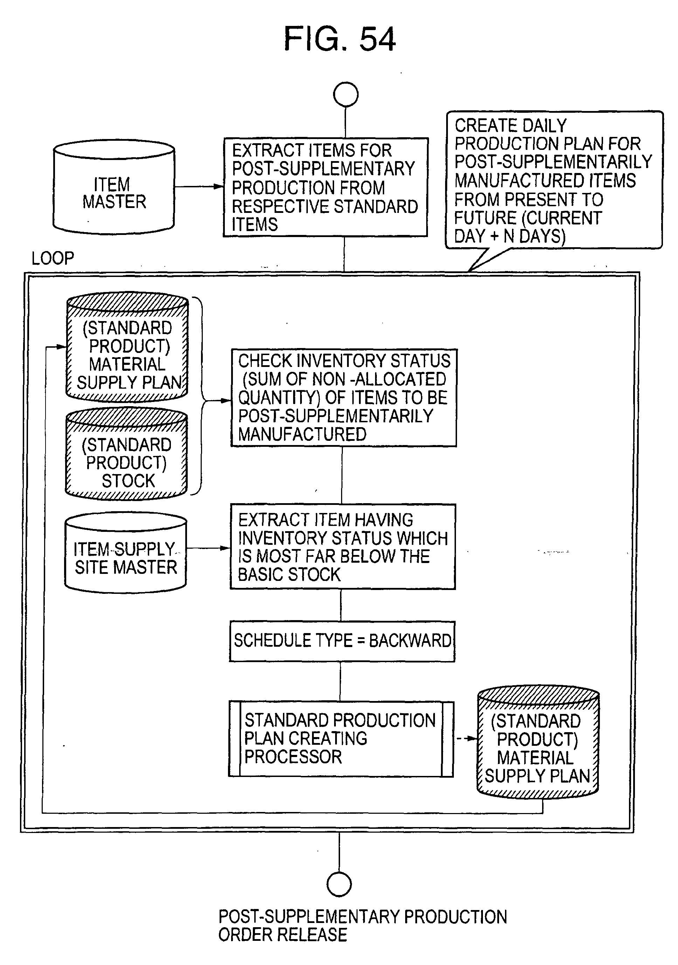

Fig. 54 is a flow chart illustrating a process of the post-supplementary production order release. In the post-supplementary production process, the items for post-supplementary production are previously extracted from respective standard items with reference to the item master. Then, the daily production plan for these items from the current date toward the future, i.e., from the current date to N th day and thereafter is created.

The post-supplementary production order release processor 2170 makes reference to the material supply planning for the standard specification product and the stock of the standard product to search the effective stock of the respective items for the post-supplementary production. The post-supplementary production order release processor 2170 makes the item supply site master to extract the item most remarkably currently dipping from the reference stock recorded in the item supply site master. Then, the material supply planning for the standard specification product is updated by the standard production plan creating processor in backward scheduling mode.

The planned production system is the system adapted to manufacture the product of which the quantity can be demand forecasted for a long term in accordance with the previously created daily production planning. The output of each manufacturing lot is set to the amount as large as possible to minimize the number of schedule modifications and thereby to improve the production efficiency.

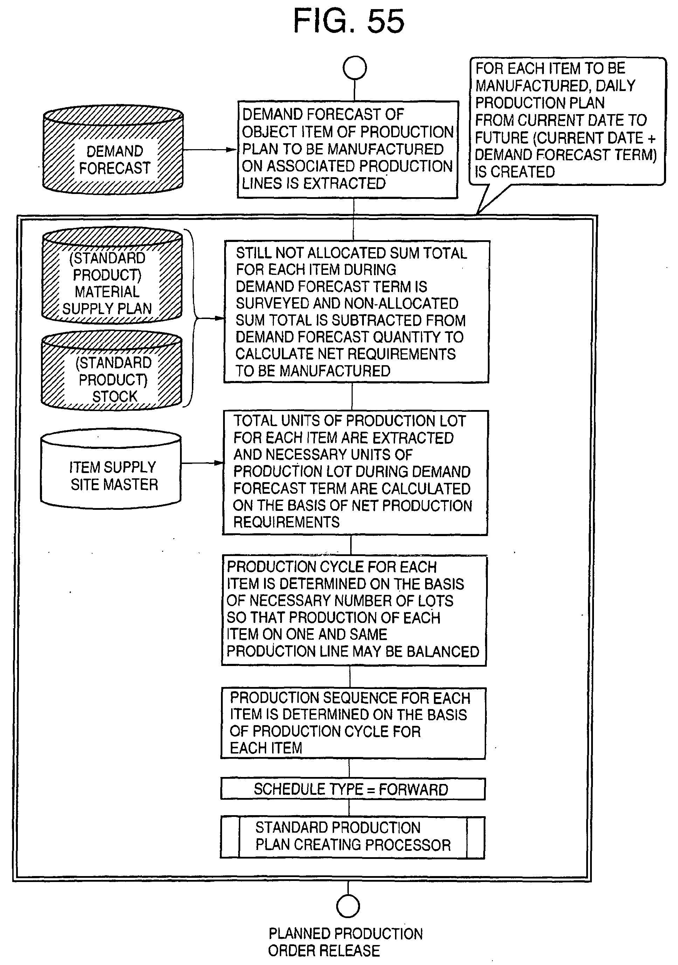

Fig. 55 is a flow chart illustrating a process of the planned production order release. In the planned production process, the demand forecasted quantity of the item for each planned production on each production line is previously extracted on the basis of the demand forecast. In the planned production process, the daily production plan for these items which is effective from the current date toward the future, i.e., for the demand forecasted term is created.

The planned production order lease processor 2172 makes reference to the material supply planning for the standard specification product and the stock of the standard product to survey the still not-allocated sum total for each item during demand forecast term and still not-allocated sum total is subtracted from demand forecast quantity to calculate the net requirement to be manufactured. The planned production order release processor 2172 makes reference also to the item supply site master to extract the output of the manufacturing lot for each item and to calculate the required number of manufacturing lots during the demand forecasted term from the net requirement. The processor 2172 further functions to determine the manufacturing cycle for each item on the basis of the required number of lots for each item on one and same production line. Then, the planned production order release processor 2172 determines the manufacturing sequence of each item on one and same production line on the basis of the manufacturing cycle for each item. The standard production planning creating processor creates the production planning for the standard specification product in forward scheduling mode.

The production management system and the production management method according to the present invention allows the parts structure as well as the manufacturing processes (production specification) to be standardized in a range as large as possible between different products so that the parts structure as well as the manufacturing processes based on an option (make-to-order type specification) can be automatically created. Therefore, a required time from the order acceptance to creation of the production planning can be substantially shortened. The time required for the due date reply can be correspondingly shortened and thereby opportunity of order acceptance can be increased.

These novel system and method allow the manufacturing resources and the materials to be standardized in the maximum range and thereby allow the production planning adapted for manufacturing the option specification product and the standard specification product on one and same production line to be created. With an advantageous consequence, the material and the resources occupied by the planned production and the post-supplementary production both of which are not ordered are available for creation of the option specification product which is actually ordered. In this way, these system and method allow any excessive stock of the materials as well as retention of the excessive resources to be effectively prevented. In this way, the production efficiency can be improved and the product can be manufactured at the correspondingly low cost.

These novel system and method allow the production planning adapted for continuous manufacturing of the standard specification product and the option specification product on one and same production line with minimum affection to the production planning to be quickly created. Thus the production planning for the option specification product can be created without deterioration of the production efficiency peculiar to the production line for the standard specification product. In this way, the manufacturing cost for the option specification product can be reduced.

These novel system and method allow the practicability of the production planning to be assured without relying on experience and hunch and thereby allows the producer to present a positively promised due date to the customer. As a result, the producer can obtain the trust from the customer. Furthermore, this production management system allows the optimum production planning to be created on the basis of the specification, the due date and the quantity specified by the customer and to present this promptly to the customer.

These novel system and method allows a reasonable production plan to be created on the basis of the data and, even when the due date is strict, allows a play (allowance) of the due date to be minimized. In this way, the producer can present the due date as early as possible.

**Claims**

1. A production management system adapted to apply option to a plurality of parts and/or a plurality of processes used to manufacture a standard specification product and thereby to create a production planning for manufacturing of an option specification product from said standard specification product, said production management system comprises:

   planning information storage means adapted to store the production planning for a plurality of standard specification products;
   database storing means adapted to store a first structure master recording said parts, a structure modification master recording said option applicable to said parts, a first process evolution master recording said processes and a process modification master recording said option applicable to said processes;
   a job order creating means adapted to create the job order displaying said option applicable to the parts as well as the process of said standard specification product;
   a structure information creating means adapted to select, in reference with said structure modification master and in accordance with said job order, parts of said option specification product to be manufactured and to apply said parts to said first structure master in order to create a second structure master;
   a process information creating means adapted to select, with reference to said process modification master and in accordance with said job order, process for said option specification product and to apply said process to said first process evolution master in order to create a second process evolution master; and
   a capacity production seat reservation means adapted to apply, in reference with said second structure master and said second process evolution master, the parts selected by said structure information creating means and/or the process selected by said process structure creating means to the production planning for said standard specification product to create the production planning for said option specification product and to store said production planning for said option specification product created in this manner in said production management system.

2. The production management system according to Claim 1, said job order creating means contain a standard specification master recording specification of said standard specification product and an option specification master recording a specification relating to said option and further contain an option information creating means adapted to create option information with reference to said option specification master.

3. The production management system according to Claim 1 or 2, further including a due date estimation asking means adapted to create due date estimation asking information displaying a proper due date and said capacity production seat reservation means include at least one of desired due date retrieving means adapted to determine whether the desired due date can be achieved or not and earliest due date retrieving means adapted to retrieve the earliest due date.

4. The production management system according to any one of Claims 1 through 3, further including a post-supplementary production job order creating means, a planned production job order creating means and a standard specification product capacity production seat reservation means adapted to create said production planning for standard specification product with reference to said first structure master and said first process evolution master and in accordance with said post-supplementary production job order or said planned production job order and to store said production planning for standard specification product in said production management system.

5. A storage medium storing therein a production management program functioning to create production planning for option specification product from a standard specification product by applying option to a plurality of parts and/or a plurality of processes used to manufacture said standard specification product by means of a computer, said storage medium comprises:

   a planned information storing function to store therein a plurality of production plannings for said standard specification product;
   a database storing function to store therein a first structure master recording said parts, a structure modification master recording said option applicable to said parts, a first process evolution'master recording said processes and a process modification master recording said option applicable to said processes;
   a job order creating function to create the job order displaying said option applicable to the parts and the processes for said standard specification product;
   a structure information creating function to select, with reference to said structure modification master and in accordance with said job order, the parts of said option specification product to be manufactured, on one hand, and to apply said parts to said first structure master and thereby to create a second structure master, on the other hand;

a process information creating function to select, with reference to said structure modification master and in accordance with said job order, the processes for said option specification product to be manufactured, on one hand, and to apply said processes to said first structure master and thereby to create a second process evolution master, on the other hand; and

a capacity production seat reservation function to apply, with reference to said second structure master and said second process evolution master, the parts selected by said structure information creating means and/ or the processes selected by said process structure information creating means to the production planning for said standard specification product to create the production planning for said option specification product and to store said production planning for said option specification product created in this manner.

6. A production management program causing a computer to create production planning for option specification product from a standard specification product by applying option to a plurality of parts and/or a plurality of processes used to manufacture said standard specification product by means of a computer, said production management program comprises:

a planning information storing function to store therein a plurality of production plannings for said standard specification product;

a database storing function to store therein a first structure master recording said parts, a structure modification master recording said option applicable to said parts, a first process evolution master recording said processes and a process modification master recording said option applicable to said processes;

a job order creating function to create the job order displaying said option applicable to the parts and the processes for said standard specification product;

a structure information creating function to select, with reference to said structure modification master and in accordance with said job order, the parts of said option specification product to be manufactured, on one hand, and to apply said parts to said first structure master and thereby to create a second structure master, on the other hand;

a process information creating function to select, with reference to said structure modification master and in accordance with said job order, the processes for said option specification product to be manufactured, on one hand, and to apply said processes to said first structure master and thereby to create a second process evolution master, on the other hand; and

a capacity production seat reservation function to apply, with reference to said second structure master and said second process evolution master, the parts selected by said structure information creating means and/ or the processes selected by said process structure information creating means to the production planning for said standard specification product to create the production planning for said option specification product and to store said production planning for said option specification product created in this manner.

7. A production management method to apply option to a plurality of parts and/or a plurality of processes used to manufacture a standard specification product and thereby to create a production planning for manufacturing of an option specification product from said standard specification product, said production management method comprises:

a step of storing the production planning for a plurality of standard specification products;

a step of storing a first structure master recording said parts, a structure modification master recording said option applicable to said parts, a first process evolution master recording said processes and a process modification master recording said option applicable to said processes;

a step of creating the job order displaying said option applicable to the parts as well as the process of said standard specification product;

a step of selecting, in reference with said structure modification master and in accordance with said job order, parts of said option specification product to be manufactured and applying said parts to said first structure master in order to create a second structure master;

a step of selecting, in reference with said process modification master and in accordance with said job order, process for said option specification product and applying said process to said first process evolution master in order to create a second process evolution master; and

a step of capacity production seat reserving by applying, with reference to said second structure master and said second process evolution master, the parts selected by said structure information creating means and/or the process selected by said process structure creating means to the production planning for said standard specification product to create the production planning for said option specification product and by storing said production planning for said option specification product created in this manner.

FIG. 1

# FIG. 2

「A」 (STANDARD ASSEMBLY PROCESS 1000 sec/ PIECE)×100 PIECES

        「a」 (STANDARD MACHINING PROCESS 500 sec/ PIECE)×200 PIECES

           「α」 (PURCHASE)×400 PIECES

        「b」 (STANDARD MACHINING PROCESS 500 sec/ PIECE)×200 PIECES

           「β」 (PURCHASE)×400 PIECES

        「x」 (PURCHASE)×400 PIECES

        「y」 (PURCHASE)×400 PIECES

STRUCTURE OF STANDARD PRODUCT

# FIG. 3

「J001」 - 「A」 (STANDARD ASSEMBLY PROCESS 1000 sec/ PIECE + <u>SPECIAL</u>
<u>COATING PROCESS 100 sec/ PIECE</u> + <u>SPECIAL INSPECTION</u>
<u>PROCESS 100 sec/ PIECE</u>)×2 PIECES

「a」 (STANDARD MACHINING PROCESS 500 sec/ PIECE)×4 PIECES

「α」 (PURCHASE)×8 PIECES

「a1」 (STANDARD MACHINING PROCESS 500 sec/ PIECE)×8 PIECES

「α」 (PURCHASE)×16 PIECES

「J001」 - 「b1」 (STANDARD MACHINING PROCESS 500 sec/ PIECE + SPECIAL MACHINING
PROCESS 100 sec/ PIECE)×8 PIECES

「β」 (PURCHASE)×16 PIECES

「x」 (PURCHASE)×4 PIECES

STRUCTURE OF OPTION PRODUCT

EP 1 416 347 A1

EP 1 416 347 A1

FIG. 4(A)

ASSEMBLY L01

28800 sec

| | 1 JULY | 2 JULY | 3 JULY | 4 JULY | 5 JULY | 6 JULY |
|---|---|---|---|---|---|---|
| | ⌈x⌋ | ⌈x⌋ | ⌈x⌋ | | | |
| | ⌈x⌋ | ⌈x⌋ | ⌈A⌋ 100 PIECES | ⌈x⌋ | | |
| | ⌈x⌋ | ⌈x⌋ | ⌈x⌋ | ⌈x⌋ | ⌈x⌋ | |

LOT No. PP001

0

FIG. 4(B)

MACHINING L01

28800 sec

LOT No. PP002

| | 1 JULY | 2 JULY | 3 JULY | 4 JULY | 5 JULY | 6 JULY |
|---|---|---|---|---|---|---|
| | ⌈x⌋ | ⌈x⌋ | | | | |
| | ⌈x⌋ | ⌈a⌋ 200 PIECES | | | | |
| | ⌈x⌋ | ⌈x⌋ | ⌈x⌋ | | | |

0

FIG. 4(C)

MACHINING L02

28800 sec

LOT No. PP004

| | 1 JULY | 2 JULY | 3 JULY | 4 JULY | 5 JULY | 6 JULY |
|---|---|---|---|---|---|---|
| | ⌈x⌋ | | | | | |
| | ⌈x⌋ | ⌈x⌋ | | | | |
| | ⌈x⌋ | ⌈b⌋ 200 PIECES | ⌈x⌋ | | | |

0

SCHEDULING FOR STANDARD PRODUCT

FIG. 5(A)

ASSEMBLY L01

+7200 sec
28800 sec

LOT No. PD001

LOT No. PP001

[X] [X] [X] [X] [X] [X] [X] [X] [X] [X] [X] [X] [X] [X] [X]

J001-A
J001-A

[A]
98 PIECES

RESOURCE REQUIREMENTS FOR ADDITIONAL PROCESS (100+100) sec ×2 PIECES = 400 sec

AVAILABILITY ALLOCATION OF RESOURCE REQUIREMENTS FOR STANDARD PROCESS 1000 sec ×2 PIECES = 2000 sec

0

1 JULY    2 JULY    3 JULY    4 JULY    5 JULY    6 JULY

FIG. 5(B)

MACHINING L01

28800 sec

LOT No. PD002

LOT No. PP002

[X]
[a1]
[X]  [a]
200 PIECES
[X] [X] [X]

USUAL RESOURCE LOADING (CREATION OF NEW PLAN)

ALLOCATION OF USUAL RESOURCE (ALLOCATION FROM EXISTING PLAN)

0

1 JULY    2 JULY    3 JULY    4 JULY    5 JULY    6 JULY

FIG. 5(C)

MACHINING L02

28800 sec

LOT No. PD003

LOT No. PP003

[X]
J001-b1
J001-b1
[X]
[X]
[X]  [b]
192 PIECES
[X]

RESOURCE REQUIREMENTS FOR ADDITIONAL PROCESS 100 sec × 8 PIECES =800 sec

AVAILABILITY ALLOCATION OF RESOURCE REQUIREMENTS FOR STANDARD PROCESS 500 sec ×8 PIECES=4000 sec

0

1 JULY    2 JULY    3 JULY    4 JULY    5 JULY    6 JULY

SCHEDULING FOR OPTION PRODUCT

EP 1 416 347 A1

# FIG. 6

EP 1 416 347 A1

DUE DATE ESTIMATION ASKING INFORMATION (SERVING ALSO AS DUE DATE ESTIMATION INFORMATION)

| JOB ORDER No. | STANDARD PRODUCT No. | REQUIRE-MENTS | DESIRED DUE DATE | DELIVERY SITE | DUE DATE ESTIMATION ASSORTMENT | PRESENCE/ABSENCE OF OPTION | STATUS | POSITIVELY PROMISED DUE DATE | SHIPPING DUE DATE | SHIPPING SITE | EARLIEST DUE DATE |
|---|---|---|---|---|---|---|---|---|---|---|---|
| JOO1 | A | 2 | 2001/7/4 | INAKI CITY, TOKYO | ENTRY | OK | 0 | 2001/7/5 | 2001/7/4 | KANTO PLANT | - |

ORDER RESERVATION INFORMATION

⇑

SHIPPING RESERVATION INFORMATION

| JOB ORDER No. | ORDER No. | ITEM No. | REQUIRE-MENTS | DUE DATE | SHIPPING SITE | DUE DATE ESTIMATION ASSORTMENT | BOM VERSION | BOM START DATE | SCHEDULE TYPE | STATUS | POSITIVELY PROMISED DUE DATE |
|---|---|---|---|---|---|---|---|---|---|---|---|
| JOO1 | JOO1 | A | 2 | 2001/7/4 | KANTO PLANT | ENTRY | 1 | 2001/6/30 | BACKWARD | POSITIVE PROMISE | 2001/7/4 |

⇑

MATERIAL SUPPLY PLAN INFORMATION    →BOM LEVEL 1 (ALLOCATED AFTER CREATION OF PRODUCTION PLAN FOR OPTION PRODUCT)

| JOB ORDER No. | ALLOCATED SERIAL No. | ORDER No. | ITEM No. | ALLOCATED | SHIPPING DUE DATE | ALLOCATED LOT No. |
|---|---|---|---|---|---|---|
| JOO1 | 1 | JOO1 | A | 2 | 2001/7/4 | PDOO1 |

| LOT No. | LOT CLASSIFICA-TION | ORDER No. | ITEM No. | REQUIRE-MENTS | SHIPPING SITE | MANUFAC-TURING SITE | TIME TAKEN FOR STANDARD PROCESS | TIME TAKEN FOR SPECIAL PROCESS | MANUFAC-TURING START DATE | MANUFAC-TURING END DATE | SHIPPING DUE DATE | ALREADY ALLOCATED QUANTITY | STILL NOT ALLOCATED QUANTITY |
|---|---|---|---|---|---|---|---|---|---|---|---|---|---|
| PDOO1 | MANUFACTUR-ING | JOO1 | A | 2 | KANTO PLANT | ASSEMBLY L01 | 2000 sec. | 400 sec. | 2001/7/3 | 2001/7/3 | 2001/7/4 | 0 | 2 |

RESOURCE RESERVATION INFORMATION

⇑

| LOT No. | LOT SERIAL No. | MANUFAC-TURING SITE | DAYS OCCUPIED BY RESOURCE | HOURS OCCUPIED BY RESOURCE | RESOURCE REQUIREMENTS |
|---|---|---|---|---|---|
| PDOO1 | 1 | ASSEMBLY L01 | 2001/7/3 | 2400 | 1200 |

RESOURCE INFORMATION

⇑

| MANUFAC-TURING SITE | OPERATING DAY | MAXIMUM LOAD CAPACITY | LOADING CAPACITY | MAXIMUM ALLOCABLE TIME | ALLOCABLE TIME | ACTUALLY ALLOCATED TIME |
|---|---|---|---|---|---|---|
| ASSEMBLY L01 | 2001/7/3 | 36000 sec. | 28800 sec. | 39000 sec. | 0 sec. | 31200 sec. |

PARTS RESERVATION INFORMATION

⇑

| LOT No. | ALLOCATION SERIAL No. | ORDER No. | ITEM No. | MATERIAL REQUIREMENTS | ALLOCATED QUANTITY | PARTS RESERVATION DATE | ALLOCATED LOT No. |
|---|---|---|---|---|---|---|---|
| PDOO1 | 1 | | A | 2 | 4 | 2001/7/3 | PP002 |

MATERIAL SUPPLY PLAN INFORMATION    →BOM LEVEL 2 (ALLOCATION OF PRODUCTION PLAN FOR STANDARD PRODUCT)

| LOT No. | LOT CLASSIFICA-TION | ORDER No. | ITEM No. | REQUIRE-MENTS | SHIPPING SITE | MANUFAC-TURING SITE | TIME TAKEN FOR STANDARD PROCESS | TIME TAKEN FOR SPECIAL PROCESS | MANUFAC-TURING END DATE | MANUFAC-TURING START DATE | SHIPPING DUE DATE | ALREADY ALLOCATED QUANTITY | STILL NOT ALLOCATED QUANTITY |
|---|---|---|---|---|---|---|---|---|---|---|---|---|---|
| PDOO2 | MANUFAC-TURING | | A | 200 | ASSEMBLY L01 | MACHINING L01 | 100000 sec. | 0 sec. | 2001/7/2 | 2001/7/2 | 2001/7/3 | 4 | 196 |

38

# FIG. 6

ORDER RESERVATION INFORMATION

⇧

SHIPPING RESERVATION INFORMATION

⇧

MATERIAL SUPPLY PLAN INFORMATION

⇧

PARTS RESERVATION INFORMATION

⇧

MATERIAL SUPPLY PLANNNING INFORMATION → BOM LEVEL 2 (ALLOCATION AFTER CREATION OF PRODUCTION PLAN FOR STANDARD PRODUCT)

⇧

RESOURCE RESERVATION INFORMATION

⇧

RESOURCE INFORMATION

⇧

PARTS RESERVATION INFORMATION

⇧

MATERIAL SUPPLY PLANNING INFORMATION → BOM LEVEL 3 (ALLOCATION OF STANDARD PRODUCT FROM STOCK)

| LOT No. | ALLOCATION SERIAL No. | ORDER No. | ITEM No. | MATERIAL REQUIREMENTS | ALLOCATED QUANTITY | PARTS RESERVATION DATE | LOT No. ALLOCATED WITH AVAILABILITY |
|---|---|---|---|---|---|---|---|
| PD001 | 2 | | A1 | 4 | 8 | 2001/7/3 | PP002 |

| LOT No. | LOT CLASSIFICATION | ORDER No. | ITEM No. | REQUIREMENTS | SHIPPING SITE | MANUFACTURING SITE | TIME TAKEN FOR STANDARD PROCESS | TIME TAKEN FOR SPECIAL PROCESS | MANUFACTURING END DATE | MANUFACTURING START DATE | SHIPPING DUE DATE | ALREADY ALLOCATED QUANTITY | STILL NOT ALLOCATED QUANTITY |
|---|---|---|---|---|---|---|---|---|---|---|---|---|---|
| PD001 | MANUFACTURING | | A1 | 8 | ASSEMBLY L01 | MACHINING L01 | 4000 sec | 0 sec | 2001/7/2 | 2001/7/2 | 2001/7/3 | 8 | 0 |

| LOT No. | LOT SERIAL No. | MANUFACTURING SITE | DAY OCCUPIED BY RESOURCE | TIME OCCUPIED BY RESOURCE | RESOURCE REQUIREMENTS |
|---|---|---|---|---|---|
| PD002 | 1 | ASSEMBLY L01 | 2001/7/2 | 4000 sec | 500 |

| MANUFACTURING SITE | OPERATING DAY | MAXIMUM LOAD CAPACITY | LOADING CAPACITY | MAXIMUM ALLOCABLE TIME | ALLOCABLE TIME | ALREADY ALLOCATED TIME |
|---|---|---|---|---|---|---|
| MACHINING L01 | 2001/7/2 | 36000 sec | 28800 sec | 39000 sec | 5600 sec | 23200 sec |

| LOT No. | ALLOCATION SERIAL No. | ORDER No. | ITEM No. | MATERIAL REQUIREMENTS | ALLOCATED QUANTITY | PARTS RESERVATION DATE | LOT No. TO BE ALLOCATED WITH AVAILABILITY |
|---|---|---|---|---|---|---|---|
| PD002 | 1 | | β1 | 2 | 8 | 2001/7/2 | SX001 |

| LOT No. | LOT CLASSIFICATION | ORDER No. | ITEM No. | REQUIREMENTS | SHIPPING SITE | MANUFACTURING SITE | TIME TAKEN FOR STANDARD PROCESS | TIME TAKEN FOR SPECIAL PROCESS | MANUFACTURING END DUE DATE | MANUFACTURING START DUE DATE | SHIPPING DUE DATE | ALREADY ALLOCATED QUANTITY | STILL NOT ALLOCATED QUANTITY |
|---|---|---|---|---|---|---|---|---|---|---|---|---|---|
| SX001 | STOCK | | α | 100 | MACHINING L01 | | | | | | 2001/7/2 | 8 | 92 |

EP 1 416 347 A1

# FIG. 6

EP 1 416 347 A1

ORDER RESERVATION INFORMATION
⇧
SHIPPING RESERVATION INFORMATION
⇧
MATERIAL SUPPLY PLANNING INFORMATION
⇧
PARTS RESERVATION INFORMATION
⇧
MATERIAL SUPPLY PLANNING INFORMATION → BOM LEVEL 2 (ALLOCATION AFTER CREATION OF PRODUCTION PLAN FOR OPTION PRODUCT)
⇧
RESOURCE RESERVATION INFORMATION
⇧
MATERIAL INFORMATION
⇧
PARTS RESERVATION INFORMATION
⇧
MATERIAL SUPPLY PLANNING INFORMATION → BOM LEVEL 3 (ALLOCATION AFTER CREATION OF PURCHASE PLANNING FOR STANDARD PRODUCT)
⇧
PARTS RESERVATION INFORMATION
⇧
MATERIAL SUPPLY PLANNING INFORMATION → BOM LEVEL 2 (INVENTORY ALLOCATION OF STANDARD PRODUCT)

| LOT No. | ALLOCATION SERIAL No. | ORDER No. | ITEM No. | MATERIAL REQUIREMENTS | ALLOCATED QUANTITY | PARTS RESERVATION DATE | LOT No. ALLOCATED WITH AVAILABILITY |
|---|---|---|---|---|---|---|---|
| PD001 | 3 | JO01 | b1 | 4 | 8 | 2001/7/3 | PD003 |

| LOT No. | LOT CLASSIFICATION | ORDER No. | ITEM No. | REQUIREMENTS | SHIPPING SITE | MANUFACTURING SITE | TIME TAKEN FOR STANDARD PROCESS | TIME TAKEN FOR SPECIAL PROCESS | MANUFACTURING END DUE DATE | MANUFACTURING START DUE DATE | SHIPPING DUE DATE | ALREADY ALLOCATED QUANTITY | STILL NOT ALLOCATED QUANTITY |
|---|---|---|---|---|---|---|---|---|---|---|---|---|---|
| PD003 | MANUFACTURING | JO01 | b1 | 8 | ASSEMBLY L01 | MACHINING L02 | 4000 sec | 800 sec | 2001/7/2 | 2001/7/2 | 2001/7/3 | 8 | 0 |

| LOT No. | LOT SERIAL No. | MANUFACTURING SITE | DAY OCCUPIED BY RESOURCE | TIME OCCUPIED BY RESOURCE | RESOURCE REQUIREMENTS |
|---|---|---|---|---|---|
| PD003 | 1 | MACHINING L02 | 2001/7/2 | 4800 sec | 600 |

| MANUFACTURING SITE | OPERATING DAY | MAXIMUM LOAD CAPACITY | LOADING CAPACITY | MAXIMUM ALLOCABLE TIME | ALLOCABLE TIME | ALLOCABLE TIME |
|---|---|---|---|---|---|---|
| MACHINING L02 | 2001/7/2 | 36000 sec | 28800 sec | 39000 sec | 4800 sec | 24000 sec |

| LOT No. | ALLOCATION SERIAL No. | ORDER No. | ITEM No. | MATERIAL REQUIREMENTS | ALLOCATED QUANTITY | PARTS RESERVATION DATE | LOT No. ALLOCATED WITH AVAILABILITY |
|---|---|---|---|---|---|---|---|
| PD003 | 1 | | β1 | 2 | 16 | 2001/7/2 | BP001 |

| LOT No. | LOT CLASSIFICATION | ORDER No. | ITEM No. | REQUIREMENTS | SHIPPING SITE | MANUFACTURING SITE | TIME TAKEN FOR STANDARD PROCESS | TIME TAKEN FOR SPECIAL PROCESS | MANUFACTURING END DUE DATE | MANUFACTURING START DUE DATE | SHIPPING DUE DATE | ALREADY ALLOCATED QUANTITY | STILL NOT ALLOCATED QUANTITY |
|---|---|---|---|---|---|---|---|---|---|---|---|---|---|
| BP001 | PURCHASE | | β1 | 100 | ASSEMBLY L01 | COMPANY A, BUSINESS PARTNER | | | 2001/7/1 | 2001/7/1 | 2001/7/2 | 16 | 84 |

| LOT No. | ALLOCATION SERIAL No. | ORDER No. | ITEM No. | MATERIAL REQUIREMENTS | ALLOCATED QUANTITY | PARTS RESERVATION DATE | LOT No. ALLOCATED WITH AVAILABILITY |
|---|---|---|---|---|---|---|---|
| PP001 | 4 | | X | 2 | 4 | 2001/7/3 | SX002 |

| LOT No. | LOT CLASSIFICATION | ORDER No. | ITEM No. | REQUIREMENTS | SHIPPING SITE | MANUFACTURING SITE | TIME TAKEN FOR STANDARD PROCESS | TIME TAKEN FOR SPECIAL PROCESS | MANUFACTURING END DUE DATE | MANUFACTURING START DUE DATE | SHIPPING DUE DATA | ALREADY ALLOCATED QUANTITY | STILL NOT ALLOCATED QUANTITY |
|---|---|---|---|---|---|---|---|---|---|---|---|---|---|
| SX002 | STOCK | | X | 400 | ASSEMBLY L01 | | | | | | 2001/6/30 | 4 | 398 |

FIG. 7

## FIG. 8

JOB ORDER CREATING SYSTEM

① DISPLAY ITEM LIST
② SELECT PRODUCT
③ DISPLAY LIST OF OPTIONS
   RELATING TO PRODUCT
④ SELECT OPTION
⑤ INPUT QUANTITY

1011 — ITEM UNIT PRICE MASTER

1012 — SPECIFICATION MASTER

1013 — STANDARD SPECIFICATION MASTER

1014 — OPTION SPECIFICATION MASTER

PRICE ESTIMATION PROCESSOR — 2012

OPTION INFORMATION

PRICE ESTIMATION INFORMATION

① INPUT DESIRED DUE DATE
② INPUT DESIRED DELIVERY SITE

DUE DATE ESTIMATION ASKING PROCESSOR — 2011

DUE DATE ESTIMATION INFORMATION

3011 — OPTION INFORMATION

3013 — DUE DATE ESTIMATION ASKING INFORMATION

DUE DATE ESTIMATION REPLY INFORMATION — 3015

DUE DATE ESTIMATION CONTROL PROCESSOR

JOB ORDER CREATING SYSTEM

EP 1 416 347 A1

# FIG. 9

DUE DATE ESTIMATION CONTROL PROCESSOR

3011 — OPTION INFORMATION | VERSION ENTRY INFORMATION — 3016

BOM CREATING SYSTEM

1021 — ITEM MASTER

1022 — STRUCTURE MASTER

1023 — STRUCTURE MODIFICATION MASTER

STRUCTURE INFORMATION PROCESSOR — 2021

ITEM MASTER — 1021

STRUCTURE MASTER — 1022

1031 — PROCESS MASTER

1032 — PROCESS EVOLUTION MASTER

1033 — PROCESS MODIFICATION MASTER

PROCESS INFORMATION PROCESSOR — 2031

PROCESS EVOLUTION MASTER — 1032

1041 — VERSION CONTROL MASTER

1022 — STRUCTURE MASTER

1032 — PROCESS EVOLUTION MASTER

VERSION CREATING PROCESSOR — 2032

VERSION CONTROL MASTER — 1041

STRUCTURE MASTER — 1022

PROCESS EVOLUTION MASTER — 1032

BOM CREATING SYSTEM

# FIG. 10

DUE DATE ESTIMATION CONTROL PROCESSOR

3013 — DUE DATE ESTIMATION ASKING INFORMATION

DUE DATE ESTIMATION REPLY INFORMATION — 3015

INTEGRATED CAPACITY PRODUCTION SEAT RESERVATION SYSTEM

ORDER RESERVATION INFORMATION

2142 — ORDER RESERVATION PROCESSOR

DEMAND AND SUPPLY ROUTE MASTER

STOCK INFORMATION

2144 — SHIPPING RESERVATION INFORMATION

SHIPPING RESERVATION PROCESSOR

ITEM SUPPLY SITE MASTER

POST-SUPPLEMENTARY PRODUCTION ORDER RELEASE PROCESSOR — 2170

YES / OPTION / NO

2146 — AVAILABILITY ALLOCATED PRODUCTION PLAN CREATING PROCESSOR

2148 — (STANDARD PRODUCT) MATERIAL SUPPLY PLAN

2160 — STANDARD PRODUCTION PLAN CREATING PROCESSOR

PLANNED PRODUCTION ORDER RELEASE PROCESSOR — 2172

(OPTION PRODUCT) MATERIAL SUPPLY PLAN

ITEM SUPPLY SITE MASTER

1032

ITEM SUPPLY SITE PROCESSOR

AVAILABILITY ALLOCATION PROCESSOR

PROCESS EVOLUTION MASTER

RESOURCE INFORMATION

2150

PROCESS EVOLUTION MASTER

DEMAND FORECAST

RESOURCE RESERVATION INFORMATION

RESOURCE INFORMATION

RESOURCE RESERVATION PROCESSOR

1032

RESOURCE RESERVATION MASTER

RESOURCE MASTER

RESOURCE RESERVATION PROCESSOR

DEMAND AND SUPPLY ROUTE MASTER

RESOURCE INFORMATION

2150 — RESOURCE RESERVATION PROCESSOR

DEMAND AND SUPPLY ROUTE MASTER

STOCK INFORMATION

STOCK INFORMATION

STOCK INFORMATION

STOCK INFORMATION

2152 — PARTS RESERVATION INFORMATION

STOCK INFORMATION

MATERIAL SUPPLY PLAN

ITEM SUPPLY SITE MASTER

PARTS RESERVATION PROCESSOR

PARTS RESERVATION INFORMATION

ITEM SUPPLY SITE MASTER

STOCK INFORMATION

PARTS RESERVATION INFORMATION

MATERIAL SUPPLY PLAN

PARTS RESERVATION PROCESSOR

MATERIAL SUPPLY PLAN

2152

MATERIAL SUPPLY PLAN

STRUCTURE MASTER — 1022

STRUCTURE MASTER — 1022

INTEGRATED CAPACITY PRODUCTION SEAT RESERVATION SYSTEM (ENTRY)

EP 1 416 347 A1

# FIG. 11

INTEGRATED CAPACITY PRODUCTION SEAT RESERVATION SYSTEM
(MODIFICATION AND CANCELLATION )

# FIG. 12

**ENTRY**

1011 — ITEM UNIT PRICE MASTER

1012 — SPECIFICATION MASTER

1013 — STANDARD SPECIFICATION MASTER

1014 — OPTION SPECIFICATION MASTER

① LIST OF
② PRODUCT IS SELECTED
③ LIST OF OPTION RELATING TO PRODUCTS IS DISPLAYED
④ OPTION IS SELECTED
⑤ NUMBER OF ORDERS IS INPUT

2012 — PRICE ESTIMATION PROCESSOR

3011 — OPTION INFORMATION

3012 — PRICE ESTIMATION INFORMATION

① DESIRED DUE DATE IS INPUT
② DESIRED DELIVERY SITE IS INPUT

**MODIFY & CANCEL**

① ORDER No. IS INPUT
② LIST OF RECORDED OPTIONS CORRESPONDING TO ORDER Nos. IS DISPLAYED
③ RECORDED OPTION PRICE ESTIMATION CORRESPONDING TO ORDER No. IS DISPLAYED
④ RECORDED OPTION DUE DATE ESTIMATION CORRESPONDING TO ORDER No. IS DISPLAYED
⑤ OPTION IS MODIFIED (OPTIONALLY)
⑥ QUANTITY IS CHANGED (OPTIONALLY)

1011 — ITEM UNIT PRICE MASTER

1012 — SPECIFICATION MASTER

1013 — STANDARD SPECIFICATION MASTER

OPTION SPECIFICATION MASTER

1014 — PRICE ESTIMATION PROCESSOR

OPTION INFORMATION

3011 — PRICE ESTIMATION INFORMATION

3012 — DUE DATE ESTIMATION INFORMATION

3013

3011 — OPTION INFORMATION

3012 — PRICE ESTIMATION INFORMATION

① DESIRED DUE DATE IS CHANGED (OPTIONALLY)
② DESIRED DELIVERY SITE IS CHANGED (OPTIONALLY)

DUE DATE ESTIMATION ASKING PROCESSOR

OPTION INFORMATION

DUE DATE ESTIMATION ASKING INFORMATION

DUE DATE ESTIMATION CONTROL PROCESSOR

OPTION INFORMATION PRESENT OR NOT? — NO / YES

OPTION INFORMATION

BOM CREATION SYSTEM

VERSION ENTRY INFORMATION

DUE DATE ESTIMATION CONTROL PROCESSOR

DUE DATE ESTIMATION ORDER

INTEGRATED CAPACITY PRODUCTION SEAT RESERVATION SYSTEM

DUE DATE ESTIMATION REPLY INFORMATION

DUE DATE ESTIMATION CONTROL PROCESSOR

DUE DATE ESTIMATION REPLY INFORMATION

DUE DATE ESTIMATION ASKING PROCESSOR

DUE DATE ESTIMATION INFORMATION

MAKES REFERENCE TO DUE DATE ESTIMATION INFORMATION

DUE DATE ESTIMATION ASKING

# FIG. 13

| STANDARD PRODUCT ITEM No. | ITEM NAME | UNIT PRICE |
|---|---|---|
| A | ITEM A | ￥100,000 |
| B | ITEM B | ￥110,000 |
| C | ITEM C | ￥120,000 |
| • | • | • |
| • | • | • |

ITEM UNIT PRICE MASTER (1011)

# FIG. 14

| SPECIFICATION CODE | SPECIFICATION NAME |
|---|---|
| S001 | SPECIFICATION 1 |
| S002 | SPECIFICATION 2 |
| S003 | SPECIFICATION 3 |
| • | • |
| • | • |

SPECIFICATION MASTER (1012)

# FIG. 15

| STANDARD PRODUCT ITEM No. | PART No. | STANDARD SPECIFICATION CODE |
|---|---|---|
| A | 1 | S001 |
| A | 2 | S002 |
| A | 3 | S003 |
| • | • | • |
| • | • | • |

STANDARD SPECIFICATION MASTER (1013)

# FIG. 16

| STANDARD PRODUCT ITEM No. | PART No. | OPTION SPECIFICATION CODE | START DATE | END DATE | PREMIUM |
|---|---|---|---|---|---|
| A | 0 | OP001 | 2000/1/1 | | ¥1,000 |
| A | 1 | OP101 | 2000/1/1 | | ¥1,000 |
| A | 1 | OP102 | 2000/1/1 | | ¥2,000 |
| A | 2 | OP201 | 2000/1/1 | | ¥3,000 |
| A | 2 | OP202 | 2000/1/1 | | ¥4,000 |
| A | 3 | OP301 | 2000/1/1 | | ¥5,000 |
| A | 3 | OP302 | 2000/1/1 | | ¥6,000 |
| • | • | • | • | • | • |
| • | • | • | • | • | • |

OPTION SPECIFICATION MASTER (1014)

EP 1 416 347 A1

# FIG. 17(A)

OPTION INFORMATION

| ORDER No. | STANDARD PRODUCT ITEM No. | PART No. | OPTION SPECIFICATION CODE | PREMIUM |
|---|---|---|---|---|
| J001 | A | 0 | OP001 | ¥1,000 |
| J001 | A | 1 | OP101 | ¥1,000 |
| J001 | A | 2 | OP201 | ¥3,000 |
| J001 | A | 3 | OP301 | ¥5,000 |

# FIG. 17(B)

PRICE ESTIMATION INFORMATION

| ORDER No. | STANDARD PRODUCT ITEM No. | QUANTITY | OPTION PRODUCT PRICE | AMOUNT OF ORDER RECEIVED |
|---|---|---|---|---|
| J001 | A | 2 | ¥110,000 | ¥220,000 |

OPTION INFORMATION (3011) AND PRICE ESTIMATION INFORMATION (3012)

EP 1 416 347 A1

# FIG. 18(A)

| ORDER No. | STANDARD PRODUCT ITEM No. | QUANTITY | DESIRED DUE DATE | DELIVERY SITE | DUE DATE ESTIMATION ASSORTMENT ENTRY | PRESENCE/ ABSENCE OF OPTION | STATUS | POSITIVELY PROMISED DUE DATE | SHIPPING DUE DATE | SHIPPING SITE | EARLIEST DUE DATE |
|---|---|---|---|---|---|---|---|---|---|---|---|
| J001 | A | 2 | 2001/7/5 | INAKI CITY, TOKYO | ENTRY | PRESENT | | | | | |

# FIG. 18(B)

| ORDER No. | STANDARD PRODUCT ITEM No. | QUANTITY | DESIRED DUE DATE | DELIVERY SITE | DUE DATE ESTIMATION ASSORTMENT ENTRY.T | PRESENCE/ ABSENCE OF OPTION | STATUS | POSITIVELY PROMISED DUE DATE | SHIPPING DUE DATE | SHIPPING SITE | EARLIEST DUE DATE |
|---|---|---|---|---|---|---|---|---|---|---|---|
| J001 | A | 2 | 2001/7/5 | INAKI CITY, TOKYO | ENTRY | PRESENT | POSITIVELY PROMISED | 2001/7/5 | 2001/7/4 | KANTO PLANT | |

DUE DATE ESTIMATION ASKING INFORMATION (3013)
AND DUE DATE ESTIMATION REPLY INFORMATION (3015)

EP 1 416 347 A1

# FIG. 19

| ORDER No. | ITEM No. | ITEM NAME | ITEM CLASSIFICATION |
|---|---|---|---|
| | A | ITEM A | PRODUCT |
| | B | ITEM B | PRODUCT |
| | C | ITEM C | PRODUCT |
| | • | • | • |
| | a | ITEM a | MANUFACTURED ITEM |
| | a1 | ITEM a1 | MANUFACTURED ITEM |
| | a2 | ITEM a2 | MANUFACTURED ITEM |
| | b | ITEM b | MANUFACTURED ITEM |
| | b1 | ITEM b1 | MANUFACTURED ITEM |
| | b2 | ITEM b2 | MANUFACTURED ITEM |
| | • | • | • |
| | x | ITEM x | PURCHASED ITEM |
| | y | ITEM y | PURCHASED ITEM |
| | $\alpha$ | ITEM $\alpha$ | PURCHASED ITEM |
| | $\beta$ | ITEM $\beta$ | PURCHASED ITEM |
| | $\gamma$ | ITEM $\gamma$ | PURCHASED ITEM |
| | • | • | • |

ITEM MASTER (1021)

EP 1 416 347 A1

# FIG. 20

| PARENT ORDER No. | PARENT ITEM No. | CHILD ORDER No. | CHILD ITEM No. | START DATE | END DATE | PART No. | MATERIAL REQUIREMENT |
|---|---|---|---|---|---|---|---|
| | | | A | 2000/1/1 | | 0 | |
| | A | | a | 2000/1/1 | | 1 | 2 |
| | A | | b | 2000/1/1 | | 2 | 2 |
| | A | | x | 2000/1/1 | | 3 | 2 |
| | A | | y | 2000/1/1 | | 4 | 2 |
| | • | | • | • | • | • | • |
| | a | | $\alpha$ | 2000/1/1 | | 11 | 2 |
| | a1 | | $\alpha 1$ | 2000/1/1 | | 11 | 2 |
| | b | | $\beta$ | 2000/1/1 | | 21 | 2 |
| | b1 | | $\beta 1$ | 2000/1/1 | | 21 | 2 |
| | • | | • | • | • | • | • |

STRUCTURE MASTER (1022)

EP 1 416 347 A1

## FIG. 21

| STANDARD PRODUCT ITEM No. | PART No. | OPTION SPECIFICATION CODE | START DATE | END DATE | MODIFICATION ASSORTMENT | ADDED/ REPLACED ITEM No. | ADDED/ REPLACED STRUCTURES |
|---|---|---|---|---|---|---|---|
| A | 1 | OP101 | 2000/1/1 | | ADDITION | a1 | 4 |
| A | 1 | OP102 | 2000/1/1 | | ADDITION | a2 | 4 |
| A | 2 | OP201 | 2000/1/1 | | REPLACEMENT | b1 | 4 |
| A | 2 | OP202 | 2000/1/1 | | REPLACEMENT | b2 | 4 |
| A | 3 | OP301 | 2000/1/1 | | CANCELLATION | | |
| A | 3 | OP302 | 2000/1/1 | | CANCELLATION | | |
| · | · | · | · | · | · | · | · |
| · | · | · | · | · | · | · | · |

STRUCTURE MODIFICATION MASTER (1023)

# FIG. 22

OPTION INFORMATION — 3011

1021 ITEM MASTER

1022 STRUCTURE MASTER

1023 STRUCTURE MODIFICATION MASTER

2021 STRUCTURE INFORMATION PROCESSOR

1021 ITEM MASTER

STRUCTURE MASTER 1022

1031 PROCESS MASTER

1032 PROCESS EVOLUTION MASTER

1033 PROCESS MODIFICATION MASTER

2031 PROCESS INFORMATION CREATING PROCESSOR

1032 PROCESS EVOLUTION MASTER

1041 VERSION CONTROL MASTER

1022 STRUCTURE MASTER

1032 PROCESS EVOLUTION MASTER

2032 VERSION CREATING PROCESSOR

3016 VERSION ENTRY INFORMATION

1041 VERSION CONTROL MASTER

STRUCTURE MASTER 1022

PROCESS EVOLUTION MASTER 1032

CREATION OF BOM

# FIG. 23(A)

STRUCTURE MASTER

| PARENT ORDER No. | PARENT ITEM No. | CHILD ORDER No. | CHILD ITEM No. | START DATE | END DATE | PART No. | MATERIAL REQUIREMENTS |
|---|---|---|---|---|---|---|---|
| | | J001 | A | 2001/6/30 | | 0 | |
| • | • | • | • | • | • | • | • |

# FIG. 23(B)

STRUCTURE MASTER

| PARENT ORDER No. | PARENT ITEM No. | CHILD ORDER No. | CHILD ITEM No. | START DATE | END DATE | PART No. | MATERIAL REQUIREMENTS |
|---|---|---|---|---|---|---|---|
| | | J001 | A | 2001/6/30 | | 0 | |
| J001 | A | | a | 2001/6/30 | | 1 | 2 |
| J001 | A | | b | 2001/6/30 | | 2 | 2 |
| J001 | A | | x | 2001/6/30 | | 3 | 2 |
| J001 | A | | y | 2001/6/30 | | 4 | 2 |
| • | • | • | • | • | • | • | • |

# FIG. 23(C)

STRUCTURE MODIFICATION MASTER

| STANDARD PRODUCT ITEM No. | PART No. | OPTION SPECIFICATION CODE | START DATE | END DATE | MODIFICATION ASSORTMENT | ADDED/ REPLACED ITEM No. | ADDED/ REPLACED STRUCTURES |
|---|---|---|---|---|---|---|---|
| A | 1 | OP101 | 2000/1/1 | | ADDITION | a1 | 4 |
| A | 2 | OP201 | 2000/1/1 | | REPLACEMENT | b1 | 4 |
| A | 3 | OP301 | 2000/1/1 | | CANCELLATION | | |

# FIG. 23(D)

STRUCTURE MASTER

| PARENT ORDER No. | PARENT ITEM No. | CHILD ORDER No. | CHILD ITEM No. | START DATE | END DATE | PART No. | MATERIAL REQUIREMENTS |
|---|---|---|---|---|---|---|---|
| | | J001 | A | 2001/6/30 | | 0 | |
| J001 | A | | a | 2001/6/30 | | 1 | 2 |
| J001 | A | | a1 | 2001/6/30 | | 1 | 4 |
| J001 | A | J001 | b1 | 2001/6/30 | | 2 | 4 |
| J001 | A | | x | 2001/6/30 | | 4 | 2 |

# FIG. 23(E)

ITEM MASTER

| ORDER No. | ITEM No. | ITEM NAME | ITEM CLASSIFICATION |
|---|---|---|---|
| J001 | A | ITEM A (J001) | PRODUCT |
| J001 | b1 | PARTS A (J001) | MANUFACTURED ITEM |

CREATION OF STRUCTURE INFORMATION

# FIG. 24

EP 1 416 347 A1

STANDARD PRODUCT STRUCTURE

「A」

 ├── 「a」 ×2
 │ └── 「s」 ×2

 ├──

 ├── 「b」 ×2
 │ └── 「t」 ×2
 ├── 「x」 ×2
 └── 「y」 ×2

→ STRUCTURE MODIFIED

→ STRUCTURE NON-MODIFIED

→ STRUCTURE ADDED

→ STRUCTURE REPLACED

→ STRUCTURE CANCELLED

OPTION PRODUCT STRUCTURE

「J001」−「A」

 ├── 「a」 ×2
 │ └── 「s」 ×2
 ├── 「a1」 ×2
 │ └── 「s」 ×4
 ├── 「J001」−「b1」 ×4
 │ └── 「c1」 ×2
 └── 「x」 ×2

STRUCTURE MODIFICATION

# FIG. 25

| PROCESS CODE | PROCESS NAME |
|---|---|
| K1 | STANDARD ASSEMBLY PROCESS |
| K2 | SPECIAL COATING PROCESS |
| K3 | SPECIAL INSPECTION PROCESS |
| C1 | STANDARD MACHINING PROCESS |
| C2 | SPECIAL MACHINING PROCESS |
| C3 | SPECIAL POLISHING PROCESS |
| • | • |

PROCESS MASTER (1031)

# FIG. 26

| ORDER No. | ITEM No. | PRODUCTION SITE CODE | PROCESS SEQUENCE | START DATE | END DATE | PROCESS CODE | MATERIAL REQUIREMENTS | PROCESS ASSORTMENT |
|---|---|---|---|---|---|---|---|---|
| | A | ASSEMBLY L01 | 1 | 2000/1/1 | | K1 | 1000 sec/PIECE | STANDARD |
| | • | • | • | • | • | • | • | • |
| | a | MACHINING L01 | 1 | 2000/1/1 | | C1 | 500 sec/PIECE | STANDARD |
| | a1 | MACHINING L01 | 1 | 2000/1/1 | | C1 | 500 sec/PIECE | STANDARD |
| | b | MACHINING L02 | 1 | 2000/1/1 | | C1 | 500 sec/PIECE | STANDARD |
| | b1 | MACHINING L02 | 1 | 2000/1/1 | | C1 | 500 sec/PIECE | STANDARD |
| | • | • | • | • | • | • | • | • |

PROCESS EVOCVVTION MASTER (1032)

EP 1 416 347 A1

# FIG. 27

| ITEM No. | OPTION SPECIFICATION CODE | SEQ | START DATE | END DATE | MODIFICATION ASSORTMENT | ADDITIONAL PROCESS CODE | ADDITIONAL RESOURCE REQUIREMENTS |
|---|---|---|---|---|---|---|---|
| A | OP001 | 1 | 2000/1/1 | | ADDITION | K3 | 100 sec/PIECE |
| A | OP101 | 2 | 2000/1/1 | | ADDITION | K3 | 100 sec/PIECE |
| b1 | OP201 | 1 | 2000/1/1 | | ADDITION | C2 | 100 sec/PIECE |
| • | • | • | • | • | • | • | • |
| • | • | • | • | • | • | • | • |

PROCESS MODIFICATION MASTER (1033)

EP 1 416 347 A1

# FIG. 28(A)

PROCESS MODIFICATION MASTER (1033)

| ITEM No. | OPTION SPECIFICATION CODE | SEQ | START DATE | END DATE | MODIFICATION ASSORTMENT | ADDED PROCESS CODE | ADDED RESOURCE REQUIREMENT |
|---|---|---|---|---|---|---|---|
| A | OP001 | 1 | 2000/1/1 | | ADDITION | K2 | 100sec/PIECE |
| A | OP101 | 2 | 2000/1/1 | | ADDITION | K3 | 100sec/PIECE |
| b1 | OP201 | 1 | 2000/1/1 | | ADDITION | K2 | 100sec/PIECE |

# FIG. 28(B)

PROCESS EVOLUTION MASTER (1032)

| ORDER No. | ITEM No. | PRODUCTION SITE CODE | PROCESS SEQUENCE | START DATE | END DATE | PROCESS CODE | RESOURCE REQUIREMENTS | RESOURCE ASSORTMENT |
|---|---|---|---|---|---|---|---|---|
| J001 | A | ASSEMBLY L01 | 1 | 2001/6/30 | | K1 | 1000sec/PIECE | STANDARD |
| J001 | b1 | MACHINING L02 | 1 | 2001/6/30 | | C1 | 500sec/PIECE | STANDARD |

# FIG. 28(C)

PROCESS EVOLUTION MASTER (1032)

| ORDER No. | ITEM No. | PRODUCTION SITE CODE | PROCESS SEQUENCE | START DATE | END DATE | PROCESS CODE | RESOURCE REQUIREMENTS | RESOURCE ASSORTMENT |
|---|---|---|---|---|---|---|---|---|
| J001 | A | ASSEMBLY L01 | 1 | 2001/6/30 | | K1 | 1000sec/PIECE | STANDARD |
| J001 | A | ASSEMBLY L01 | 2 | 2001/6/30 | | K2 | 100sec/PIECE | SPECIAL |
| J001 | A | ASSEMBLY L01 | 3 | 2001/6/30 | | K3 | 100sec/PIECE | SPECIAL |
| J001 | b1 | MACHINING L02 | 1 | 2001/6/30 | | C1 | 500sec/PIECE | STANDARD |
| J001 | b2 | MACHINING L02 | 2 | 2001/6/30 | | C2 | 100sec/PIECE | SPECIAL |
| • | • | • | • | • | • | • | • | • |

CREATION OF PROCESS INFORMATION

EP 1 416 347 A1

VERSION CONTROL MASTER (1041)

| ORDER No. | ITEM No. | VERSION | START DATE | END DATE |
|---|---|---|---|---|
| J001 | A | 1 | 2001/6/30 | |
| • | • | • | • | • |

FIG. 29(A)

VERSION CONTROL MASTER (1041)

| ORDER No. | ITEM No. | VERSION | START DATE | END DATE |
|---|---|---|---|---|
| J001 | A | 1 | 2001/6/30 | 2001/11/30 |
| • | • | • | • | • |

FIG. 29(B)

## FIG. 29(C)

STRUCTURE MASTER (1022)

| PARENT ORDER No. | PARENT ITEM No. | CHILD ORDER No. | CHILD ITEM No. | START DATE | END DATE | PART No. | MATERIAL REQUIREMENTS |
|---|---|---|---|---|---|---|---|
| | | J001 | A | 2001/6/30 | | 0 | |
| J001 | A | | a | 2001/6/30 | | 1 | 2 |
| J001 | A | | a1 | 2001/6/30 | | 1 | 4 |
| J001 | A | J001 | b1 | 2001/6/30 | | 2 | 4 |
| J001 | A | | x | 2001/6/30 | | 4 | 2 |
| • | • | • | • | • | • | • | • |

## FIG. 29(D)

STRUCTURE MASTER (1022)

| PARENT ORDER No. | PARENT ITEM No. | CHILD ORDER No. | CHILD ITEM No. | START DATE | END DATE | PART No. | MATERIAL REQUIREMENTS |
|---|---|---|---|---|---|---|---|
| | | J001 | A | 2001/6/30 | 2001/11/30 | 0 | |
| J001 | A | | a | 2001/6/30 | 2001/11/30 | 1 | 2 |
| J001 | A | | a1 | 2001/6/30 | 2001/11/30 | 1 | 4 |
| J001 | A | J001 | b1 | 2001/6/30 | 2001/11/30 | 2 | 4 |
| J001 | A | | x | 2001/6/30 | 2001/11/30 | 4 | 2 |
| • | • | • | • | • | • | • | • |

## FIG. 29(E)

PROCESS EVOLUTION MASTER (1032)

| ORDER No. | ITEM No. | SUPPLY SITE CODE | PROCESS SEQUENCE | START DATE | END DATE | PROCESS CODE | RESOURCE REQUIREMENTS | PROCESS ASSORTMENT |
|---|---|---|---|---|---|---|---|---|
| J001 | A | ASSEMBLY L01 | 1 | 2001/6/30 | | K1 | 1000sec/PIECE | STANDARD |
| J001 | A | ASSEMBLY L01 | 2 | 2001/6/30 | | K2 | 100sec/PIECE | SPECIAL |
| J001 | A | ASSEMBLY L01 | 3 | 2001/6/30 | | K3 | 100sec/PIECE | SPECIAL |
| J001 | b1 | MACHINING L02 | 1 | 2001/6/30 | | C1 | 500sec/PIECE | STANDARD |
| J001 | b2 | MACHINING L02 | 2 | 2001/6/30 | | C2 | 100sec/PIECE | SPECIAL |
| • | • | • | • | • | • | • | • | • |

## FIG. 29(F)

PROCESS EVOLUTION MASTER (1032)

| ORDER No. | ITEM No. | SUPPLY SITE CODE | PROCESS SEQUENCE | START DATE | END DATE | PROCESS CODE | RESOURCE REQUIREMENTS | PROCESS ASSORTMENT |
|---|---|---|---|---|---|---|---|---|
| J001 | A | ASSEMBLY L01 | 1 | 2001/6/30 | 2001/11/30 | K1 | 1000sec/PIECE | STANDARD |
| J001 | A | ASSEMBLY L01 | 2 | 2001/6/30 | 2001/11/30 | K2 | 100sec/PIECE | SPECIAL |
| J001 | A | ASSEMBLY L01 | 3 | 2001/6/30 | 2001/11/30 | K3 | 100sec/PIECE | SPECIAL |
| J001 | b1 | MACHINING L02 | 1 | 2001/6/30 | 2001/11/30 | C1 | 500sec/PIECE | STANDARD |
| J001 | b2 | MACHINING L02 | 2 | 2001/6/30 | 2001/11/30 | C2 | 100sec/PIECE | SPECIAL |
| • | • | • | • | • | • | • | • | • |

CREATION OF VERSION

# FIG. 30

PROCESS FOR STANDARD PRODUCT

PROCESS FOR OPTION PRODUCT

⌈A⌋

    └── STANDARD ASSEMBLY PROCESS
        1000sec/ PIECE

⌈a⌋

    └── STANDARD MACHINING PROCESS
        500sec/ PIECE

a1

    └── STANDARD MACHINING PROCESS
        500sec/ PIECE

⌈J001⌋ - ⌈b1⌋

    └── STANDARD MACHINING PROCESS
        500sec/ PIECE

PROCESS MODIFICATION ⟹

ADDITION OF PROCESS ⟹

NON-MODIFICATION ⟹

NON-MODIFICATION ⟹

ADDITION OF PROCESS ⟹

⌈J001⌋ - ⌈A⌋

    ├── STANDARD ASSEMBLY PROCESS
    │   1000sec/ PIECE
    ├── SPECIAL COATING PROCESS
    │   100sec/ PIECE
    └── SPECIAL INSPECTION PROCESS
        100sec/ PIECE

⌈a⌋

    └── STANDARD MACHINING PROCESS
        500sec/ PIECE

a1

    └── STANDARD MACHINING PROCESS
        500sec/ PIECE

⌈J001⌋ - ⌈b1⌋

    ├── STANDARD MACHINING PROCESS
    │   500sec/ PIECE
    └── SPECIAL MACHINING PROCESS
        100sec/ PIECE

PROCESS MODIFICATION

EP 1 416 347 A1

FIG. 31

DUE DATE ESTIMATION ASKING INFORMATION — 3013

ESTIMATION ASKING SECTION ?

CANCEL / ENTRY / MODIFY

SHIPPING RESERVATION EXTRACT

SHIPPING RESERVATION INFORMATION

LOOP — SHIPPING RESERVATION CUTBACK PROCESSOR

SHIPPING RESERVATION CUTBACK IS CONTINUED UNTIL LAST SHIPPING RESERVATION INFORMATION

SHIPPING RESERVATION EXTRACT

SHIPPING RESERVATION INFORMATION

BACKWARD SCHEDULE FROM DESIRED DUE DATE

SHIPPING RESERVATION PROCESSOR

LOOP — SHIPPING RESERVATION CUTBACK PROCESSOR

SHIPPING RESERVATION CUTBACK IS CONTINUED UNTIL LAST SHIPPING RESERVATION INFORMATION

ON AND BEFORE DESIRED DUE DATE ?

NO / YES

FORWARD SCHEDULE TO CALCULATE EARLIEST DUE DATE AS REFERENCE INFORMATION

SHIPPING RESERVATION PROCESSOR

JOB ORDER ENTRY

JOB ORDER

JOB ORDER

SHIPPING RESERVATION PROCESSOR

JOB ORDER

JOB ORDER UPDATE

JOB ORDER

JOB ORDER CANCELLATION

JOB ORDER

DUE DATE ESTIMATION REPLY INFORMATION — 3015

ORDER RESERVATION

EP 1 416 347 A1

# FIG. 32(A)

DUE DATE ESTIMATION ASKING INFORMATION ( SERVING ALSO AS DUE DATE ESTIMATION INFORMATION )

| ORDER No. | STANDARD PRODUCT ITEM No. | QUANTITY | DESIRED DUE DATE | DELIVERY SITE | DUE DATE ESTIMATION ASSORTMENT | PRESENCE OF OPTION | STATUS | POSITIVELY PROMISED DUE DATE | SHIPPING DUE DATE | SHIPPING SITE | EARLIEST DUE DATE |
|---|---|---|---|---|---|---|---|---|---|---|---|
| J001 | A | 2 | 2001/7/5 | INAKI CITY, TOKYO | ENTRY | YES | | | | | |

DEMAND/ SUPPLY ROUTE MASTER

| DEMAND SITE | ORDER No. | ITEM No. | PRIORITY ORDER | SUPPLY SITE | DEMAND/SUPPLY ROUTE L/T |
|---|---|---|---|---|---|
| INAKI CITY, TOKYO | | A | 1 | KANTO PLANT | 1 DAY |

# FIG. 32(B)

VERSION CONTROL MASTER

| ORDER No. | ITEM No. | VERSION | START DATE |
|---|---|---|---|
| J001 | A | 1 | 2001/6/30 |

# FIG. 32(C)

# FIG. 32(D)

SHIPPING RESERVATION ORDER INFORMATION (SERVING ALSO AS ORDER RESERVATION INFORMATION )

| ORDER No. | ORDER No. | ITEM No. | QUANTITY | DUE DATE | SHIPPING SITE | DUE DATE ESTIMATION ASSORTMENT | BOM VERSION | BOM START DATE | SCHEDULED TYPE | STATUS | POSITIVELY PROMISED DUE DATE |
|---|---|---|---|---|---|---|---|---|---|---|---|
| J001 | J001 | A | 2 | 2001/7/4 | KANTO PLANT | ENTRY | 1 | 2001/6/30 | BACKWORD | | |

# FIG. 32(E)

SHIPPING RESERVATION ORDER INFORMATION (SERVING ALSO AS ORDER RESERVATION INFORMATION )

| ORDER No. | ORDER No. | ITEM No. | QUANTITY | DUE DATE | SHIPPING SITE | DUE DATE ESTIMATION ASSORTMENT | BOM VERSION | BOM START DATE | SCHEDULED TYPE | STATUS | POSITIVELY PROMISED DUE DATE |
|---|---|---|---|---|---|---|---|---|---|---|---|
| J001 | J001 | A | 2 | 2001/7/4 | KANTO PLANT | ENTRY | 1 | 2001/6/30 | BACKWORD | POSITIVELY PROMISED | 2001/7/4 |

# FIG. 32(F)

DUE DATE ESTIMATION ORDER INFORMATION (SERVING ALSO AS DUE DATE ESTIMATION INFORMATION )

| ORDER No. | STANDARD PRODUCT ITEM No. | QUANTITY | DESIRED DUE DATE | DELIVERY SITE | DUE DATE ESTIMATION ASSORTMENT | PRESENCE OF OPTION | STATUS | POSITIVELY PROMISED DUE DATE | SHIPPING DUE DATE | SHIPPING SITE | EARLIEST DUE DATE |
|---|---|---|---|---|---|---|---|---|---|---|---|
| J001 | A | 2 | 2001/7/4 | INAKI CITY, TOKYO | ENTRY | YES | POSITIVELY PROMISED | 2001/7/5 | 2001/7/4 | KANTO PLANT | |

ORDER RESERVATION (ENTRY)

# FIG. 33(A)

DUE DATE ESTIMATION ORDER INFORMATION (SERVING ALSO AS DUE DATE ESTIMATION INFORMATION )

| ORDER No. | STANDARD PRODUCT ITEM No. | QUANTITY | DESIRED DUE DATE | DELIVERY SITE | DUE DATE ESTIMATION ASSORTMENT | PRESENCE OF OPTION | STATUS | POSITIVELY PROMISED DUE DATE | SHIPPING DUE DATE | SHIPPING SITE | EARLIEST DUE DATE |
|---|---|---|---|---|---|---|---|---|---|---|---|
| J001 | A | 2 | 2001/7/4 | INAKI CITY, TOKYO | CANCELLATION | NO | POSITIVELY PROMISED | 2001/7/5 | 2001/7/4 | KANTO PLANT | |

# FIG. 33(B)

SHIPPING RESERVATION INFORMATION

| ORDER No. | ALLOCATION SERIAL No. | ORDER No. | ITEM No. | ALLOCATED QUANTITY | SHIPPING DUE DATE | ALLOCATED LOT No. |
|---|---|---|---|---|---|---|
| J001 | 1 | J001 | A | 2 | 2001/7/4 | PD001 |

# FIG. 33(C)

SHIPPING RESERVATION CUTBACK ORDER INFORMATION

| LOT No. | ALLOCATION SERIAL No. | ALLOCATION CUTBACK QUANTITY |
|---|---|---|
| PD001 | 1 | J001 |

ORDER RESERVATION (CANCELLATION )

EP 1 416 347 A1

# FIG. 34(A)

SUPPLY RESERVATION

# FIG. 34(B)

CREATION OF PRODUCTION PAN

# FIG. 35(A)

SHIPPING RESERVATION ORDER INFORMATION

| ORDER No. | ORDER No. | ITEM No. | REQUIRE-MENTS | DUE DATE | SHIPPING SITE | DUE DATE ESTIMATION ASSORTMENT | BOM VERSION | BOM START DATE | SCHEDULE TYPE | STATUS | AFFIRMED DUE DATE |
|---|---|---|---|---|---|---|---|---|---|---|---|
| J001 | J001 | A | 2 | 2001/7/4 | KANTO PLANT | ENTRY | 1 | 2001/6/30 | BACKWARD | | |

# FIG. 35(B)

DEMAND / SUPPLY ROUTE MASTER

| DEMAND SITE | ORDER No. | ITEM No. | PRIORITY ORDER | SUPPLY SITE | DEMAND ROUTE L/T |
|---|---|---|---|---|---|
| KANTO PLANT | | A | 2 | ASSEMBLY L01 | 1 DAY |

# FIG. 35(C)

ITEM SUPPLY SITE MASTER

| ORDER No. | ITEM No. | PRODUCTION SITE | N DAY | UNIT OUTPUT OF EACH LOT |
|---|---|---|---|---|
| | A | ASSEMBLY L01 | 5 DAY | 100 PIECES |

# FIG. 35(D)

MATERIAL SUPPLY PLAN INFORMATION

| LOT No. | LOT CLASSIFICA-TION | ORDER No. | ITEM No. | REQUIRE-MENTS | SHIPPING SITE | MANUFAC-TURING SITE | TIME TAKEN FOR STANDARD PROCESS | TIME TAKEN FOR SPECIAL PROCESS | MANUFAC-TURING START DATE | MANUFAC-TURING END DATE | SHIPPING DUE DATE | ALREADY ALLOCATED QUANTITY | STILL NOT ALLOCATED QUANTITY |
|---|---|---|---|---|---|---|---|---|---|---|---|---|---|
| PD001 | MANUFACTUR-ING | J001 | A | 2 | KANTO PLANT | ASSEMBLY L01 | 2000 sec. | 400 sec. | 2001/7/3 | 2001/7/3 | 2001/7/4 | 0 | 2 |

# FIG. 35(E)

MATERIAL SUPPLY ORDER INFORMATION

| ORDER No. | ITEM No. | REQUIRE-MENTS | DUE DATE | SHIPPING SITE | PRODUCTION SITE | SCHEDULE TYPE | STATUS | POSITIVELY PROMISED DUE DATE |
|---|---|---|---|---|---|---|---|---|
| J001 | A | 2 | 2001/7/3 | KANTO PLANT | ASSEMBLY L01 | BACKWARD | | |

EP 1 416 347 A1

# FIG. 35(F)

MATERIAL SUPPLY PLAN INFORMATION

| LOT No. | LOT CLASSIFICA-TION | ORDER No. | ITEM No. | REQUIRE-MENTS | SHIPPING SITE | MANUFAC-TURING SITE | TIME TAKEN FOR STANDARD PROCESS | TIME TAKEN FOR SPECIAL PROCESS | MANUFAC-TURING START DATE | MANUFAC-TURING END DATE | SHIPPING DUE DATE | ALREADY ALLOCATED QUANTITY | STILL NOT ALLOCATED QUANTITY |
|---|---|---|---|---|---|---|---|---|---|---|---|---|---|
| PD001 | MANUFACTUR-ING | J001 | A | 2 | KANTO PLANT | ASSEMBLY L01 | 2000 sec. | 400 sec. | 2001/7/3 | 2001/7/3 | 2001/7/4 | 0 | 2 |

# FIG. 35(G)

MATERIAL SUPPLY PLAN INFORMATION

| LOT No. | LOT CLASSIFICA-TION | ORDER No. | ITEM No. | REQUIRE-MENTS | SHIPPING SITE | MANUFAC-TURING SITE | TIME TAKEN FOR STANDARD PROCESS | TIME TAKEN FOR SPECIAL PROCESS | MANUFAC-TURING START DATE | MANUFAC-TURING END DATE | SHIPPING DUE DATE | ALREADY ALLOCATED QUANTITY | STILL NOT ALLOCATED QUANTITY |
|---|---|---|---|---|---|---|---|---|---|---|---|---|---|
| PD001 | MANUFACTUR-ING | J001 | A | 2 | KANTO PLANT | ASSEMBLY L01 | 2000 sec. | 400 sec. | 2001/7/3 | 2001/7/3 | 2001/7/4 | 2 | 0 |

# FIG. 35(H)

SHIPPING RESERVATION INFORMATION

| ORDER No. | ALLOCA-TION SERIAL No. | ORDER No. | ITEM No. | ALLOCATED QUANTITY | SHIPPING DUE DATE | LOT No. ALLOCATED WITH AVAILABILITY |
|---|---|---|---|---|---|---|
| J001 | 1 | J001 | A | 2 | 2001/7/4 | PD001 |

# FIG. 35(I)

SHIPPING RESERVATION ORDER INFORMATION

| ORDER No. | ORDER No. | ITEM No. | REQUIRE-MENTS | DUE DATE | SHIPPING SITE | DUE DATE ESTIMATION ASSORTMENT | BOM VERSION | BOM START DATE | SCHEDULE TYPE | STATUS | AFFIRMED DUE DATE |
|---|---|---|---|---|---|---|---|---|---|---|---|
| J001 | J001 | A | 3 | 2001/7/4 | KANTO PLANT | ENTRY | 1 | 2001/6/30 | BACKWARD | POSITIVE PROMISE | 2001/7/4 |

SHIPPING RESERVATION

EP 1 416 347 A1

# FIG. 36

CREATION OF STANDARD PRODUCTION PLAN

# FIG. 37(A)

MATERIAL SUPPLY ORDER INFORMATION

| ORDER No. | ITEM No. | REQUIREMENTS | DUE DATE | SHIPPING SITE | MANUFACTURING SITE | SCHEDULE TYPE | STATUS | AFFIRMED DUE DATE |
|---|---|---|---|---|---|---|---|---|
|  | A | 180 | 2001/7/3 | KANTO PLANT | ASSEMBLY L01 | BACKWARD |  |  |

# FIG. 37(B)

ITEM SUPPLY SITE MASTER

| ORDER No. | ITEM No. | MANUFACTURING SITE | N DAY | UNIT OUTPUT OF EACH LOT |
|---|---|---|---|---|
|  | A | ASSEMBLY L01 | 5 DAY | 100 |

# FIG. 37(C)

PROCESS EVOLUTION MASTER

| ORDER No. | ITEM No. | MANUFACTURING SITE | PROCESS SEQUENCE | START DATE | END DATE | PROCESS CODE | RESOURCE REQUIREMENTS | PROCESS ASSORTMENT |
|---|---|---|---|---|---|---|---|---|
|  | A | ASSEMBLY L01 | 1 | 2001/6/30 |  | K1 | 1000 sec /PIECE | STANDARD |

# FIG. 37(D)

MATERIAL RESERVATION ORDER INFORMATION

| LOT No. | ORDER No. | ITEM No. | REQUIREMENTS | RESOURCE LOADING START DATE | MANUFACTURING SITE | TIME TAKEN FOR STANDARD PROCESS | TIME TAKEN FOR SPECIAL PROCESS | SCHEDULE TYPE | STATUS | DUE START DATE | DUE END DATE |
|---|---|---|---|---|---|---|---|---|---|---|---|
| PP001 |  | A | 100 | 2001/7/3 | ASSEMBLY L01 | 100000 sec | 0 sec | BACKWARD |  |  |  |

# FIG. 37(E)

MATERIAL RESERVATION ORDER INFORMATION

| LOT No. | ORDER No. | ITEM No. | REQUIREMENTS | RESOURCE LOADING START DATE | MANUFACTURING SITE | TIME TAKEN FOR STANDARD PROCESS | TIME TAKEN FOR SPECIAL PROCESS | SCHEDULE TYPE | STATUS | DUE START DATE | DUE END DATE |
|---|---|---|---|---|---|---|---|---|---|---|---|
| PP001 |  | A | 100 | 2001/7/3 | ASSEMBLY L01 | 100000 sec | 0 sec | BACKWARD | POSITIVELY PROMISED | 2001/7/3 | 2001/7/3 |

EP 1 416 347 A1

# FIG. 37(F)

MATERIAL SUPPLY PLAN INFORMATION

| LOT No. | LOT CLASSIFICATION | ORDER No. | ITEM No. | REQUIRE-MENTS | SHIPPING SITE | MANUFACTURING SITE | TIME TAKEN FOR STANDARD PROCESS | TIME TAKEN FOR SPECIAL PROCESS | MANUFACTURING START DATE | MANUFACTURING END DATE | SHIPPING DUE DATE | ALREADY ALLOCATED QUANTITY | STILL NOT ALLOCATED QUANTITY |
|---|---|---|---|---|---|---|---|---|---|---|---|---|---|
| PP001 | MANUFACTURING | | A | 100 | KANTO PLANT | ASSEMBLY L01 | 100000 sec. | 0 sec. | 200/7/3 | 200/7/3 | 200/7/4 | 0 | 100 |

# FIG. 37(G)

STRUCTURE MASTER

| PARENT ORDER No. | PARENT ITEM No. | CHILD ORDER No. | CHILD ITEM No. | START DATE | END DATE | PART No. | REQUIREMENTS |
|---|---|---|---|---|---|---|---|
| | A | | a | 2001/1/1 | | 1 | 2 |
| | A | | b | 2001/1/1 | | 2 | 2 |
| | A | | x | 2001/1/1 | | 3 | 2 |
| | A | | y | 2001/1/1 | | 4 | 2 |

# FIG. 37(H)

CHILD PARTS RESERVATION ORDER INFORMATION

| LOT No. | CHILD ORDER No. | CHILD ITEM No. | REQUIREMENTS | DUE DATE | SHIPPING SITE | DUE DATE ESTIMATION ASSORTMENT | BOM VERSION | BOM START DATE | SCHEDULE TYPE | STATUS | AFFIRMED DUE DATE |
|---|---|---|---|---|---|---|---|---|---|---|---|
| PP001 | | a | 4 | 200/7/3 | ASSEMBLY L01 | ENTRY | 1 | 2001/6/30 | BACKWARD | | |

# FIG. 37(I)

CHILD PARTS RESERVATION ORDER INFORMATION

| LOT No. | CHILD ORDER No. | CHILD ITEM No. | REQUIREMENTS | DUE DATE | SHIPPING SITE | DUE DATE ESTIMATION ASSORTMENT | BOM VERSION | BOM START DATE | SCHEDULE TYPE | STATUS | AFFIRMED DUE DATE |
|---|---|---|---|---|---|---|---|---|---|---|---|
| PP001 | | a | 4 | 200/7/3 | ASSEMBLY L01 | ENTRY | 1 | 2001/6/30 | BACKWARD | POSITIVELY PROMISED | 2001/7/3 |

CREATION OF STANDARD PRODUCTION PLAN

EP 1 416 347 A1

# FIG. 38

MATERIAL SUPPLY
ORDER INFORMATION

SCHEDULE TYPE ?

BACKWARD — FORWARD

**BACKWARD**

RESOURCE LOADING START DATE =
MANUFACTURING START DUE
DATE OF PARENT ITEM - 1 DAY

PROCESS EVOLUTION MASTER → PROCESS EVOLUTION

CALCULATION OF RESOURCE REQUIREMENTS

BACKWARD SCHEDULING FROM
RESOURCE LOADING START DATE FOR
AVAILABILITY ALLOCATION TO STANDARD
PRODUCT PLAN AND THEN FOR
ALLOCATION TO RESOURCE

LOOP

AVAILABILITY ALLOCATION PROCESSOR

RESOURCE RESERVATION PROCESSOR

PARTS RESERVATION
CONTINUED UNTIL
LAST PART

RESOURCE LOADING START
DATE = RESOURCE LOAD
START DATE - 1 DAY

STRUCTURE MASTER → STRUCTURE PROGRESS

LOOP

CALCULATION OF MATERIALS TO BE ALLOCATED

PARTS RESERVATION PROCESSOR

FORWARD SCHEDULING FROM
RESOURCE LOADING START
DATE FOR AVAILABILITY
ALLOCATION TO STANDARD
PRODUCT PLAN AND THEN
FOR ALLOCATION TO RESOURCE

PARTS RESERVATION
CONTINUED UNTIL
LAST PART

**FORWARD**

STRUCTURE MASTER → STRUCTURE PROGRESS

LOOP

CALCULATION OF MATERIALS TO BE ALLOCATED

PARTS RESERVATION PROCESSOR

RESOURCE LOADING START
DATE = LATEST DUE DATE OF
CHILD ITEM + 1 DAY

PROCESS EVOLUTION MASTER → PROCESS EVOLUTION

CALCULATION OF RESOURCE REQUIREMENTS

LOOP

AVAILABILITY ALLOCATION PROCESSOR

RESOURCE RESERVATION PROCESSOR

RESOURCE LOADING START
DATE = RESOURCE LOAD START
DATE + 1 DAY

ENTRY OF PLAN FOR
OPTION PRODUCT → (OPTION PRODUCT) MATERIAL SUPPLY PLAN

CREATION OF AVAILABILITY ALLOCATION
PRODUCTION PLAN

# FIG. 39(A)

MATERIAL SUPPLY ORDER INFORMATION

| ORDER No. | ITEM No. | REQUIREMENTS | DUE DATE | SHIPPING SITE | MANUFACTURING SITE | SCHEDULE TYPE | STATUS | AFFIRMED DUE DATE |
|---|---|---|---|---|---|---|---|---|
| J001 | A | 2 | 2001/7/3 | KANTO PLANT | ASSEMBLY L01 | BACKWARD | | |

# FIG. 39(B)

PROCESS EVOLUTION MASTER

| ORDER No. | ITEM No. | MANUFACTURING SITE | PROCESS SEQUENCE | START DATE | END DATE | PROCESS CODE | RESOURCE REQUIREMENTS | PROCESS ASSORTMENT |
|---|---|---|---|---|---|---|---|---|
| J001 | A | ASSEMBLY L01 | 1 | 2001/6/30 | | K1 | 1000 sec /PIECE | STANDARD |
| J001 | A | ASSEMBLY L01 | 2 | 2001/6/30 | | K2 | 100 sec /PIECE | SPECIAL |
| J001 | A | ASSEMBLY L01 | 3 | 2001/6/30 | | K3 | 100 sec /PIECE | SPECIAL |

# FIG. 39(C)

AVAILABILITY ALLOCATION ORDER INFORMATION

| ORDER No. | ITEM No. | RESOURCE LOADING START DATE | MANUFACTURING SITE | TIME TAKEN FOR STANDARD PROCESS | SCHEDULE TYPE | STATUS | DUE START DATE | DUE END DATE |
|---|---|---|---|---|---|---|---|---|
| | A | 2001/7/3 | ASSEMBLY L01 | 2000 sec | BACKWARD | | | |

# FIG. 39(D)

AVAILABILITY ALLOCATION ORDER INFORMATION

| ORDER No. | ITEM No. | RESOURCE LOADING START DATE | MANUFACTURING SITE | TIME TAKEN FOR STANDARD PROCESS | SCHEDULE TYPE | STATUS | DUE START DATE | DUE END DATE |
|---|---|---|---|---|---|---|---|---|
| | A | 2001/7/3 | ASSEMBLY L01 | 2000 sec | BACKWARD | POSITIVELY PROMISED | 2001/7/3 | 2001/7/3 |

# FIG. 39(E)

MATERIAL RESERVATION ORDER INFORMATION

| LOT No. | ORDER No. | ITEM No. | REQUIREMENTS | RESOURCE LOADING START DATE | MANUFACTURING SITE | TIME TAKEN FOR STANDARD PROCESS | TIME TAKEN FOR SPECIAL PROCESS | SCHEDULE TYPE | STATUS | DUE START DATE | DUE END DATE |
|---|---|---|---|---|---|---|---|---|---|---|---|
| PD001 | J001 | A | 2 | 2001/7/3 | ASSEMBLY L01 | 2000 sec | 400 sec | BACKWARD | | | |

## FIG. 39(F)

MATERIAL RESERVATION ORDER INFORMATION

| LOT No. | ORDER No. | ITEM No. | REQUIREMENTS | RESOURCE LOADING START DATE | MANUFACTURING SITE | TIME TAKEN FOR STANDARD PROCESS | TIME TAKEN FOR SPECIAL PROCESS | SCHEDULE TYPE | STATUS | DUE START DATE | DUE END DATE |
|---|---|---|---|---|---|---|---|---|---|---|---|
| PD001 | J001 | A | 2 | 2001/7/3 | ASSEMBLY L01 | 2000 sec | 400 sec | BACKWARD | POSITIVELY PROMISED | 2001/7/3 | 2001/7/3 |

## FIG. 39(G)

MATERIAL SUPPLY PLAN INFORMATION

| LOT No. | LOT CLASSIFICATION | ORDER No. | ITEM No. | REQUIRE-MENTS | SHIPPING SITE | MANUFACTURING SITE | TIME TAKEN FOR STANDARD PROCESS | TIME TAKEN FOR SPECIAL PROCESS | MANUFAC-TURING START DATE | MANUFAC-TURING END DATE | SHIPPING DUE DATE | ALREADY ALLOCATED QUANTITY | STILL NOT ALLOCATED QUANTITY |
|---|---|---|---|---|---|---|---|---|---|---|---|---|---|
| PD001 | MANUFACTURING | J001 | A | 2 | KANTO PLANT | ASSEMBLY L01 | 2000 sec | 400 sec | 2001/7/3 | 2001/7/3 | 2001/7/4 | 0 | 2 |

## FIG. 39(H)

STRUCTURE MASTER

| PARENT ORDER No. | PARENT ITEM No. | CHILD ORDER No. | CHILD ITEM No. | START DATE | END DATE | PART No. | REQUIREMENTS |
|---|---|---|---|---|---|---|---|
| J001 | A | | a | 2001/6/30 | | 1 | 2 |
| J001 | A | | a1 | 2001/6/30 | | 1 | 4 |
| J001 | A | J001 | b1 | 2001/6/30 | | 2 | 4 |
| J001 | A | | x | 2001/6/30 | | 4 | 2 |

## FIG. 39(I)

CHILD PARTS RESERVATION ORDER INFORMATION

| LOT No. | CHILD ORDER No. | CHILD ITEM No. | REQUIREMENTS | DUE DATE | SHIPPING SITE | DUE DATE ESTIMATION ASSORTMENT | BOM VERSION | BOM START DATE | SCHEDULE TYPE | STATUS | AFFIRMED TIME |
|---|---|---|---|---|---|---|---|---|---|---|---|
| PD001 | J001 | b1 | 8 | 2001/7/3 | ALLEMBLY L01 | ENTRY | 1 | 2001/6/30 | BACKWARD | | |

## FIG. 39(K)

CHILD PARTS RESERVATION ORDER INFORMATION

| LOT No. | CHILD ORDER No. | CHILD ITEM No. | REQUIREMENTS | DUE DATE | SHIPPING SITE | DUE DATE ESTIMATION ASSORTMENT | BOM VERSION | BOM START DATE | SCHEDULE TYPE | STATUS | AFFIRMED TIME |
|---|---|---|---|---|---|---|---|---|---|---|---|
| PD001 | J001 | b1 | 8 | 2001/7/3 | ALLEMBLY L01 | ENTRY | 1 | 2001/6/30 | BACKWARD | POSITIVELY PROMISED | 2001/7/3 |

CREATION OF AVAILABILITY ALLOCATING PRODUCTION PLAN

EP 1 416 347 A1

# FIG. 40

RESOURCE RESERVATION ORDER INFORMATION

RESOURCE

RESOURCE ALLOCATION

RESOURCE RESERVATION INFORMATION

RESOURCE

RESOURCE RESERVATION

# FIG. 41(A)

RESOURCE RESERVATION ORDER INFORMATION

| LOT No. | ORDER No. | ITEM No. | REQUIREMENTS | RESOURCE LOADING START DATE | MANUFACTURING SITE | TIME TAKEN FOR STANDARD PROCESS | TIME TAKEN FOR SPECIAL PROCESS | SCHEDULE TYPE | STATUS | DUE START DATE | DUE END DATE |
|---|---|---|---|---|---|---|---|---|---|---|---|
| PD001 | J001 | A | 2 | 2001/7/3 | ASSEMBLY L01 | 2000 sec | 400 sec | BACKWARD | | | |

# FIG. 41(B)

RESOURCE INFORMATION

| MANUFACTURING SITE | OPERATING DATE | MAXIMUM LOAD CAPACITY | LOADING CAPACITY | MAXIMUM ALLOCABLE TIME | ALLOCABLE TIME | ALLOCATED TIME |
|---|---|---|---|---|---|---|
| ASSEMBLY L01 | 2001/7/3 | 36000 sec | 28800 sec | 39000 sec | 0 sec | 28800 sec |

# FIG. 41(C)

RESOURCE INFORMATION

| MANUFACTURING SITE | OPERATING DATE | MAXIMUM LOAD CAPACITY | LOADING CAPACITY | MAXIMUM ALLOCABLE TIME | ALLOCABLE TIME | ALLOCATED TIME |
|---|---|---|---|---|---|---|
| ASSEMBLY L01 | 2001/7/3 | 36000 sec | 28800 sec | 39000 sec | 0 sec | 31200 sec |

# FIG. 41(D)

RESOURCE RESERVATION INFORMATION

| LOT No. | LOT SERIAL No. | MANUFACTURING SITE | DATE OCCUPIED BY RESOURCE | TIME OCCUPIED BY RESOURCE | RESOURCE REQUIREMENTS |
|---|---|---|---|---|---|
| PD001 | 1 | ASSEMBLY L01 | 2001/7/3 | 2400 sec | 1200 sec |

# FIG. 41(E)

RESOURCE RESERVATION ORDER INFORMATION

| LOT No. | ORDER No. | ITEM No. | REQUIREMENTS | RESOURCE LOADING START DATE | MANUFACTURING SITE | TIME TAKEN FOR STANDARD PROCESS | TIME TAKEN FOR SPECIAL PROCESS | SCHEDULE TYPE | STATUS | DUE START DATE | DUE END DATE |
|---|---|---|---|---|---|---|---|---|---|---|---|
| PD001 | J001 | A | 2 | 2001/7/3 | ASSEMBLY L01 | 2000 sec | 400 sec | BACKWARD | POSITIVELY PROMISED | 2001/7/4 | 2001/7/4 |

RESOURCE RESERVATION

# FIG. 42

AVAILABILITY ALLOCATION
ORDER INFORMATION

CALCULATE CUTDOWN
SCALE OF STANDARD
PRODUCT PLAN DUE TO
ADDITION OF OPTION
PRODUCT PLAN

(STANDARD
PRODUCT)
RESOURCE
SUPPLY PLAN

EXTRACT THE LOT HAVING
AVAILABILITY TO BE
ALLOCATED

MATERIAL SUPPLY PLAN
COTDOWN PROCESSOR

AVAILABILITY ALLOCATION

# FIG. 43(A)

AVAILABILITY ALLOCATION ORDER INFORMATION

| ORDER No. | ITEM No. | RESOURCE LOADING START DATE | MANUFACTURING SITE | TIME TAKEN FOR STANDARD PROCESS | SCHEDULE TYPE | STATUS | DUE START DATE | DUE END DATE |
|---|---|---|---|---|---|---|---|---|
|  | A | 2001/7/3 | ASSEMBLY L01 | 2000 sec | BACKWARD |  |  |  |

# FIG. 43(B)

MATERIAL SUPPLY PLAN INFORMATION

| LOT No. | LOT CLASSIFICATION | ORDER No. | ITEM No. | REQUIRE-MENTS | MANUFACTURING SITE | TIME TAKEN FOR STANDARD PROCESS | TIME TAKEN FOR SPECIAL PROCESS | MANUFAC-TURING START DATE | MANUFAC-TURING END DATE | SHIPPING DUE DATE | ALREADY ALLOCATED QUANTITY | STILL NOT ALLOCATED QUANTITY |
|---|---|---|---|---|---|---|---|---|---|---|---|---|
| PP001 | MANUFACTURING |  | A | 100 | ASSEMBLY L01 | 100000 sec | 0 sec | 2001/7/3 | 2001/7/3 | 2001/7/4 | 0 | 100 |

# FIG. 43(C)

MATERIAL SUPPLY PLAN CUTDOWN ORDER INFORMATION

| LOT No. | CUTDOWN PROCESSOR |
|---|---|
| PP001 | 2 |

# FIG. 43(D)

AVAILABILITY ALLOCATION ORDER INFORMATION

| ORDER No. | ITEM No. | RESOURCE LOADING START DATE | MANUFACTURING SITE | TIME TAKEN FOR STANDARD PROCESS | SCHEDULE TYPE | STATUS | DUE START DATE | DUE END DATE |
|---|---|---|---|---|---|---|---|---|
|  | A | 2001/7/3 | ASSEMBLY L01 | 2000 sec | BACKWARD | POSITIVELY PROMISED | 2001/7/3 | 2001/7/3 |

AVAILABILITY ALLOCATION

EP 1 416 347 A1

# FIG. 44(A)

SUPPLY RESERVATION ORDER INFORMATION

DEMAND /SUPPLY ROUTE MASTER

ITEM SUPPLY SITE MASTER

DEMAND /SUPPLY ROUTE AND CONTROL OF DEMAND /SUPPLY DUE DATE

DESIRED DUE DATE > CURRENT DAY + N DAYS

NO                                      YES

PARTS RESERVATION INFORMATION

MATERIAL SUPPLY PLAN IS BACKWARD ALLOCATED TO EXISTING PLAN (DUE DATE → CURRENT DAY

MATERIAL SUPPLY PLAN

(CHILD PART) MATERIAL SUPPLY PLAN

MATERIAL SUPPLY PLAN IS BACKWARD ALLOCATED TO EXISTING PLAN (DUE DATE → CURRENT DAY

PARTS RESERVATION INFORMATION

(CHILD PART) MATERIAL SUPPLY PLAN

UNKNOWN RESERVED QUANTITY IS PRESENT OR NOT ?        NO

YES

(CHILD PART) MATERIAL SUPPLY PLAN

PARTS RESERVATION INFORMATION

ALLOCATION TO STOCK        STOCK

UNKNOWN RESERVED QUANTITY IS PRESENT OR NOT ?        NO

YES

STOCK

PARTS RESERVATION INFORMATION

UNKNOWN RESERVED QUANTITY IS PRESENT OR NOT ?

MATERIAL SUPPLY PLAN IS BACKWARD SCHEDULED FROM DUE DATE AND TO CREATE PLAN AND TO ALLOCATE THIS TO THE PLAN

PARTS RESERVATION INFORMATION

(CHILD PART) MATERIAL SUPPLY PLAN

MATERIAL SUPPLY PLAN IS BACKWARD SCHEDULED FROM DUE DATE AND TO CREATE PLAN AND TO ALLOCATE THIS TO THE PLAN.

(CHILD PART) MATERIAL SUPPLY PLAN

PARTS RESERVATION

# FIG. 44(B)

OPTION PRODUCT (HAVING ORDER No.)

STANDARD PRODUCTION PLAN CREATING PROCESSOR

AVAILABILITY ALLOCATION PRODUCTION PLAN CREATING PROCESSOR

CREATION OF PRODUCTION PLAN

# FIG. 45(A)

CHILD PARTS RESERVATION ORDER INFORMATION

| LOT No. | CHILD ORDER No. | CHILD ITEM No. | REQUIREMENTS | DUE DATE | SHIPPING SITE | DUE DATE ESTIMATION ASSORTMENT | BOM VERSION | BOM START DATE | SCHEDULE TYPE | STATUS | AFFIRMED TIME |
|---|---|---|---|---|---|---|---|---|---|---|---|
| PD001 | J001 | b1 | 8 | 2001/7/3 | ASSEMBLY L01 | ENTRY | 1 | 2001/6/30 | BACKWARD | | |

# FIG. 45(B)

DEMAND / SUPPLY ROUTE MASTER

| DEMAND SITE | ORDER No. | ITEM No. | PRIORITY ORDER | SUPPLY SITE | DEMAND ROUTE L/T |
|---|---|---|---|---|---|
| ASSEMBLY L01 | | b1 | 1 | MACHINING L02 | 1 DAY |

# FIG. 45(C)

ITEM SUPPLY SITE MASTER

| ORDER No. | ITEM No. | MANUFACTURING SITE | N DAY | UNIT OUTPUT OF EACH LOT |
|---|---|---|---|---|
| | b1 | MACHINING L02 | 5 DAY | 200 PIECE |

# FIG. 45(D)

MATERIAL SUPPLY PLAN INFORMATION

| LOT No. | LOT CLASSIFICATION | ORDER No. | ITEM No. | REQUIRE-MENTS | SHIPPING SITE | MANUFACTURING SITE | TIME TAKEN FOR STANDARD PROCESS | TIME TAKEN FOR SPECIAL PROCESS | MANUFAC-TURING END DATE | MANUFAC-TURING START DATE | SHIPPING DUE DATE | ALREADY ALLOCATED QUANTITY | STILL NOT ALLOCATED QUANTITY |
|---|---|---|---|---|---|---|---|---|---|---|---|---|---|
| PD003 | MANUFACTURING | J001 | b1 | 8 | ASSEMBLY L01 | MACHINING L02 | 4000 sec | 800 sec | 2001/7/2 | 2001/7/2 | 2001/7/3 | 0 | 8 |

# FIG. 45(E)

MATERIAL SUPPLY ORDER INFORMATION

| ORDER No. | ITEM No. | REQUIREMENTS | DUE DATE | SHIPPING SITE | MANUFACTURING SITE | SCHEDULE TYPE | STATUS | AFFIRMED DUE DATE |
|---|---|---|---|---|---|---|---|---|
| J001 | b1 | 8 | 2001/7/2 | ASSEMBLY L01 | MACHINING L02 | BACKWARD | | |

EP 1 416 347 A1

# FIG. 45(F)

MATERIAL SUPPLY PLAN INFORMATION

| LOT No. | LOT CLASSIFICATION | ORDER No. | ITEM No. | REQUIRE-MENTS | SHIPPING SITE | MANUFACTURING SITE | TIME TAKEN FOR STANDARD PROCESS | TIME TAKEN FOR SPECIAL PROCESS | MANUFAC-TURING END DATE | MANUFAC-TURING START DATE | SHIPPING DUE DATE | ALREADY ALLOCATED QUANTITY | STILL NOT ALLOCATED QUANTITY |
|---|---|---|---|---|---|---|---|---|---|---|---|---|---|
| PD003 | MANUFACTURING | J001 | b1 | 8 | ASSEMBLY L01 | MACHINING L02 | 4000 sec | 800 sec | 2001/7/2 | 2001/7/2 | 2001/7/3 | 0 | 8 |

# FIG. 45(G)

MATERIAL SUPPLY PLAN INFORMATION

| LOT No. | LOT CLASSIFICATION | ORDER No. | ITEM No. | REQUIRE-MENTS | SHIPPING SITE | MANUFACTURING SITE | TIME TAKEN FOR STANDARD PROCESS | TIME TAKEN FOR SPECIAL PROCESS | MANUFAC-TURING END DATE | MANUFAC-TURING START DATE | SHIPPING DUE DATE | ALREADY ALLOCATED QUANTITY | STILL NOT ALLOCATED QUANTITY |
|---|---|---|---|---|---|---|---|---|---|---|---|---|---|
| PD003 | MANUFACTURING | J001 | b1 | 8 | ASSEMBLY L01 | MACHINING L02 | 4000 sec | 800 sec | 2001/7/2 | 2001/7/2 | 2001/7/3 | 8 | 0 |

# FIG. 45(H)

MATERIAL RESERVATION INFORMATION

| LOT No. | ALLOCATION SERIAL No. | ORDER No. | ITEM No. | MATERIAL REQUIREMENTS | ALLOCATED QUANTITY | PARTS RESERVATION DATE | ALLOCATED LOT No. |
|---|---|---|---|---|---|---|---|
| PD001 | 3 | J001 | b1 | 4 | 8 | 2001/7/3 | PD003 |

# FIG. 45(I)

CHILD PARTS RESERVATION ORDER INFORMATION

| LOT No. | CHILD ORDER No. | CHILD ITEM No. | REQUIREMENTS | DUE DATE | SHIPPING SITE | DUE DATE ESTIMATION ASSORTMENT | BOM VERSION | BOM START DATE | SCHEDULE TYPE | STATUS | AFFIRMED TIME |
|---|---|---|---|---|---|---|---|---|---|---|---|
| PD001 | J001 | b1 | 8 | 2001/7/9 | ASSEMBLY L01 | ENTRY | 1 | 2001/6/30 | BACKWARD | POSITIVELY PROMISED | 2001/7/3 |

CHILD PARTS RESERVATION

EP 1 416 347 A1

# FIG. 46

MATERIAL SUPPLY
PLAN SCALE CUTBACK
ORDER INFORMATION

MATERIAL SUPPLY PLAN
INFORMATION

RELEASE EXCESS OF
RESOURCE DUE TO SCALE
CUTBACK OF STANDARD
PRODUCT PLAN (UNTIL
RESOURCE RESERVATION
IS COMPLETED )

MATERIAL RESERVATION
CUTBACK PROCESSOR

RELEASE EXCESS OF CHILD PARTS
DUE TO SCALE CUTBACK OF
STANDARD PRODUCT PLAN
(UNTIL CHILD PARTS RESERVATION
IS COMPLETED)

CHILD PARTS
RESERVATION
CUTBACK PROCESSOR

SCALE CUTBACK
MATERIAL SUPPLY PLAN

MATERIAL
SUPPLY PLAN

SCALE CUTBACK MATERIAL
SUPPLY PLAN

# FIG. 47(A)

MATERIAL SUPPLY PLAN CUTBACK ORDER INFORMATION

| LOT No. | PLAN CUTBACK |
|---------|--------------|
| PP001 | 2 |

# FIG. 47(B)

MATERIAL SUPPLY PLAN INFORMATION

| LOT No. | LOT CLASSIFICATION | ORDER No. | ITEM No. | REQUIREMENTS | SHIPPING SITE | MANUFACTURING SITE | TIME TAKEN FOR STANDARD PROCESS | TIME TAKEN FOR SPECIAL PROCESS | MANUFACTURING START DATE | MANUFACTURING END DATE | SHIPPING DUE DATE | ALREADY ALLOCATED QUANTITY | STILL NOT ALLOCATED QUANTITY |
|---------|--------------------|-----------|----------|--------------|---------------|--------------------|--------------------------------|-------------------------------|--------------------------|------------------------|-------------------|----------------------------|------------------------------|
| PP001 | MANUFACTURING | | A | 100 | KANTO PLANT | ASSEMBLY L01 | 100000 sec | 0 sec | 2001/7/3 | 2001/7/3 | 2001/7/4 | 0 | 100 |

# FIG. 47(C)

MATERIAL RESERVATION INFORMATION

| LOT No. | LOT SERIAL No. | MANUFACTURING SITE | DATE OCCUPIED BY RESOURCE | TIME OCCUPIED BY RESOURCE | RESOURCE REQUIREMENTS |
|---------|----------------|--------------------|-----------------------------|-----------------------------|-----------------------|
| PP001 | 1 | ASSEMBLY L01 | 2001/7/3 | 100000 sec | 1000 sec |

# FIG. 47(D)

MATERIAL RESERVATION CUTBACK ORDER INFORMATION

| LOT No. | LOT SERIAL No. | RESOURCE RESERVATION CUTBACK |
|---------|----------------|------------------------------|
| PP001 | 1 | 2000 sec |

# FIG. 47(E)

CHILD PARTS RESERVATION INFORMATION

| LOT No. | ALLOCATION SERIAL No. | ORDER No. | ITEM No. | MATERIAL REQUIREMENTS | ALLOCATED QUANTITY | PARTS RESERVATION DATE | ALLOCATED LOT No. |
|---------|------------------------|-----------|----------|-----------------------|--------------------|------------------------|-------------------|
| PP001 | 1 | | a | 2 | 200 | 2001/7/3 | PP002 |

# FIG. 47(F)

CHILD PARTS RESERVATION INFORMATION

| LOT No. | ALLOCATION SERIAL No. | PARTS RESERVATION CUTBACK |
|---------|------------------------|---------------------------|
| PP001 | 1 | 4 |

# FIG. 47(G)

MATERIAL SUPPLY PLAN INFORMATION

| LOT No. | LOT CLASSIFICATION | ORDER No. | ITEM No. | REQUIREMENTS | SHIPPING SITE | MANUFACTURING SITE | TIME TAKEN FOR STANDARD PROCESS | TIME TAKEN FOR SPECIAL PROCESS | MANUFACTURING START DATE | MANUFACTURING END DATE | SHIPPING DUE DATE | ALREADY ALLOCATED QUANTITY | STILL NOT ALLOCATED QUANTITY |
|---------|--------------------|-----------|----------|--------------|---------------|--------------------|--------------------------------|-------------------------------|--------------------------|------------------------|-------------------|----------------------------|------------------------------|
| PP001 | MANUFACTURING | | A | 100 | KANTO PLANT | ASSEMBLY L01 | 100000 sec | 0 sec | 2001/7/3 | 2001/7/3 | 2001/7/4 | 0 | 100 |

# FIG. 47(H)

MATERIAL SUPPLY PLAN INFORMATION

| LOT No. | LOT CLASSIFICATION | ORDER No. | ITEM No. | REQUIREMENTS | SHIPPING SITE | MANUFACTURING SITE | TIME TAKEN FOR STANDARD PROCESS | TIME TAKEN FOR SPECIAL PROCESS | MANUFACTURING START DATE | MANUFACTURING END DATE | SHIPPING DUE DATE | ALREADY ALLOCATED QUANTITY | STILL NOT ALLOCATED QUANTITY |
|---------|--------------------|-----------|----------|--------------|---------------|--------------------|--------------------------------|-------------------------------|--------------------------|------------------------|-------------------|----------------------------|------------------------------|
| PP001 | MANUFACTURING | | A | 98 | KANTO PLANT | ASSEMBLY L01 | 98000 sec | 0 sec | 2001/7/3 | 2001/7/3 | 2001/7/4 | 0 | 98 |

MATERIAL SUPPLY PLAN CUTBACK

# FIG. 48

RESOURCE RESERVATION CUTBACK

# FIG. 49(A)

RESOURCE RESERVATION CUTBACK ORDER INFORMATION

| LOT No. | LOT SERIAL No. | RESOURCE RESERVATION CUTBACK ORDER TIME |
|---------|----------------|------------------------------------------|
| PP001 | 1 | 2000 sec |

# FIG. 49(B)

RESOURCE RESERVATION INFORMATION

| LOT No. | LOT SERIAL No. | MANUFACTURING SITE | DATE OCCUPIED BY RESOURCE | TIME OCCUPIED BY RESOURCE |
|---------|----------------|--------------------|--------------------------|---------------------------|
| PP001 | 1 | ASSEMBLY L01 | 2001/7/3 | 100000 sec |

# FIG. 49(C)

RESOURCE RESERVATION INFORMATION

| LOT No. | LOT SERIAL No. | MANUFACTURING SITE | DATE OCCUPIED BY RESOURCE | TIME OCCUPIED BY RESOURCE |
|---------|----------------|--------------------|--------------------------|---------------------------|
| PP001 | 1 | ASSEMBLY L01 | 2001/7/3 | 98000 sec |

# FIG. 49(D)

RESOURCE INFORMATION

| MANUFACTURING SITE | OPERATING DAY | MAXIMUM LOAD CAPACITY | LOADING CAPACITY | MAXIMUM ALLOCABLE TIME | ALLOCABLE TIME | ALLOCATED TIME |
|--------------------|---------------|-----------------------|------------------|------------------------|----------------|----------------|
| ASSEMBLY L01 | 2001/7/3 | 36000 sec | 28800 sec | 39000 sec | 0 sec | 28800 sec |

# FIG. 49(E)

RESOURCE INFORMATION

| MANUFACTURING SITE | OPERATING DAY | MAXIMUM LOAD CAPACITY | LOADING CAPACITY | MAXIMUM ALLOCABLE TIME | ALLOCABLE TIME | ALLOCATED TIME |
|--------------------|---------------|-----------------------|------------------|------------------------|----------------|----------------|
| ASSEMBLY L01 | 2001/7/3 | 36000 sec | 28800 sec | 39000 sec | 0 sec | 28800 sec |

RESOURCE RESERVATION CUTBACK

# FIG. 50

CHILD PARTS
RESERVATION
CUTBACK ORDER
INFORMATION

CHILD PARTS
RESERVATION
INFORMATION

UPDATE CHILD PARTS
RESERVATION

CHILD PARTS
RESERVATION
INFORMATION

(CHILD PARTS)
STOCK

UPDATE ALLOCATED
LOTS

(CHILD PARTS)
STOCK

(CHILD PARTS)
MATERIAL
SUPPLY PLAN

MATERIAL SUPPLY
CUTBACK
PROCESSOR

(CHILD PARTS)
MATERIAL
SUPPLY PLAN

CHILD PARTS RESERVATION CUTBACK

CHILD PARTS RESERVATION CUTBACK ORDER INFORMATION

| LOT No. | ALLOCATION No. | CHILD PARTS RESERVATION CUTBACK |
|---|---|---|
| PP001 | 1 | 4 |

## FIG. 51(A)

CHILD PARTS RESERVATION INFORMATION

| LOT No. | ALLOCATION No. | ORDER No. | ITEM No. | STRUCTURE NUMBER | ALLOCATED QUANTITY | CHILD PARTS RESERVATION DATE | ALLOCATED LOT No. |
|---|---|---|---|---|---|---|---|
| PP001 | 1 | | a | 2 | 200 | 2001/7/3 | PP002 |

## FIG. 51(B)

CHILD PARTS RESERVATION INFORMATION

| LOT No. | ALLOCATION No. | ORDER No. | ITEM No. | STRUCTURE NUMBER | ALLOCATED QUANTITY | CHILD PARTS RESERVATION DATE | ALLOCATED LOT No. |
|---|---|---|---|---|---|---|---|
| PP001 | 1 | | a | 2 | 196 | 2001/7/3 | PP002 |

## FIG. 51(C)

## FIG. 51(D)

MATERIAL SUPPLY PLAN INFORMATION

| LOT No. | LOT CLASSIFICATION | ORDER No. | ITEM No. | REQUIREMENTS | SHIPPING SITE | MANUFACTURING SITE | TIME TAKEN FOR STANDARD PROCESS | TIME TAKEN FOR SPECIAL PROCESS | MANUFACTURING END DATE | MANUFACTURING START DATE | SHIPPING DUE DATE | ALREADY ALLOCATED QUANTITY | STILL NOT ALLOCATED QUANTITY |
|---|---|---|---|---|---|---|---|---|---|---|---|---|---|
| PP003 | MANUFACTURING | | a | 200 | ASSEMBLY L01 | MACHINING L02 | 100000 sec | 0 sec | 2001/7/2 | 2001/7/2 | 2001/7/3 | 200 | 0 |

## FIG. 51(E)

MATERIAL SUPPLY PLAN INFORMATION

| LOT No. | LOT CLASSIFICATION | ORDER No. | ITEM No. | REQUIREMENTS | SHIPPING SITE | MANUFACTURING SITE | TIME TAKEN FOR STANDARD PROCESS | TIME TAKEN FOR SPECIAL PROCESS | MANUFACTURING END DATE | MANUFACTURING START DATE | SHIPPING DUE DATE | ALREADY ALLOCATED QUANTITY | STILL NOT ALLOCATED QUANTITY |
|---|---|---|---|---|---|---|---|---|---|---|---|---|---|
| PP003 | MANUFACTURING | | a | 200 | ASSEMBLY L01 | MACHINING L02 | 100000 sec | 0 sec | 2001/7/2 | 2001/7/2 | 2001/7/3 | 196 | 4 |

MATERIAL SUPPLY PLAN CUTBACK ORDER INFORMATION

| LOT No. | PLAN CUTBACK |
|---|---|
| PP003 | 4 |

## FIG. 51(F)

CHILD PARTS RESERVATION CUTBACK

EP 1 416 347 A1

# FIG. 52

SHIPPING RESERVATION CUTBACK

SHIPPING RESERVATION CUTBACK ORDER INFORMATION

| ORDER No. | ALLOCATION No. | SHIPPING RESERVATION CUTBACK No. |
|---|---|---|
| J001 | 1 | 1 |

## FIG. 53(A)

SHIPPING RESERVATION INFORMATION

| ORDER No. | ALLOCATION No. | ORDER No. | ITEM No. | ALLOCATED QUANTITY | SHIPPING DUE DATE | ALLOCATED LOT No. |
|---|---|---|---|---|---|---|
| J001 | 1 | J001 | A | 2 | 2001/7/4 | PD001 |

## FIG. 53(B)

SHIPPING RESERVATION INFORMATION

| ORDER No. | ALLOCATION No. | ORDER No. | ITEM No. | ALLOCATED QUANTITY | SHIPPING DUE DATE | ALLOCATED LOT No. |
|---|---|---|---|---|---|---|
| J001 | 1 | J001 | A | 1 | 2001/7/4 | PD001 |

## FIG. 53(C)

## FIG. 53(D)

MATERIAL SUPPLY PLAN INFORMATION

| LOT No. | LOT CLASSIFICATION | ORDER No. | ITEM No. | REQUIREMENTS | SHIPPING SITE | MANUFACTURING SITE | TIME TAKEN FOR STANDARD PROCESS | TIME TAKEN FOR SPECIAL PROCESS | MANUFACTURING START DATE | MANUFACTURING END DATE | SHIPPING DUE DATE | ALREADY ALLOCATED QUANTITY | STILL NOT ALLOCATED QUANTITY |
|---|---|---|---|---|---|---|---|---|---|---|---|---|---|
| PD001 | MANUFACTURING | J001 | A | 2 | KANTO PLANT | ASSEMBLY L01 | 2000 sec | 400 sec | 2001/7/3 | 2001/7/3 | 2001/7/4 | 2 | 0 |

## FIG. 53(E)

MATERIAL SUPPLY PLAN INFORMATION

| LOT No. | LOT CLASSIFICATION | ORDER No. | ITEM No. | REQUIREMENTS | SHIPPING SITE | MANUFACTURING SITE | TIME TAKEN FOR STANDARD PROCESS | TIME TAKEN FOR SPECIAL PROCESS | MANUFACTURING START DATE | MANUFACTURING END DATE | SHIPPING DUE DATE | ALREADY ALLOCATED QUANTITY | STILL NOT ALLOCATED QUANTITY |
|---|---|---|---|---|---|---|---|---|---|---|---|---|---|
| PD001 | MANUFACTURING | J001 | A | 2 | KANTO PLANT | ASSEMBLY L01 | 2000 sec | 400 sec | 2001/7/3 | 2001/7/3 | 2001/7/4 | 1 | 1 |

MATERIAL SUPPLY PLAN CUTBACK ORDER INFORMATION

| LOT No. | PLAN CUTBACK |
|---|---|
| PD001 | 1 |

## FIG. 53(F)

SHIPPING RESERVATION CUTBACK

EP 1 416 347 A1

# FIG. 54

EXTRACT ITEMS FOR POST-SUPPLEMENTARY PRODUCTION FROM RESPECTIVE STANDARD ITEMS

ITEM MASTER

CREATE DAILY PRODUCTION PLAN FOR POST-SUPPLEMENTARILY MANUFACTURED ITEMS FROM PRESENT TO FUTURE (CURRENT DAY + N DAYS)

LOOP

(STANDARD PRODUCT) MATERIAL SUPPLY PLAN

(STANDARD PRODUCT) STOCK

CHECK INVENTORY STATUS (SUM OF NON -ALLOCATED QUANTITY) OF ITEMS TO BE POST-SUPPLEMENTARILY MANUFACTURED

ITEM-SUPPLY SITE MASTER

EXTRACT ITEM HAVING INVENTORY STATUS WHICH IS MOST FAR BELOW THE BASIC STOCK

SCHEDULE TYPE = BACKWARD

STANDARD PRODUCTION PLAN CREATING PROCESSOR

(STANDARD PRODUCT) MATERIAL SUPPLY PLAN

POST-SUPPLEMENTARY PRODUCTION ORDER RELEASE

# FIG. 55

DEMAND FORECAST

DEMAND FORECAST OF OBJECT ITEM OF PRODUCTION PLAN TO BE MANUFACTURED ON ASSOCIATED PRODUCTION LINES IS EXTRACTED

FOR EACH ITEM TO BE MANUFACTURED, DAILY PRODUCTION PLAN FROM CURRENT DATE TO FUTURE (CURRENT DATE + DEMAND FORECAST TERM) IS CREATED

(STANDARD PRODUCT) MATERIAL SUPPLY PLAN

(STANDARD PRODUCT) STOCK

STILL NOT ALLOCATED SUM TOTAL FOR EACH ITEM DURING DEMAND FORECAST TERM IS SURVEYED AND NON-ALLOCATED SUM TOTAL IS SUBTRACTED FROM DEMAND FORECAST QUANTITY TO CALCULATE NET REQUIREMENTS TO BE MANUFACTURED

ITEM SUPPLY SITE MASTER

TOTAL UNITS OF PRODUCTION LOT FOR EACH ITEM ARE EXTRACTED AND NECESSARY UNITS OF PRODUCTION LOT DURING DEMAND FORECAST TERM ARE CALCULATED ON THE BASIS OF NET PRODUCTION REQUIREMENTS

PRODUCTION CYCLE FOR EACH ITEM IS DETERMINED ON THE BASIS OF NECESSARY NUMBER OF LOTS SO THAT PRODUCTION OF EACH ITEM ON ONE AND SAME PRODUCTION LINE MAY BE BALANCED

PRODUCTION SEQUENCE FOR EACH ITEM IS DETERMINED ON THE BASIS OF PRODUCTION CYCLE FOR EACH ITEM

SCHEDULE TYPE = FORWARD

STANDARD PRODUCTION PLAN CREATING PROCESSOR

PLANNED PRODUCTION ORDER RELEASE

# EP 1 416 347 A1

## INTERNATIONAL SEARCH REPORT

| International application No. |
| --- |
| PCT/JP02/07013 |

**A. CLASSIFICATION OF SUBJECT MATTER**
Int.Cl$^7$ G05B19/418, G06F17/60

According to International Patent Classification (IPC) or to both national classification and IPC

**B. FIELDS SEARCHED**

Minimum documentation searched (classification system followed by classification symbols)
Int.Cl$^7$ G05B19/418, G06F17/60

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2002 |
| Kokai Jitsuyo Shinan Koho | 1971–2002 | Toroku Jitsuyo Shinan Koho | 1994–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | US 5946663 A (Matsushita Electric Industrial Co., Ltd.), 31 August, 1999 (31.08.99), Claims 1, 3 & JP 9-153090 A Claims 2, 6 | 1-7 |
| Y | JP 7-93410 A (Hitachi, Ltd.), 07 April, 1995 (07.04.95), Page 5, left column, line 49 to right column, line 28; page 8, right column, lines 2 to 9 (Family: none) | 1-7 |
| Y | JP 2000-263385 A (NEC Corp.), 06 September, 2000 (06.09.00), Full text; all drawings (Family: none) | 1-7 |

☒ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 October, 2002 (15.10.02) | 29 October, 2002 (29.10.02) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

92

## INTERNATIONAL SEARCH REPORT

| International application No. |
| --- |
| PCT/JP02/07013 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 8-69494 A  (Toyota Motor Corp.), 12 March, 1996 (12.03.96), Abstract (Family: none) | 4 |
| A | EP 520927 A2  (International Business Machines Corp.), 30 December, 1992 (30.12.92), & JP 5-151229 A | 2 |

Form PCT/ISA/210 (continuation of second sheet) (July 1998)